(19) Europäisches Patentamt / European Patent Office / Office européen des brevets

(11) **EP 2 659 236 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(21) Anmeldenummer: **11787868.6**

(22) Anmeldetag: **24.11.2011**

(51) Int Cl.:
*G01F 1/84* $^{(2006.01)}$

(86) Internationale Anmeldenummer:
**PCT/EP2011/070877**

(87) Internationale Veröffentlichungsnummer:
**WO 2012/089431 (05.07.2012 Gazette 2012/27)**

(54) **MESSAUFNEHMER VOM VIBRATIONSTYP SOWIE DAMIT GEBILDETES MESSSYSTEM**

MEASURING SENSOR OF THE VIBRATION TYPE AND MEASURING SYSTEM FORMED THEREBY

DÉTECTEUR DE TYPE A VIBRATIONS ET SYSTÈME DE MESURE LE COMPRENANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2010   DE 102010056465**
**30.12.2010   US 201061428541 P**
**22.06.2011   DE 102011077994**

(43) Veröffentlichungstag der Anmeldung:
**06.11.2013   Patentblatt 2013/45**

(73) Patentinhaber: **Endress+Hauser Flowtec AG**
**4153 Reinach (CH)**

(72) Erfinder:
• **RIEDER, Alfred**
**84032 Landshut (DE)**

• **HUBER, Christof**
**3007 Bern (CH)**
• **BITTO, Ennio**
**CH-4147 Aesch (BL) (CH)**
• **SCHÜTZE, Christian**
**CH-4055 Basel (BS) (CH)**
• **BRAUN, Marcel**
**79594 Inzlingen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**WO-A1-2011/085852     US-B1- 6 415 668**

**Beschreibung**

Die Erfindung betrifft einen vier gebogene Meßrohre aufweisenden Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 1000 t/h, insb. mehr als 1500 t/h, strömenden Mediums. Ferner betrifft die Erfindung ein, etwa als In-line-Meßgerät ausgebildetes, Meßsystem mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien, etwa einer wässrigen Flüssigkeit, einem Gas, einem Flüssigkeits-Gas-Gemisch, einem Dampf, einem Öl, einer Paste, einem Schlamm oder einem anderen strömungsfähigen Stoff, oftmals solche In-Line-Meßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/ Dichtemesser ausgebildete, Meßaufnehmer sind z.B. in der EP-A 1 001 254, der EP-A 553 939, der US-A 2002/0157479, der US-A 2006/0150750, der US-A 2007/0151368, der US-A 47 93 191, der US-A 53 70 002, der US-A 57 96 011, der US-B 63 08 580, der US-B 64 15 668, der US-B 67 11 958, der US-B 69 20 798, der US-B 71 34 347, der US-B 73 92 709 oder der WO-A 03/027616 ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011 oder der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet.

Zum Führen von zumindest zeitweise strömendem, ggf. auch extrem heißem, Medium umfassen die Meßaufnehmer desweiteren jeweils genau zwei strömungstechnisch parallel geschaltete Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung derart ausgebildet, daß damit die beiden Meßrohre im Nutzmode zumindest anteilig, insb. auch überwiegend, zu gegengleichen Biegeschwingungen differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungssignalen weisen die Meßaufnehmer ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird die vorbeschriebene, mittels der zwei Meßrohre gebildete Rohranordnung mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz der Rohranordnung gewählt, die wiederum im wesentlichen sowohl von Größe, Form und Material der Meßrohre als auch von einer momentanen Dichte des Mediums abhängig ist und insoweit bekanntlich auch als ein Maß für die Dichte des Mediums dienen kann; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen NutzFrequenzbandes veränderlich, das entsprechend eine vorgegebene untere und eine vorgegebene obere Grenzfrequenz aufweist.

Zum Definieren einer Nutz-Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gebogener Meßrohre entspricht dabei die Länge eines zwischen dem einlaßseitigem und dem auslaßseitigen Kopplerelement verlaufenden Abschnitts einer Biegelinie des jeweiligen Meßrohrs, mithin einer die Flächenschwerpunkte aller gedachten Querschnittsflächen des jeweiligen Meßrohrs verbindende gedachte Mittelllinie des nämlichen Meßrohrs, der Nutz-Schwinglänge der Meßrohre. Mittels der - insoweit mit zur Rohranordnung gehörigen - Kopplerelementen kann zudem auch eine Schwingungsgüte der Rohranordnung wie auch die Empfindlichkeit des Meßaufnehmers insgesamt beeinflußt werden, in der Weise, daß für eine minimal geforderte Empfindlichkeit des Meßaufnehmers zumindest eine minimale Nutz-Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 1000 t/h jeweils für Druckverluste von weniger als 3 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 1500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 2002/0157479, der US-A 2007/0151368, der US-A 47 93 191, der US-A 53 70 002, der US-A 57 96 011, der US-B 63 08 580, der US-B 67 11 958, der US-B 71 34 347, der US-B 73 50 421 oder der WO-A 03/027616, bekannten und bereits etablierter Meßaufnehmerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßaufnehmer herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

Dem Rechnung tragend sind beispielsweise in den eigenen, nicht vorveröffentlichten internationalen Patentanmeldungen PCT/EP2010/068251 bzw. PCT/EP2010/068250 jeweils neuartige, nicht zuletzt auch auf vergleichsweise große nominelle Nennweiten von mehr als 300mm skalierbarer, Meßaufnehmer vom Vibrationstyp vorgeschlagen worden, deren jeweilige Rohranordnung jeweils vier unter Bildung strömungstechnisch parallel geschalteter Strömungspfade an die - dementsprechend jeweils vier Strömungsöffnungen aufweisenden - Strömungsteiler angeschlossene gebogene, beispielsweise zumindest abschnittsweise V-förmige und/oder zumindest abschnittsweise kreisbogenförmige, Meßrohre zum Führen von strömendem Medium umfaßt. Von den jeweils vier Meßrohren münden ein erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers, ein zum ersten Meßrohr paralleles zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers, ein drittes Meßrohr mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers sowie ein zum dritten Meßrohr paralleles viertes Meßrohr mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers. In Sonderheit ist bei dem in der PCT/EP2010/068251, nicht zuletzt zwecks Reduzierung von unerwünschten schwingungsbedingten Deformierungen der Strömungsteiler, ferner vorgesehen, als Nutz-Mode einen der Rohranordnung innewohnenden natürlichen Biegeschwingungsmode - den sogenannten V-Mode - anzuregen, in dem das erste und zweite Meßrohr gegengleiche Biegeschwingungen um jeweils eine dem jeweiligen Meßrohr zugehörige statische Ruhelage ausführen, und in dem das dritte und vierte Meßrohr gegengleiche Biegeschwingungen um jeweils eine dem jeweiligen Meßrohr zugehörige statische Ruhelage ausführen, und zwar derart, daß, bezüglich einer zwischen dem ersten und dritten Meßrohr wie auch zwischen zweiten und vierten Meßrohr verlaufenden gedachten Längsschnittebene der Rohranordnung, nämliche Biegeschwingungen des ersten Meßrohrs auch gegengleich zu nämlichen Biegeschwingungen des dritten Meßrohrs sind, und daß, bezüglich der gedachten Längsschnittebene, nämliche Biegeschwingungen des zweiten Meßrohrs auch gegengleich zu nämlichen Biegeschwingungen des vierten Meßrohrs sind.

Weiterführende Untersuchungen haben ergeben, daß ein besonderes Problem hierbei allerdings darin bestehen kann, daß eine Eigenfrequenz, mithin auch die momentane Resonanzfrequenz nämlichen V-Modes der Rohranordnung zunächst - also ohne ergreifen zusätzlicher Maßnahmen - im wesentlichen gleich einer Eigen- bzw. Resonanzfrequenz eines weiteren der Rohranordnung innewohnenden natürlichen Biegeschwingungsmode - den sogenannten X-Mode - ist, in dem das erste und zweite Meßrohr gegengleiche Biegeschwingungen um jeweils eine dem jeweiligen Meßrohr zugehörige statische Ruhelage ausführen, und in dem das dritte und vierte Meßrohr gegengleiche Biegeschwingungen um jeweils eine dem jeweiligen Meßrohr zugehörige statische Ruhelage ausführen, jedoch derart daß, bezüglich der vorgenannten gedachten Längsschnittebene, nämliche Biegeschwingungen des ersten Meßrohrs auch gegengleich zu nämlichen Biegeschwingungen des vierten Meßrohrs sind, und daß, bezüglich der gedachten Längsschnittebene, nämliche Biegeschwingungen des zweiten Meßrohrs auch gegengleich zu nämlichen Biegeschwingungen des dritten Meßrohrs sind. Infolgedessen kann bei Meßaufnehmern mit einer vier Meßrohre aufweisenden Rohranordnung der vorgenannten Art durchaus der Fall auftreten, daß die Rohranordnung bei Anregung eigentlich des V-Modes, nämlich auf dessen momentaner Resonanzfrequenz, in unvorhersehbarer Weise vom V-Mode in den X-Mode wechselt und umgekehrt bzw. gleichzeitig sowohl im V- als auch im X-Mode schwingt, daß also die die Rohranordnung im Ergebnis gelegentlich undefinierte Schwingungszustände annimmt.

Ausgehend vom vorgenannten Stand der Technik besteht daher eine Aufgabe der Erfindung darin, einen Meßaufnehmer mit einer vier gekrümmte Meßrohre aufweisenden Rohranordnung anzugeben, der auch im V- Mode einen stabilen Schwingungszustand aufweist, mithin eine Verwendung zumindest des V- Modes als aktiv angeregten Nutzmode ermöglicht bzw. eine Verwendungsfähigkeit nämlichen V- Modes als aktiv angeregten Nutzmode weiter verbessert.

Zur Lösung der Aufgabe besteht die Erfindung in einem Meßaufnehmer vom Vibrationstyp zum Erfassen wenigstens einer physikalischen Meßgröße eines in einer Rohrleitung geführten strömungsfähigen Mediums, beispielsweise eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften. Der Meßaufnehmer umfaßt erfindungsgemäß ein, beispielsweise zumindest teilweise im wesentlichen rohrförmiges und/oder zumindest teilweise außen kreiszylindrisches, Aufnehmer-Gehäuse, von dem ein einlaßseitiges erstes Gehäuseende mittels eines genau vier jeweils voneinander beabstandeten, beispielsweise kreiszylindrische, kegelförmige oder konusförmige, Strömungsöffnungen aufweisenden einlaßseitigen ersten Strömungsteiler und ein auslaßseitiges zweites Gehäuseende mittels eines genau vier jeweils voneinander beabstandeten, beispielsweise kreiszylindrische, kegelförmige oder konusförmige, Strömungsöffnungen aufweisenden auslaßseitigen zweiten Strömungsteilers gebildet sind. Desweiteren umfaßt der Meßaufnehmer eine Rohranordnung mit genau vier unter Bildung strömungstechnisch parallel geschalteter Strömungspfade an die - beispielsweise baugleichen - Strömungsteiler angeschlossene - beispielsweise lediglich mittels nämlicher Strömungsteiler im Aufnehmer-Gehäuse schwingfähig gehalterte und/oder baugleiche und/oder zueinander paarweise parallelen - gebogene Meßrohre zum Führen von strömendem Medium. Von den vier - beispielsweise sowohl hinsichtlich Geometrie als auch hinsichtlich Material baugleichen - Meßrohren münden ein erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers, ein zum ersten Meßrohr zumindest abschnittsweise paralleles zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers, ein drittes Meßrohr mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers sowie ein zum dritten Meßrohr zumindest abschnittsweise paralleles viertes Meßrohr mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers. Ferner umfaßt der Meßaufnehmer eine elektro-mechanische, beispielsweise mittels eines oder mehreren elektro-dynamischen Schwingungserregern gebildete, Erregeranordnung zum Erzeugen und/oder Aufrechterhalten von mechanischen Schwingungen, beispielsweise von Biegeschwingungen, der vier Meßrohre. Beim erfindungsgemäßen Meßaufnehmer sind die beiden Strömungsteiler ferner so ausgebildet und im Meßaufnehmer angeordnet, daß eine die erste Strömungsöffnung des ersten Strömungsteilers mit der ersten Strömungsöffnung des zweiten Strömungsteilers imaginär verbindende gedachte erste Verbindungsachse des Meßaufnehmers parallel zu einer die zweite Strömungsöffnung des ersten Strömungsteilers mit der zweiten Strömungsöffnung des zweiten Strömungsteilers imaginär verbindende gedachten zweiten Verbindungsachse des Meßaufnehmers verläuft, und daß eine die dritte Strömungsöffnung des ersten Strömungsteilers mit der dritten Strömungsöffnung des zweiten Strömungsteilers imaginär verbindende gedachte dritten Verbindungsachse des Meßaufnehmers parallel zu einer die vierte Strömungsöffnung des ersten Strömungsteilers mit der vierten Strömungsöffnung des zweiten Strömungsteilers imaginär verbindende gedachten vierten Verbindungsachse des Meßaufnehmers verläuft, und sind die Meßrohre so ausgebildet und so angeordnet, daß die Rohranordnung eine sowohl zwischen dem ersten Meßrohr und dem dritten Meßrohr als auch zwischen dem zweiten Meßrohr und dem vierten Meßrohr verlaufende erste gedachte Längsschnittebene aufweist, und daß die Rohranordnung eine zu deren gedachter erster Längsschnittebene senkrechte, sowohl zwischen dem ersten Meßrohr und zweiten Meßrohr als auch zwischen dem dritten Meßrohr und vierten Meßrohr verlaufende zweite gedachte Längsschnittebene aufweist. Im übrigen weist die Rohranordnung ferner auch eine sowohl zur ersten gedachten Längsschnittebene als auch zur zweiten gedachten Längsschnittebene jeweils senkrechte gedachte Querschnittsebene auf. Desweiteren umfaßt die Rohranordnung, mithin der damit gebildete erfindungsgemäße Meßaufnehmer ein, sowohl vom ersten Strömungsteiler als auch vom zweiten Strömungsteiler beabstandet, beispielsweise einlaßseitig, an jedem der vier Meßrohre fixiertes, etwa als als Stabverband ausgebildetes, erstes Kopplerelement erster Art zum Einstellen von Eigenfrequenzen natürlicher Schwingungsmoden der Rohranordnung, nicht zuletzt auch solchen, in denen gleichzeitig jedes der vier Meßrohre jeweils Biegeschwingungen um eine jeweilige statische Ruhelage ausführen kann bzw. ausführt. Das erste Kopplerelement erster Art weist einen mittels einer eine Vielzahl von Profilstäben und/oder Platten aufweisenden Rahmenkonstruktion gebildeten und/oder kastenförmigen Verformungskörper sowie vier - beispielsweise gleichlange und/oder zumindest paarweise baugleiche - Verbindungsstreben auf, von denen eine, beispielsweise stab- oder plattenförmige, erste Verbindungsstrebe sowohl mit dem Verformungskörper als auch mit dem ersten Meßrohr verbunden ist, eine, beispielsweise stab- oder plattenförmige, zweite Verbindungsstrebe sowohl mit dem Verformungskörper als auch mit dem zweiten Meßrohr verbunden ist, eine, beispielsweise stab- oder plattenförmige, dritte Verbindungsstrebe sowohl mit dem Verformungskörper als auch mit dem dritten Meßrohr verbunden ist, und eine, beispielsweise stab- oder plattenförmige, vierte Verbindungsstrebe sowohl mit dem Verformungskörper als auch mit dem vierten Meßrohr verbunden ist.

Darüberhinaus besteht die Erfindung in einem Meßsystem zum Messen einer Dichte und/oder einer Massendurchflußrate, beispielsweise auch eines über ein Zeitintervall totalisierten Gesamt-Massendurchflusses, eines in einer Rohrleitung zumindest zeitweise, beispielsweise auch mit einer Massendurchflußrate von mehr als 1000 t/h, strömenden Mediums, etwa eines Gases, einer Flüssigkeit, eines Pulvers oder eines anderen strömungsfähigen Stoffes, weiches, beispielsweise als In-Line-Meßgerät und/oder Meßgerät in Kompaktbauweise ausgebildete, Meßsystem nämlichen Meßaufnehmer sowie eine mit dem Meßaufnehmer elektrisch gekoppelte, beispielsweise in einem mechanisch mit dem Aufnehmer-Gehäuse verbundenen Elektronik-Gehäuse angeordneten, Umformer-Elektronik zum Ansteuern des Meßaufnehmers, nicht zuletzt auch von dessen Erregeranordnung, und zum Auswerten von vom Meßaufnehmer gelieferten Schwingungssignalen umfaßt; bzw. auch in der Verwendung nämlichen Meßsystems zum Messen einer Dichte und/oder einer Massendurchflußrate, nicht zuletzt auch eines über ein Zeitintervall totalisierten Gesamt-Massendurchflusses, und/oder einer Viskosität und/oder einer Reynoldszahl eines in einer Prozeßleitung, etwa einer Rohrleitung, zumindest zeitweise mit einer Massendurchflußrate von mehr als 1000 t/h, beispielsweise mehr als 1500 t/h, strömenden Mediums, wie z.B. eines Gases, einer Flüssigkeit, eines Pulvers oder eines anderen strömungsfähigen Stoffes.

Nach einer ersten Ausgestaltung des Meßaufnehmers der Erfindung ist ferner vorgesehen, daß jedes der vier, beispielsweise baugleichen, Meßrohre zumindest abschnittsweise V-förmige oder zumindest abschnittsweise kreisbogenförmig ist.

Nach einer zweiten Ausgestaltung des Meßaufnehmers der Erfindung ist ferner vorgesehen, daß die erste Verbindungsstrebe mit einem ersten Strebenende mit dem Verformungskörper und mit einem zweiten Strebenende mit dem ersten Meßrohr verbunden ist, daß die zweite Verbindungsstrebe mit einem ersten Strebenende mit dem Verformungskörper und mit einem zweiten Strebenende mit dem zweiten Meßrohr verbunden ist, daß die dritte Verbindungsstrebe mit einem ersten Strebenende mit dem Verformungskörper und mit einem zweiten Strebenende mit dem dritten Meßrohr verbunden ist, und daß die vierte Verbindungsstrebe mit einem ersten Strebenende mit dem Verformungskörper und mit einem zweiten Strebenende mit dem vierten Meßrohr verbunden ist.

Nach einer dritten Ausgestaltung des Meßaufnehmers der Erfindung ist ferner vorgesehen, daß die vier, beispielsweise baugleichen, Verbindungsstreben jeweils aus Metall, insb. einem rostfreien Stahl, bestehen.

Nach einer vierten Ausgestaltung des Meßaufnehmers der Erfindung ist ferner vorgesehen, daß die vier, beispielsweise baugleichen, Verbindungsstreben jeweils zumindest anteilig aus einem, insb. rostfreien, Stahl bestehen.

Nach einer fünften Ausgestaltung des Meßaufnehmers der Erfindung ist ferner vorgesehen, daß jede der vier, beispielsweise baugleichen, Verbindungsstreben jeweils stoffschlüssig mit dem jeweiligen Meßrohr verbunden ist. Diese Ausgestaltung der Erfindung weiterbildend ist ferner vorgesehen, daß jede der vier Verbindungsstreben jeweils mit dem jeweiligen Meßrohr hartverlötet ist und/oder daß jede der vier Verbindungsstreben jeweils mit dem jeweiligen Meßrohr verschweißt ist

Nach einer sechsten Ausgestaltung des Meßaufnehmers der Erfindung ist ferner vorgesehen, daß jede der vier, beispielsweise baugleichen, Verbindungsstreben jeweils stoffschlüssig am Verformungskörper fixiert ist

Nach einer siebenten Ausgestaltung des Meßaufnehmers der Erfindung ist ferner vorgesehen, daß jede der vier, beispielsweise baugleichen, Verbindungsstreben jeweils mittels Schraubverbindung mit dem Verformungskörper verbunden ist.

Nach einer achten Ausgestaltung des Meßaufnehmers der Erfindung ist ferner vorgesehen, daß die Rohranordnung bezüglich der ersten gedachte Längsschnittebene spiegelsymmetrisch ist.

Nach einer neunten Ausgestaltung des Meßaufnehmers der Erfindung ist ferner vorgesehen, daß die Rohranordnung bezüglich der zweiten gedachte Längsschnittebene spiegelsymmetrisch ist.

Nach einer zehnten Ausgestaltung des Meßaufnehmers der Erfindung ist ferner vorgesehen, daß die Rohranordnung sowohl bezüglich der ersten gedachte Längsschnittebene als auch bezüglich der zweiten gedachte Längsschnittebene spiegelsymmetrisch ist.

Nach einer elften Ausgestaltung des Meßaufnehmers der Erfindung ist ferner vorgesehen, daß das Kopplerelement erster Art so ausgebildet und so angeordnet ist, daß es sowohl bezüglich der ersten gedachten Längsschnittebene als auch bezüglich der zweiten gedachten Längsschnittebene der Rohranordnung spiegelsymmetrisch ist.

Nach einer zwölften Ausgestaltung des Meßaufnehmers der Erfindung ist ferner vorgesehen, daß jedes der vier Meßrohre jeweils eine durch eine von einem von einem Material nämlichen Meßrohrs abhängigen Elastizitätsmodul wie auch von einem von einem Kaliber und einer Wandstärke abhängigen Flächenträgheitsmoment bestimmte Biegesteifigkeit aufweist, und wobei sowohl das zweite Meßrohr als auch das dritte Meßrohr und das vierte Meßrohr jeweils eine Biegesteifigkeit aufweisen, die jeweils gleich der Biegesteifigkeit, $E_{18} \cdot J_{18}$, des ersten Meßrohrs ist.

Nach einer dreizehnten Ausgestaltung des Meßaufnehmers der Erfindung ist ferner vorgesehen, daß das Aufnehmer-Gehäuse, die Strömungsteiler und Rohrwände der Meßrohre jeweils aus, beispielsweise rostfreiem, Stahl bestehen.

Nach einer vierzehnten Ausgestaltung des Meßaufnehmers der Erfindung ist ferner vorgesehen, daß dem Kopplerelement erster Art ein Eigenmode erster Art, in dem der Verformungskörper nämlichen Kopplerelements mechanische Schwingungen in einer zur gedachte Querschnittsebene parallelen Schwingungsebene mit einer Eigenfrequenz ausführen kann, die sowohl bezüglich der ersten gedachten Längsschnittebene als auch bezüglich der zweiten gedachten Längsschnittebene spiegelsymmetrisch sind bzw. die den Verformungskörper sowohl bezüglich der ersten gedachten Längsschnittebene als auch bezüglich der zweiten gedachten Längsschnittebene spiegelsymmetrisch erscheinen lassen, und Eigenmode zweiter Art, in dem der Verformungskörper nämlichen Kopplerelements mechanische Schwingungen in nämlicher, zur gedachte Querschnittsebene parallelen Schwingungsebene mit einer, beispielsweise auch von der Eigenfrequenz des Eigenmodes erster Art verschiedenen, Eigenfrequenz ausführen kann, die lediglich bezüglich der zweiten gedachten Längsschnittebene spiegelsymmetrisch sind bzw. die den Verformungskörper vorübergehend lediglich bezüglich der zweiten gedachten Längsschnittebene spiegelsymmetrisch erscheinen lassen, innewohnt, und daß der Verformungskörper des Kopplerelements erster Art so ausgebildet ist, daß ein nämlichem Kopplerelement immanentes Eigenfrequenz-Verhältnis, definiert durch ein Verhältnis der Eigenfrequenz von dessen Eigenmode erster Art zur Eigenfrequenz von dessen Eigenmode zweiter Art, größer als eins, insb. größer als 10, ist.

Diese Ausgestaltung der Erfindung weiterbildend ist ferner vorgesehen, daß dem Kopplerelement erster Art ein natürlicher Schwingungsmode dritter Art innewohnt, in dem der Verformungskörper, beispielsweise sich lediglich translatorisch in Richtung einer sowohl zur ersten gedachten Längsschnittebene als auch zur zweiten gedachten Längsschnittebene parallelen Längsachse bewegend, mit einer Eigenfrequenz um eine zugehörige statische Ruhlage oszillieren kann, derart, daß simultan dazu die vier Verbindungsstreben, insb. gleichsinnig und/oder gleichmäßig, Biegeschwingungen um eine jeweilige statische Ruhelage in Richtung der Längsachse ausführen, und daß das Kopplerelement erster Art so ausgebildet ist, daß die Eigenfrequenz von dessen Eigenmode dritter Art ungleich einer bei vollständig mit Luft gefüllten Meßrohren meßbaren Eigenfrequenz des Biegeschwingungsmode erster Art der Rohranordnung ist, beispielsweise derart, daß nämliche Eigenfrequenz des Schwingungsmode dritter Art des Koppleretements erster Art um mehr als 10Hz größer als nämliche Eigenfrequenz des Biegeschwingungsmodes erster Art der Rohranordnung ist, und/oder daß nämliche Eigenfrequenz des Schwingungsmode dritter Art des Kopplerelements erster Art mehr als 101%, insb. mehr als 105%, der nämlichen Eigenfrequenz des Biegeschwingungsmodes erster Art der Rohranordnung beträgt.

Diese Ausgestaltung der Erfindung weiterbildend ist ferner vorgesehen, daß dem Kopplerelement erster Art ein natürlicher Schwingungsmode vierter Art innewohnt, in dem der Verformungskörper sich lediglich translatorisch in der zur gedachte Querschnittsebene, parallelen Schwingungsebene bewegend, mit einer Eigenfrequenz, um dessen zugehörige statische Ruhlage oszillieren kann, derart, daß die vier Verbindungsstreben, beispielsweise gleichsinnig und/oder gleichmäßig, Biegeschwingungen um deren jeweilige statische Ruhelage in der Kopplerebene ausführen, und daß das Kopplerelement erster Art so ausgebildet ist, daß die Eigenfrequenz von dessen Eigenmode vierter Art höher als die bei vollständig mit Luft gefüllten Meßrohren meßbaren Eigenfrequenz des Biegeschwingungsmode zweiter Art der Rohranordnung, beispielsweise derart, daß nämliche Eigenfrequenz des Schwingungsmodes vierter Art des Kopplerelements erster Art um mehr als 10Hz größer als nämliche Eigenfrequenz des Biegeschwingungsmode zweiter Art der Rohranordnung ist, und/oder daß nämliche Eigenfrequenz des Schwingungsmodes vierter Art des Kopplerelements erster Art mehr als 101%, insb. mehr als 105%, der nämlichen Eigenfrequenz, $f_{18X}$, des Biegeschwingungsmode zweiter Art der Rohranordnung beträgt.

Nach einer fünfzehnten Ausgestaltung des Meßaufnehmers der Erfindung ist ferner vorgesehen, daß der Verformungskörper wenigstens zwei, beispielsweise baugleiche und/oder plattenförmige, Längsstreben aufweist, von denen eine, beispielsweise zumindest abschnittsweise gerade, sich von der ersten Verbindungstrebe zur dritten Verbindungsstrebe erstreckende erste Längsstrebe, die, von der zweiten gedachten Längsschnittebene beabstandet, ausschließlich auf einer sowohl vom ersten als auch vom dritten Meßrohr eingenommene Seite nämlicher Längsschnittebene angeordnet ist, und eine, beispielsweise zumindest abschnittsweise gerade, sich von der zweiten Verbindungstrebe zur vierten Verbindungsstrebe erstreckende zweite Längsstrebe, die, von der zweiten gedachten Längsschnittebene, beispielsweise gleichweit wie die erste Längsstrebe, beabstandet, ausschließlich auf einer sowohl vom zweiten als auch vom vierten Meßrohr eingenommene Seite nämlicher Längsschnittebene angeordnet ist. Die beiden, insb. baugleichen, Längsstreben können beispielsweise mittels eines, insb. aus Metall bestehenden, Flachstabs gebildet sein bzw. jeweils aus gleichem Material und/oder jeweils aus Stahl bestehen.

Diese Ausgestaltung der Erfindung weiterbildend ist ferner vorgesehen, daß die erste Längsstrebe in Projektion auf die gedachte Querschnittsebene zumindest abschnittsweise, beispielsweise überwiegend oder vollständig, gerade ist, und wobei die zweite Längsstrebe in Projektion auf die gedachte Querschnittsebene zumindest abschnittsweise, beispielsweise überwiegend oder vollständig, gerade ist; und/oder daß die erste Längsstrebe zumindest abschnittsweise senkrecht zur ersten gedachten Längsschnittebene, mithin parallel zur zweiten gedachten Längsschnittebene verläuft, und wobei die zweite Längsstrebe zumindest abschnittsweise senkrecht zur ersten gedachten Längsschnittebene, mithin parallel zur zweiten gedachten Längsschnittebene verläuft.

Alternativ oder in Ergänzung hierzu ist ferner vorgesehen, daß die erste Längsstrebe eine von einem von einem Material nämlicher Längsstrebe abhängigen Elastizitätsmodul wie auch von einem minimalen Flächenträgheitsmoment um eine nämlicher Längsstrebe immanente gedachte Biegehauptachse bestimmte minimale Biegesteifigkeit und die zweite Längsstrebe eine von einem von einem Material nämlicher Längsstrebe abhängigen Elastizitätsmodul wie auch von einem minimalen Flächenträgheitsmoment um eine nämlicher Längsstrebe immanente gedachte Biegehauptachse bestimmte minimale Biegesteifigkeit aufweisen, und daß die erste Längsstrebe und die zweite Längstrebe so angeordnet sind, daß sowohl die gedachte Biegehauptachse des minimalem Flächenträgheitsmoments der ersten Längsstrebe als auch die gedachte Biegehauptachse des minimalem Flächenträgheitsmoments der zweiten Längsstrebe jeweils sowohl zur ersten Längsschnittebene als auch zur zweiten gedachten Längsschnittebene parallel verlaufen. Insbesondere sind die erste Längsstrebe und die zweite Längsstrebe ferner so ausgebildet und angeordnet, daß die minimale Biegesteifigkeit der ersten Längsstrebe gleich der minimalen Biegesteifigkeit der zweiten Längsstrebe ist.

Nach einer sechzehnten Ausgestaltung des Meßaufnehmers der Erfindung ist ferner vorgesehen, daß der Verformungskörper wenigstens zwei, beispielsweise baugleiche und/oder plattenförmige, Längsstreben aufweist, von denen eine, beispielsweise zumindest abschnittsweise gerade, sich von der ersten Verbindungstrebe zur dritten Verbindungsstrebe erstreckende erste Längsstrebe, die, von der zweiten gedachten Längsschnittebene beabstandet, ausschließlich auf einer sowohl vom ersten als auch vom dritten Meßrohr eingenommene Seite nämlicher Längsschnittebene angeordnet ist, und eine, beispielsweise zumindest abschnittsweise gerade, sich von der zweiten Verbindungstrebe zur vierten Verbindungsstrebe erstreckende zweite Längsstrebe, die, von der zweiten gedachten Längsschnittebene, beispielsweise gleichweit wie die erste Längsstrebe, beabstandet, ausschließlich auf einer sowohl vom zweiten als auch vom vierten Meßrohr eingenommene Seite nämlicher Längsschnittebene angeordnet ist, und daß der Verformungskörper eine, beispielsweise sich von der ersten Längsstrebe zur zweiten Längsstrebe erstreckende, beispielsweise zumindest abschnittsweise gerade und/oder abschnittsweise zur zweiten gedachten Längsschnittebene nicht-parallele, erste Querstrebe aufweist. Die erste Querstrebe kann sich beispielsweise von der ersten Verbindungsstrebe zur zweiten Verbindungsstrebe erstrecken; und/oder sowohl die erste Verbindungsstrebe als auch die zweite Verbindungsstrebe können mit ihrem jeweiligen ersten Strebenende jeweils und der ersten Querstrebe fixiert sein; und/oder die erste Querstrebe kann in einem Bereich, in dem diese die zweite gedachte Längsschnittebene imaginär schneidet, einen kleineren Querschnitt aufweisen, als in einem angrenzenden, sich zur ersten Verbindungstrebe hin erstreckenden Nachbarbereich und als in einem angrenzenden, sich zur zweiten Verbindungstrebe hin erstreckenden Nachbarbereich.

Diese Ausgestaltung weiterbildend ist ferner vorgesehen, daß die erste Querstrebe eine von einem von einem Material nämlicher Querstrebe abhängigen Elastizitätsmodul wie auch von einem minimalen Flächenträgheitsmoment um eine nämlicher Längsstrebe immanente gedachte Biegehauptachse bestimmte minimale Biegesteifigkeit aufweist, und daß die erste Querstrebe so angeordnet ist, daß die gedachte Biegehauptachse von deren minimalem Flächenträgheitsmoment sowohl zur ersten Längsschnittebene als auch zur zweiten gedachten Längsschnittebene parallel verläuft, beispielsweise auch derart, daß nämliche gedachte Biegehauptachse in der zweiten gedachten Längsschnittebene liegt.

Alternativ oder in Ergänzung hierzu ist ferner vorgesehen, daß der Verformungskörper eine sich von der ersten Längsstrebe zur zweiten Längsstrebe erstreckende, beispielsweise zumindest abschnittsweise gerade und/oder abschnittsweise zur zweiten gedachten Längsschnittebene nicht-parallele und/oder zur ersten Querstrebe baugleiche, zweite Querstrebe aufweist.

Nach einer siebzehnten Ausgestaltung des Meßaufnehmers der Erfindung ist ferner vorgesehen, daß der Verformungskörper wenigstens zwei, beispielsweise baugleiche und/oder plattenförmige, Längsstreben aufweist, von denen eine, beispielsweise zumindest abschnittsweise gerade, sich von der ersten Verbindungstrebe zur dritten Verbindungsstrebe erstreckende erste Längsstrebe, die, von der zweiten gedachten Längsschnittebene beabstandet, ausschließlich auf einer sowohl vom ersten als auch vom dritten Meßrohr eingenommene Seite nämlicher Längsschnittebene angeordnet ist, und eine, beispielsweise zumindest abschnittsweise gerade, sich von der zweiten Verbindungstrebe zur vierten Verbindungsstrebe erstreckende zweite Längsstrebe, die, von der zweiten gedachten Längsschnittebene, beispielsweise gleichweit wie die erste Längsstrebe, beabstandet, ausschließlich auf einer sowohl vom zweiten als auch vom vierten Meßrohr eingenommene Seite nämlicher Längsschnittebene angeordnet ist, und daß der Verformungskörper eine, beispielsweise sich von der ersten Längsstrebe zur zweiten Längsstrebe erstreckende, beispielsweise zumindest abschnittsweise gerade und/oder abschnittsweise zur zweiten gedachten Längsschnittebene nicht-parallele, erste Querstrebe sowie eine sich von der ersten Längsstrebe zur zweiten Längsstrebe erstreckende, beispielsweise zumindest abschnittsweise gerade und/oder abschnittsweise zur zweiten gedachten Längsschnittebene nicht-parallele und/oder zur ersten Querstrebe baugleiche, zweite Querstrebe aufweist. Die erste Querstrebe kann sich beispielsweise von der ersten Verbindungsstrebe zur zweiten Verbindungsstrebe erstrecken; und/oder sowohl die erste Verbindungsstrebe als auch die zweite Verbindungsstrebe können mit ihrem jeweiligen ersten Strebenende jeweils und der ersten Querstrebe fixiert sein; und/oder die erste Querstrebe kann in einem Bereich, in dem diese die zweite gedachte Längsschnittebene imaginär schneidet, einen kleineren Querschnitt aufweisen, als in einem angrenzenden, sich zur ersten Verbindungstrebe hin erstreckenden Nachbarbereich und als in einem angrenzenden, sich zur zweiten Verbindungstrebe hin erstreckenden Nachbarbereich, Gleichermaßen kann die sich die zweite Querstrebe von der dritten Verbindungsstrebe zur vierten Verbindungsstrebe erstrecken; und/oder kann sowohl die dritte Verbindungsstrebe als auch die vierte Verbindungsstrebe mit ihrem jeweiligen ersten Strebenende jeweils und der zweiten Querstrebe fixiert sein; und/oder kann auch die zweite Querstrebe in einem Bereich, in dem diese die zweite gedachte Längsschnittebene imaginär schneidet, einen kleineren Querschnitt aufweisen, als in einem angrenzenden, sich zur dritten Verbindungstrebe hin erstreckenden Nachbarbereich und als in einem angrenzenden, sich zur vierten Verbindungstrebe hin erstreckenden Nachbarbereich. Desweiteren können die beiden Querstreben jeweils mittels eines, beispielsweise aus Metall bestehenden, Flachstabs gebildet sein, und/oder jeweils aus gleichem Material und/oder jeweils aus Stahl bestehen.

Diese Ausgestaltung weiterbildend ist ferner vorgesehen, daß die erste Querstrebe eine von einem von einem Material nämlicher Querstrebe abhängigen Elastizitätsmodul wie auch von einem minimalen Flächenträgheitsmoment um eine nämlicher Längsstrebe immanente gedachte Biegehauptachse bestimmte minimale Biegesteifigkeit aufweist, und daß die erste Querstrebe so angeordnet ist, daß die gedachte Biegehauptachse von deren minimalem Flächenträgheitsmoment sowohl zur ersten Längsschnittebene als auch zur zweiten gedachten Längsschnittebene parallel verläuft - beispielsweise derart, daß die gedachte Biegehauptachse des minimalem Flächenträgheitsmoments der ersten Querstrebe in der zweiten gedachten Längsschnittebene liegt - und ist ferner vorgesehen, daß die zweite Querstrebe eine von einem von einem Material nämlicher Querstrebe abhängigen Elastizitätsmodul wie auch von einem minimalen Flächenträgheitsmoment um eine nämlicher Längsstrebe immanente gedachte Biegehauptachse bestimmte minimale Biegesteifigkeit aufweist, und daß die zweite Querstrebe so angeordnet ist, daß nämliche gedachte Biegehauptachse sowohl zur ersten Längsschnittebene als auch zur zweiten gedachten Längsschnittebene parallel verläuft - beispielsweise derart, daß die gedachte Biegehauptachse des minimalem Flächenträgheitsmoments der zweiten Querstrebe in der zweiten gedachten Längsschnittebene liegt.

Alternativ oder in Ergänzung ist ferner vorgesehen, daß der Verformungskörper eine sich von der ersten Querstrebe zur zweite Querstrebe mit einer Länge erstreckende, in Projektion auf die gedachte Querschnittsebene gerade, beispielsweise plattenförmige und/oder zur zweiten gedachten Längsschnittebene parallele und/oder jeweils gleichweit von der ersten Längsstrebe wie von zweiten Längsstrebe beabstandete, dritte Längsstrebe aufweist.

Nach einer achtzehnten Ausgestaltung des Meßaufnehmers der Erfindung ist ferner vorgesehen, daß der Verformungskörper, beispielsweise plattenförmige, Längsstreben aufweist, von denen eine, beispielsweise zumindest abschnittsweise gerade, sich von der ersten Verbindungstrebe zur dritten Verbindungstrebe erstreckende erste Längsstrebe, die, von der zweiten gedachten Längsschnittebene beabstandet, ausschließlich auf einer sowohl vom ersten als auch vom dritten Meßrohr eingenommene Seite nämlicher Längsschnittebene angeordnet ist, und eine, beispielsweise zumindest abschnittsweise gerade, sich von der zweiten Verbindungstrebe zur vierten Verbindungsstrebe erstreckende zweite Längsstrebe, die, von der zweiten gedachten Längsschnittebene, beispielsweise gleichweit wie die erste Längsstrebe, beabstandet, ausschließlich auf einer sowohl vom zweiten als auch vom vierten Meßrohr eingenommene Seite nämlicher Längsschnittebene angeordnet ist, daß der Verformungskörper eine, beispielsweise sich von der ersten Längsstrebe zur zweiten Längsstrebe erstreckende, beispielsweise zumindest abschnittsweise gerade und/oder abschnittsweise zur zweiten gedachten Längsschnittebene nicht-parallele, erste Querstrebe sowie eine sich von der ersten Längsstrebe zur zweiten Längsstrebe erstreckende, beispielsweise zumindest abschnittsweise gerade und/oder abschnittsweise zur zweiten gedachten Längsschnittebene nicht-parallele und/oder zur ersten Querstrebe baugleiche, zweite Querstrebe aufweist, und daß der Verformungskörper eine sich von der ersten Querstrebe zur zweite Querstrebe mit einer Länge erstreckende, in Projektion auf die gedachte Querschnittsebene gerade, beispielsweise plattenförmige und/oder zur zweiten gedachten Längsschnittebene parallele und/oder jeweils gleichweit von der ersten Längsstrebe wie von zweiten Längsstrebe beabstandete, dritte Längsstrebe aufweist. Jede der Längsstreben kann beispielsweise jeweils mittels eines Flachstabes gebildet sein und/oder jeweils aus gleichem Material und/oder jeweils aus Stahl bestehen.

Diese Ausgestaltung der Erfindung weiterbildend ist ferner vorgesehen, daß die dritte Längsstrebe mit einem ersten Strebenende an der ersten Querstrebe fixiert ist, insb. in einem Bereich, in dem die erste Querstrebe die zweite gedachte Längsschnittebene imaginär schneidet, und daß die dritte Längsstrebe mit einem zweiten Strebenende an der zweiten Querstrebe fixiert ist, insb. in einem Bereich, in dem die zweite Querstrebe die zweite gedachte Längsschnittebene imaginär schneidet. Alternativ oder in Ergänzung hierzu ist ferner vorgesehen, daß die Länge der dritte Längsstrebe größer als 10% der Länge der ersten Längsstrebe und/oder kleiner als 120% der Länge der ersten Längsstrebe ist

Nach einer neunzehnten Ausgestaltung des Meßaufnehmers der Erfindung ist ferner vorgesehen, daß jede der Verbindungsstreben des Kopplerelements erster Art in Projektion auf die gedachte Querschnittsebene zumindest abschnittsweise, insb. überwiegend oder vollständig, gerade ist.

Nach einer zwanzigsten Ausgestaltung des Meßaufnehmers der Erfindung ist ferner vorgesehen, daß jede der Verbindungsstreben des Kopplerelements erster Art zumindest abschnittsweise senkrecht zur ersten gedachten Längsschnittebene, mithin parallel zur zweiten gedachten Längsschnittebene verläuft.

Nach einer einundzwanzigsten Ausgestaltung des Meßaufnehmers der Erfindung ist ferner vorgesehen, daß jede der Verbindungsstreben des Kopplerelements erster Art einen geraden Teilabschnitt aufweist, der senkrecht zur ersten gedachten Längsschnittebene, mithin parallel zur zweiten gedachten Längsschnittebene verläuft. Dies beispielsweise derart, daß jede der Verbindungsstreben des Kopplerelements erster Art die erste gedachte Längsschnittebene, beispielsweise mit dem jeweiligen geraden Teilabschnitt, imaginär schneidet, beispielsweise unter einem Winkel von 90°.

Nach einer zweiundzwanzigsten Ausgestaltung des Meßaufnehmers der Erfindung ist ferner vorgesehen, daß die erste und die dritte Verbindungsstrebe zueinander fluchtend ausgerichtet sind und wobei die zweite und vierte Verbindungsstrebe zueinander fluchtend ausgerichtet sind.

Nach einer dreiundzwanzigsten Ausgestaltung des Meßaufnehmers der Erfindung ist ferner vorgesehen, daß die erste Verbindungsstrebe eine von einem von einem Material nämlicher Verbindungsstrebe abhängigen Elastizitätsmodul wie auch von einem maximalen Flächenträgheitsmoment um eine nämlicher Verbindungsstrebe immanente gedachte Biegehauptachse bestimmte maximale Biegesteifigkeit, die zweite Verbindungsstrebe eine von einem von einem Material nämlicher Verbindungsstrebe abhängigen Elastizitätsmodul, wie auch von einem maximalen Flächenträgheitsmoment um eine nämlicher Verbindungsstrebe immanente gedachte Biegehauptachse bestimmte maximale Biegesteifigkeit, die dritte Verbindungsstrebe eine von einem von einem Material nämlicher Verbindungsstrebe abhängigen Elastizitätsmodul wie auch von einem maximalen Flächenträgheitsmoment um eine nämlicher Verbindungsstrebe immanente gedachte Biegehauptachse bestimmte maximale Biegesteifigkeit und die vierte Verbindungsstrebe eine von einem von einem Material nämlicher Verbindungsstrebe abhängigen Elastizitätsmodul wie auch von einem maximalen Flächenträgheitsmoment um eine nämlicher Verbindungsstrebe immanente gedachte Biegehauptachse bestimmte maximale Biegesteifigkeit aufweisen, und daß jede der vier Verbindungsstreben jeweils so angeordnet ist, daß die gedachte Biegehauptachse von deren jeweiligen maximalen Flächenträgheitsmoment jeweils sowohl zur ersten Längsschnittebene als auch zur zweiten gedachten Längsschnittebene parallel verläuft. Diese Ausgestaltung der Erfindung weiterbildend ist ferner vorgesehen, daß sowohl das maximale Flächenträgheitsmoment der zweite Verbindungsstrebe als auch das maximale Flächenträgheitsmoment der dritten Verbindungsstrebe und das maximale Flächenträgheitsmoment der vierten Verbindungsstrebe jeweils gleich dem maximalen Flächenträgheitsmoment der ersten Verbindungsstrebe ist. Alternativ oder in Ergänzung hierzu ist ferner vorgesehen, daß die erste Verbindungsstrebe eine vom vom Material nämlicher Verbindungsstrebe abhängigen Elastizitätsmodul wie auch von einem minimalen Flächenträgheitsmoment um eine nämlicher Verbindungsstrebe immanente gedachte Biegehauptachse bestimmte minimale Biegesteifigkeit, die zweite Verbindungsstrebe eine vom vom Material nämlicher Verbindungsstrebe abhängigen Elastizitätsmodul wie auch von einem minimalen Flächenträgheitsmoment um eine nämlicher Verbindungsstrebe immanente gedachte Biegehauptachse bestimmte minimale Biegesteifigkeit, die dritte Verbindungsstrebe eine vom vom Material nämlicher Verbindungsstrebe abhängigen Elastizitätsmodul wie auch von einem minimalen Flächenträgheitsmoment um eine nämlicher Verbindungsstrebe immanente gedachte Biegehauptachse bestimmte minimale Biegesteifigkeit und die vierte Verbindungsstrebe eine vom vom Material nämlicher Verbindungsstrebe abhängigen Elastizitätsmodul, $E_{V4}$, wie auch von einem minimalen Flächenträgheitsmoment um eine nämlicher Verbindungsstrebe immanente gedachte Biegehauptachse bestimmte minimale Biegesteifigkeit aufweisen, und daß jede der vier Verbindungsstreben jeweils so angeordnet ist, daß die gedachte Biegehauptachse von deren jeweiligen minimalen Flächenträgheitsmoment zur ersten Längsschnittebene parallel verläuft und zur zweiten gedachten Längsschnittebene senkrecht ist.

Nach einer vierundzwanzigsten Ausgestaltung des Meßaufnehmers der Erfindung ist ferner vorgesehen, daß jede der, beispielsweise baugleichen, Verbindungsstrebe mittels eines, beispielsweise in Projektion auf die zweite gedachte Längsschnittebene zumindest abschnittsweise S-förmig, Z-förmig, V-förmig und/oder U-förmig gekrümmten, Flachstabes gebildet ist; und/oder daß die erste Verbindungsstrebe, die zweite Verbindungsstrebe, die dritte Längsstrebe und die vierte Verbindungsstrebe jeweils aus gleichem Material und/oder jeweils aus Stahl bestehen.

Nach einer fünfundzwanzigsten Ausgestaltung des Meßaufnehmers der Erfindung ist ferner vorgesehen, daß das zweite Meßrohr, das dritte Meßrohr und vierte Meßrohr jeweils eine Leermasse aufweisen, die gleich einer Leermasse des ersten Meßrohrs ist; und/oder daß das erste Meßrohr eine Leermasse aufweist, die größer als 20 kg, beispielsweise auch größer als 30 kg und/oder kleiner als 50 kg, ist. Diese Ausgestaltung der Erfindung weiterbildend ist zudem vorgesehen, daß der Verformungskörper des Kopplerelements erster Art eine Masse aufweist, die weniger als 50% der Leermasse des ersten Meßrohrs beträgt, beispielsweise auch größer als ein 10% der Leermasse, $M_{18}$, des ersten Meßrohrs ist.

Nach einer sechsundzwanzigsten Ausgestaltung des Meßaufnehmers der Erfindung ist ferner vorgesehen, daß jedes der vier Meßrohre jeweils einen von einem Kaliber nämlichen Meßrohrs sowie einer Wandstärke nämlichen Meßrohrs bestimmten Rohrquerschnitt aufweist, und wobei sowohl das zweite Meßrohr als auch das dritte Meßrohr und das vierte Meßrohr jeweils ein Kaliber, das jeweils gleich einem Kaliber des ersten Meßrohrs ist, sowie jeweils eine Wandstärke, die gleich einer Wandstärke, $h_{18}$, des ersten Meßrohrs ist, mithin sowohl das zweite Meßrohr als auch das dritte Meßrohr und das vierte Meßrohr jeweils einen Außendurchmesser der gleich einem Außendurchmesser des ersten Meßrohrs ist, aufweisen.

Nach einer siebenundzwanzigsten Ausgestaltung des Meßaufnehmers der Erfindung ist ferner vorgesehen, daß jede der vier Verbindungsstreben jeweils eine durch einen minimalen Abstand zwischen deren jeweiligen ersten Strebenende und deren jeweiligen zweiten Strebenende definierte Strebenlänge aufweist, und daß sowohl die zweite Verbindungsstrebe als auch die dritte sowie die vierte Verbindungsstrebe jeweils eine Strebenlänge aufweisen, die jeweils gleich der Strebenlänge der ersten Verbindungsstrebe ist.

Nach einer achtundzwanzigsten Ausgestaltung des Meßaufnehmers der Erfindung ist die Erregeranordnung derart ausgebildet, daß damit jedes der vier Meßrohre, beispielsweise auch simultan, zu Biegeschwingungen anregbar ist.

Nach einer neunundzwanzigsten Ausgestaltung des Meßaufnehmers der Erfindung ist die Erregeranordnung derart ausgebildet, daß damit das erste Meßrohr und das zweite Meßrohr zu bezüglich der zweiten gedachten Längsschnittebene gegengleichen, beispielsweise auch zu bezüglich der zweiten gedachten Längsschnittebene symmetrischen, Biegeschwingungen und das dritte Meßrohr und das vierte Meßrohr zu bezüglich der zweiten gedachten Längsschnittebene gegengleichen, beispielsweise auch zu bezüglich der zweiten gedachten Längsschnittebene symmetrischen, Biegeschwingungen anregbar sind.

Nach einer dreißigsten Ausgestaltung des Meßaufnehmers der Erfindung ist die Erregeranordnung derart ausgebildet, daß damit das erste Meßrohr und das dritte Meßrohr zu bezüglich der zweiten gedachten Längsschnittebene gegengleichen, beispielsweise auch zu bezüglich der zweiten gedachten Längsschnittebene symmetrischen, Biegeschwingungen und das zweite Meßrohr und das vierte Meßrohr zu bezüglich der zweiten gedachten Längsschnittebene gegengleichen, beispielsweise auch zu bezüglich der zweiten gedachten Längsschnittebene symmetrischen, Biegeschwingungen anregbar sind.

Nach einer einunddreißigsten Ausgestaltung des Meßaufnehmers der Erfindung ist die Erregeranordnung derart ausgebildet, daß damit ein der Rohranordnung innewohnender, natürlicher Biegeschwingungsmode erster Art anregbar ist, in welchem Biegeschwingungsmode erster Art das erste Meßrohr und das zweite Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, und in welchem Biegeschwingungsmode erster Art das dritte Meßrohr und das vierte Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, derart, daß, bezüglich der zweiten gedachten Längsschnittebene, nämliche Biegeschwingungen des ersten Meßrohrs auch gegengleich zu nämlichen Biegeschwingungen des dritten Meßrohrs sind, und daß, bezüglich der zweiten gedachten Längsschnittebene, nämliche Biegeschwingungen des zweiten Meßrohrs auch gegengleich zu nämlichen Biegeschwingungen des vierten Meßrohrs sind.

Diese Ausgestaltung der Erfindung weiterbildend ist die Erregeranordnung derart ausgebildet, daß damit ein der Rohranordnung innewohnender, natürlicher Biegeschwingungsmode zweiter Art, beispielsweise auch simultan zum Biegeschwingungsmode erster Art, anregbar ist, in welchen Biegeschwingungsmode zweiter Art das erste Meßrohr und das zweite Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, und in welchen Biegeschwingungsmode zweiter Art das dritte Meßrohr und das vierte Meßrohr bezüglich der zweiten gedachten Längsschnittebene gegengleiche, beispielsweise auch bezüglich der zweiten gedachten Längsschnittebene symmetrische, Biegeschwingungen um jeweils eine dem jeweiligen Meßrohr zugehörige statische Ruhelage ausführen, etwa Ausleger-Biegeschwingungen um jeweils eine zu wenigstens zwei der gedachten Verbindungsachsen parallele gedachte Schwingungsachse, derart, daß, bezüglich der zweiten gedachten Längsschnittebene, nämliche Biegeschwingungen des ersten Meßrohrs auch gegengleich zu nämlichen Biegeschwingungen des vierten Meßrohrs sind, und daß, bezüglich der zweiten gedachten Längsschnittebene, nämliche Biegeschwingungen des zweiten Meßrohrs auch gegengleich zu nämlichen Biegeschwingungen des dritten Meßrohrs sind.

Alternativ oder in Ergänzung ist ferner vorgesehen, ist daß eine, beispielsweise bei vollständig mit Luft gefüllter Rohranordnung meßbare, Eigenfrequenz des Biegeschwingungsmode erster Art von einer, beispielsweise bei vollständig mit Luft gefüllter Rohranordnung und/oder zeitgleich zur Eigenfrequenz des Biegeschwingungsmode erster Art meßbaren, Eigenfrequenz des Biegeschwingungsmode zweiter Art, beispielsweise um mehr als 10Hz, verschieden ist; die z.B. derart, daß, nämliche Eigenfrequenz des Biegeschwingungsmode erster Art um mehr als 10Hz größer als nämliche Eigenfrequenz des Biegeschwingungsmode zweiter Art ist oder daß nämliche Eigenfrequenz des Biegeschwingungsmode erster Art um mehr als 10Hz kleiner als nämliche Eigenfrequenz des Biegeschwingungsmode zweiter Art ist.

Nach einer zweiunddreißigsten Ausgestaltung der Erfindung weist jedes der vier Meßrohre jeweils einen Meßrohr-Scheitelpunkt, definiert als größter senkrechter Abstand des jeweiligen Meßrohres von der ersten gedachten Längsschnittebene, auf.

Nach einer dreiunddreißigsten Ausgestaltung des Meßaufnehmers der Erfindung liegt ein Massenschwerpunkt der Rohranordnung in einer sowohl zur ersten gedachten Längsschnittebene als auch zur zweiten gedachten Längsschnittebene jeweils senkrechte gedachte Querschnittebene der Rohranordnung.

Nach einer vierunddreißigsten Ausgestaltung des Meßaufnehmers der Erfindung ist die Rohranordnung bezüglich einer sowohl zur ersten gedachten Längsschnittebene als auch zur zweiten gedachten Längsschnittebene jeweils senkrechte gedachte Querschnittebene der Rohranordnung spiegelsymmetrisch.

Nach einer fünfunddreißigsten Ausgestaltung des Meßaufnehmers der Erfindung weist jedes der vier Meßrohre jeweils einen Meßrohr-Scheitelpunkt, definiert als größter senkrechter Abstand des jeweiligen Meßrohres von der ersten gedachten Längsschnittebene, auf und schneidet eine sowohl zur ersten gedachten Längsschnittebene als auch zur zweiten gedachten Längsschnittebene jeweils senkrechte gedachte Querschnittebene der Rohranordnung jedes der vier Meßrohre in dessen jeweiligen Meßrohr-Scheitelpunkt.

Nach einer sechsunddreißigsten Ausgestaltung des Meßaufnehmers der Erfindung ist ein Mittelsegment des Aufnehmer-Gehäuses zumindest anteilig mittels eines geraden, beispielsweise kreiszylindrischen, Trägerrohres gebildet ist, etwa derart, daß ein auf einer ersten Seite aus nämlichem Trägerrohrs herausragendes Segment des ersten Meßrohrs und ein auf der ersten Seite aus nämlichem Trägerrohr herausragendes Segment des zweiten Meßrohrs von einer ersten Gehäusekappe des Aufnehmer-Gehäuses umgeben sind, und daß ein auf einer der ersten Seite gegenüberliegenden zweiten Seite aus nämlichem Trägerrohr herausragendes Segment des dritten Meßrohrs und ein auf der zweiten Seite aus nämlichem Trägerrohr herausragendes Segment des vierten Meßrohrs von einer, beispielsweise auch zur ersten Gehäusekappe baugleichen, zweiten Gehäusekappe des Aufnehmer-Gehäuses umgeben sind.

Nach einer siebenunddreißigsten Ausgestaltung des Meßaufnehmers der Erfindung ist ferner vorgesehen, daß die beiden Strömungsteiler zudem so ausgebildet und im Meßaufnehmer angeordnet, daß eine die erste Strömungsöffnung des ersten Strömungsteilers mit der ersten Strömungsöffnung des zweiten Strömungsteilers imaginär verbindende gedachte erste Verbindungsachse des Meßaufnehmers parallel zu einer die zweite Strömungsöffnung des ersten Strömungsteilers mit der zweiten Strömungsöffnung des zweiten Strömungsteilers imaginär verbindende gedachten zweiten Verbindungsachse des Meßaufnehmers verläuft, daß eine die dritte Strömungsöffnung des ersten Strömungsteilers mit der dritten Strömungsöffnung des zweiten Strömungsteilers imaginär verbindende gedachte dritten Verbindungsachse des Meßaufnehmers parallel zu einer die vierte Strömungsöffnung des ersten Strömungsteilers mit der vierten Strömungsöffnung des zweiten Strömungsteilers imaginär verbindende gedachten vierten Verbindungsachse des Meßaufnehmers verläuft. Diese Ausgestaltung der Erfindung weiterbildend ist ferner vorgesehen, daß eine erste gedachte Längsschnittebene des Meßaufnehmers, innerhalb der die, beispielsweise zu einer mit der Rohrleitung fluchtenden Hauptströmungsachse des Meßaufnehmers parallele, erste gedachte Verbindungsachse und die zweite gedachte Verbindungsachse verlaufen, parallel zu einer zweiten gedachten Längsschnittebene des Meßaufnehmers, innerhalb der die gedachte dritte Verbindungsachse und die gedachte vierte Verbindungsachse verlaufen, ist, beispielsweise derart, daß die erste gedachte Längsschnittebene der Rohranordnung zwischen der ersten und zweiten gedachten Längsschnittebene des Meßaufnehmers liegt und/oder parallel zur ersten und zweiten gedachten Längsschnittebene des Meßaufnehmers ist.

Nach einer achtunddreißigsten Ausgestaltung des Meßaufnehmers der Erfindung ist ferner vorgesehen, daß die beiden Strömungsteiler so ausgebildet und im Meßaufnehmer angeordnet sind, daß eine dritte gedachte Längsschnittebene des Meßaufnehmers, innerhalb der die gedachte erste Verbindungsachse und die die gedachte dritte Verbindungsachse verlaufen, parallel zu einer vierten gedachten Längsschnittebene des Meßaufnehmers, innerhalb der die gedachte zweite Verbindungsachse und die die gedachte vierte Verbindungsachse verlaufen, ist. Diese Ausgestaltung der Erfindung weiterbildend ist ferner vorgesehen, daß die zweite gedachte Längsschnittebene der Rohranordnung zwischen der dritten gedachten Längsschnittebene des Meßaufnehmers und der vierten gedachten Längsschnittebene des Meßaufnehmers verläuft, beispielsweise derart, daß die zweite gedachte Längsschnittebene der Rohranordnung parallel zur dritten gedachten Längsschnittebene des Meßaufnehmers und parallel zur vierten gedachten Längsschnittebene des Meßaufnehmers ist.

Nach einer neununddreißigsten Ausgestaltung des Meßaufnehmers der Erfindung ist ferner vorgesehen, daß die vier Strömungsöffnungen des ersten Strömungsteilers so angeordnet sind, daß zu, insb. kreisförmigen, Querschnittsflächen der Strömungsöffnungen des ersten Strömungsteilers zugehörige gedachte Flächenschwerpunkte die Eckpunkte eines gedachten Rechtecks oder eines gedachten Quadrats bilden, wobei nämliche Querschnittsflächen in einer, beispielsweise zur ersten gedachten Längsschnittebene des Meßaufnehmers bzw. zur zweiten gedachten Längsschnittebene des Meßaufnehmers senkrechten, gemeinsamen gedachten Querschnittsschnittebene des ersten Strömungsteilers liegen.

Nach einer vierzigsten Ausgestaltung des Meßaufnehmers der Erfindung ist ferner vorgesehen, daß die vier Strömungsöffnungen des zweiten Strömungsteilers so angeordnet sind, daß zu, insb. kreisförmigen, Querschnittsflächen der Strömungsöffnungen des zweiten Strömungsteilers zugehörige gedachte Flächenschwerpunkte die Eckpunkte eines gedachten Rechtecks oder eines gedachten Quadrats bilden, wobei nämliche Querschnittsflächen in einer, beispielsweise zur ersten gedachten Längsschnittebene des Meßaufnehmers bzw. zur zweiten gedachten Längsschnittebene des Meßaufnehmers senkrechten, gemeinsamen gedachten Querschnittsschnittebene des zweiten Strömungsteilers liegen.

Nach einer einundvierzigsten Ausgestaltung des Meßaufnehmers der Erfindung ist ferner vorgesehen, daß jedes der vier, insb. gleichgroßen, Meßrohre ein Kaliber aufweist, das mehr als 40 mm, insb. mehr als 60 mm, beträgt. Diese Ausgestaltung der Erfindung weiterbildend ist ferner vorgesehen, daß die Meßrohre so gebogen und so angeordnet sind, daß ein Kaliber-zu-Höhe-Verhältnis der Rohranordnung, definiert durch ein Verhältnis des Kalibers des ersten Meßrohrs zu einer maximalen seitlichen Ausdehnung der Rohranordnung, gemessen von einem Scheitelpunkt des ersten Meßrohrs zu einem Scheitelpunkt des dritten Meßrohrs, mehr als 0.05, insb. mehr als 0.07 und/oder weniger als 0.35, insb. weniger als 0.2, beträgt.

Nach einer zweiundvierzigsten Ausgestaltung des Meßaufnehmers der Erfindung ist ferner vorgesehen, daß der erste Strömungsteiler einen, insb. eine Masse von mehr als 50 kg aufweisenden, Flansch zum Anschließen des Meßaufnehmers an ein dem Zuführen von Medium zum Meßaufnehmer dienendes Rohrsegment der Rohrleitung und der zweite Strömungsteiler einen, insb, eine Masse von mehr als 50 kg aufweisenden, Flansch zum Anschließen des Meßaufnehmers an ein dem Abführen von Medium vom Meßaufnehmer dienendes Rohrsegment der Rohrleitung aufweisen. Diese Ausgestaltung der Erfindung weiterbildend weist jeder der Flansche jeweils eine Dichtfläche zum fluiddichten Verbinden des Meßaufnehmers mit dem jeweils korrespondierenden Rohrsegment der Rohrleitung auf, wobei ein Abstand zwischen den Dichtflächen beider Flansche eine, insb. mehr als 1000 mm betragende und/oder weniger als 3000 mm betragende, Einbaulänge des Meßaufnehmers definiert. Im besonderen ist der Meßaufnehmer ferner so ausgebildet, daß dabei eine einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs entsprechende Meßrohrlänge des ersten Meßrohrs so gewählt ist, daß ein Meßrohrlänge-zu-Einbaulänge-Verhältnis des Meßaufnehmers, definiert durch ein Verhältnis der Meßrohrlänge des ersten Meßrohrs zur Einbaulänge des Meßaufnehmers, mehr als 0.7, insb. mehr als 0.8 und/oder weniger als 1.2, beträgt, und/oder daß ein Kaliber-zu-Einbaulänge-Verhältnis, des Meßaufnehmers, definiert durch ein Verhältnis eines Kalibers des ersten Meßrohrs zur Einbaulänge des Meßaufnehmers, mehr als 0.02, insb. mehr als 0.05 und/oder weniger als 0.09, beträgt. Alternativ oder in Ergänzung dazu ist der Meßaufnehmer so ausgebildete, daß ein Nennweite-zu Einbaulänge-Verhältnis des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist, wobei die nominelle Nennweite einem Kaliber der Rohrleitung, in deren Verlauf der Meßaufnehmer einzusetzen ist, entspricht.

Nach einer dreiundvierzigsten Ausgestaltung des Meßaufnehmers der Erfindung ist ferner vorgesehen, daß eine einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs entsprechende Meßrohrlänge des ersten Meßrohrs mehr als 1000 mm, insb. mehr als 1200 mm und/oder weniger als 3000 mm, insb. weniger als 2500, beträgt.

Nach einer vierundvierzigsten Ausgestaltung des Meßaufnehmers der Erfindung ist ferner vorgesehen, daß jedes der vier, beispielsweise gleichkalibrigen, Meßrohre so angeordnet ist, daß ein kleinster seitlicher Abstand jedes der vier, beispielsweise gleichlangen, Meßrohre von einer Gehäuseseitenwand des Aufnehmer-Gehäuses jeweils größer als Null, beispielsweise auch größer als 3 mm und/oder größer als ein Doppeltes einer jeweiligen Rohrwandstärke, beträgt; und/oder daß ein kleinster seitlicher Abstand zwischen zwei benachbarten Meßrohren jeweils größer als 3 mm und/oder größer als die Summe von deren jeweiligen Rohrwandstärken beträgt.

Nach einer fünfundvierzigsten Ausgestaltung des Meßaufnehmers der Erfindung ist ferner vorgesehen, daß jede der Strömungsöffnungen so angeordnet ist, daß ein kleinster seitlicher Abstand jeder der Strömungsöffnungen von einer Gehäuseseitenwand des Aufnehmer-Gehäuses jeweils größer als Null, beispielsweise auch größer als 3 mm und/oder größer als ein Doppeltes einer kleinsten Rohrwandstärke der Meßrohre, beträgt; und/oder daß ein kleinster seitlicher Abstand zwischen den Strömungsöffnungen größer als 3 mm und/oder größer als ein Doppeltes einer kleinsten Rohrwandstärke der Meßrohre beträgt.

Nach einer sechsundvierzigsten Ausgestaltung des Meßaufnehmers der Erfindung ist ferner vorgesehen, daß die Erregeranordnung derart ausgebildet ist, daß damit das erste Meßrohr und das zweite Meßrohr im Betrieb zu gegengleichen Biegeschwingungen und das dritte Meßrohr und das vierte Meßrohr im Betrieb zu gegengleichen Biegeschwingungen anregbar sind.

Nach einer siebenundvierzigsten Ausgestaltung des Meßaufnehmers der Erfindung ist ferner vorgesehen, daß ein Massenverhältnis einer Leermasse des gesamten Meßaufnehmers zu einer Leermasse des ersten Meßrohrs größer als 10, insb. größer als 15 und kleiner als 25, ist.

Nach einer achtundvierzigsten Ausgestaltung des Meßaufnehmers der Erfindung ist ferner vorgesehen, daß eine Leermasse, $M_{18}$, des ersten Meßrohrs, insb. jedes der Meßrohre größer als 20 kg, insb. größer als 30 kg und/oder kleiner als 50 kg, ist.

Nach einer neunundvierzigsten Ausgestaltung des Meßaufnehmers der Erfindung ist ferner vorgesehen, daß eine Leermasse des Meßaufnehmers größer als 200 kg, insb. größer als 300 kg, ist.

Nach einer fünfzigsten Ausgestaltung des Meßaufnehmers der Erfindung ist ferner vorgesehen, daß eine nominellen Nennweite des Meßaufnehmers, die einem Kaliber der Rohrleitung, in deren Verlauf der Meßaufnehmer einzusetzen ist, entspricht, mehr als 50 mm beträgt, insb. größer als 100 mm ist. In vorteilhafter Weise ist der Meßaufnehmer ferner so ausgebildet, daß ein Masse-zu-Nennweite-Verhältnis des Meßaufnehmers, definiert durch ein Verhältnis der Leermasse des Meßaufnehmers zur nominellen Nennweite des Meßaufnehmers kleiner als 2 kg/mm, insb. kleiner als 1 kg/mm und/oder größer als 0.5 kg/mm, ist.

Nach einer einundfünfzigsten Ausgestaltung des Meßaufnehmers der Erfindung ist ferner vorgesehen, daß das erste und das zweite Meßrohr zumindest hinsichtlich eines Materials, aus dem deren Rohrwände jeweils bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer zweiundfünfzigsten Ausgestaltung der Erfindung ist ferner vorgesehen, daß das dritte und das vierte Meßrohr zumindest hinsichtlich eines Materials, aus dem deren Rohrwände jeweils bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer dreiundfünfzigsten Ausgestaltung des Meßaufnehmers der Erfindung ist ferner vorgesehen, daß alle vier Meßrohre hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich sind.

Nach einer vierundfünfzigsten Ausgestaltung des Meßaufnehmers der Erfindung ist ferner vorgesehen, daß ein Material, aus dem die Rohrwände der vier Meßrohre zumindest anteilig bestehen, Titan und/oder Zirconium und/oder, beispielsweise rostfreier und/oder hochfester, Stahl ist, Duplexstahl und/oder Superduplexstahl, oder Hastelloy ist.

Nach einer fünfundfünfzigsten Ausgestaltung des Meßaufnehmers der Erfindung ist ferner vorgesehen, daß die Erregeranordnung mittels eines, insb. elektrodynamischen und/oder Schwingungen des ersten Meßrohrs relativ zum zweiten Meßrohr differentiell anregenden, ersten Schwingungserregers gebildet ist. Im besonderen ist die Erregeranordnung mittels eines, beispielsweise elektrodynamischen und/oder Schwingungen des dritten Meßrohrs relativ zum vierten Meßrohr differentiell anregenden, zweiten Schwingungserregers gebildet. Hierbei ist ferner vorgesehen, daß der erste und zweite Schwingungserreger elektrisch seriell verschaltet sind, derart, daß ein gemeinsames Treibersignal gemeinsame Schwingungen des ersten und dritten Meßrohrs relativ zum zweiten und vierten Meßrohr anregt. Die Schwingungserreger der Erregeranordnung können beispielsweise mittels eines am ersten Meßrohr gehaltenen Per-manentmagneten und einer von dessen Magnetfeld durchfluteten, am zweiten Meßrohr gehaltenen Zylinderspule ge-bildet ist, und wobei der zweite Schwingungserreger mittels eines am dritten Meßrohr gehaltenen Permanentmagneten und einer von dessen Magnetfeld durchfluteten, am vierten Meßrohr gehaltenen Zylinderspule gebildet ist.

Nach einer ersten Weiterbildung der Erfindung umfaßt der Meßaufnehmer weiters eine auf Vibrationen, insb. mittels der Erregeranordnung angeregten Biegeschwingungen, der Meßrohre reagierende, beispielsweise elektro-dynamische und/oder mittels einander baugleicher Schwingungssensoren gebildete, Sensoranordnung zum Erzeugen von Vibrationen, insb. Biegeschwingungen, der Meßrohre repräsentierenden Schwingungssignalen.

Nach einer ersten Ausgestaltung der ersten Weiterbildung der Erfindung ist vorgesehen, daß die Sensoranordnung mittels eines, insb. elektrodynamischen und/oder Schwingungen des ersten Meßrohrs relativ zum zweiten Meßrohr differentiell erfassenden, einlaßseitigen ersten Schwingungssensors sowie eines, insb. elektrodynamischen und/oder Schwingungen des ersten Meßrohrs relativ zum zweiten Meßrohr differentiell erfassenden, auslaßseitigen zweiten Schwingungssensors gebildet ist, insb. derart, daß eine einer Länge eines zwischen dem ersten Schwingungssensor und dem zweite Schwingungssensor verlaufenden Abschnitts einer Biegelinie des ersten Meßrohrs entsprechende Meßlänge des Meßaufnehmers mehr als 500 mm, insb. mehr als 600 mm und/oder weniger als 1200 mm, beträgt, und/oder daß ein Kaliber-zu-Meßlänge-Verhältnis des Meßaufnehmers, definiert durch ein Verhältnis eines Kalibers des ersten Meßrohrs zur Meßlänge des Meßaufnehmers, mehr als 0.05, insb. mehr als 0.09, beträgt. Ferner können der erste Schwingungssensor mittels eines am ersten Meßrohr gehaltenen Permanentmagneten und einer von dessen Magnetfeld durchfluteten, am zweiten Meßrohr gehaltenen Zylinderspule gebildet sein, und der zweite Schwingungssensor mittels eines am ersten Meßrohr gehaltenen Permanentmagneten und einer von dessen Magnetfeld durch-fluteten, am zweiten Meßrohr gehaltenen Zylinderspule gebildet sein.

Nach einer zweiten Ausgestaltung der ersten Weiterbildung der Erfindung ist ferner vorgesehen, daß die Sensoranordnung mittels eines, insb. elektrodynamischen und/oder Schwingungen des ersten Meßrohrs relativ zum zweiten Meßrohr differentiell erfassenden, einlaßseitigen ersten Schwingungssensors, eines, insb. elektrodynamischen und/oder Schwingungen des ersten Meßrohrs relativ zum zweiten Meßrohr differentiell erfassenden, auslaßseitigen zweiten Schwingungssensors, eines, insb. elektrodynamischen und/oder Schwingungen des dritten Meßrohrs relativ zum vierten Meßrohr differentiell erfassenden, einlaßseitigen dritten Schwingungssensors sowie eines, insb. elektrodynamischen und/oder Schwingungen des dritten Meßrohrs relativ zum vierten Meßrohr differentiell erfassenden, auslaßseitigen vierten Schwingungssensors gebildet ist, insb. derart, daß eine einer Länge eines zwischen dem ersten Schwingungssensor und dem zweite Schwingungssensor verlaufenden Abschnitts einer Biegelinie des ersten Meßrohrs entsprechende Meßlänge des Meßaufnehmers mehr als 500 mm, insb. mehr als 600 mm und/oder weniger als 1200 mm, beträgt, und/oder daß ein Kaliber-zu-Meßlänge-Verhältnis des Meßaufnehmers, definiert durch ein Verhältnis eines Kalibers des ersten Meßrohrs zur Meßlänge des Meßaufnehmers, mehr als 0.05, insb. mehr als 0.09, beträgt. Hierbei können in vorteilhafter Weise der erste und dritte Schwingungssensor elektrisch seriell derart verschaltet sein, daß ein gemeinsames Schwingungssignal gemeinsame einlaßseitige Schwingungen des ersten und dritten Meßrohrs relativ zum zweiten und vierten Meßrohr repräsentiert, und/oder der zweite und vierte Schwingungssensor elektrisch seriell derart verschaltet sein, daß ein gemeinsames Schwingungssignal gemeinsame auslaßseitige Schwingungen des ersten und dritten Meßrohrs relativ zum zweiten und vierten Meßrohr repräsentiert. Alternativ oder in Ergänzung können ferner der erste Schwingungssensor mittels eines am ersten Meßrohr gehaltenen Permanentmagneten und einer von dessen Magnetfeld durchfluteten, am zweiten Meßrohr gehaltenen Zylinderspule, und der zweite Schwingungssensor mittels eines am ersten Meßrohr gehaltenen Permanentmagneten und einer von dessen Magnetfeld durchfluteten, am zweiten Meßrohr gehaltenen Zylinderspule gebildet sein, und/oder können der dritte Schwingungssensor mittels eines am dritten Meßrohr gehaltenen Permanentmagneten und einer von dessen Magnetfeld durchfluteten, am vierten Meßrohr gehalterten Zylinderspule und der vierte Schwingungssensor mittels eines am dritten Meßrohr gehaltenen Permanentmag-neten und einer von dessen Magnetfeld durchfluteten, am vierten Meßrohr gehaltenen Zylinderspule gebildet sein.

Nach einer zweiten Weiterbildung des Meßaufnehmers der Erfindung umfaßt dieser weiters: ein, sowohl vom ersten Strömungsteiler als auch vom zweiten Strömungsteiler beabstandet, auslaßseitig an jedem der vier Meßrohre fixiertes, beispielsweise zum ersten Kopplerelement erster Art im wesentlichen baugleiches, zweites Kopplerelement erster Art zum Einstellen von Eigenfrequenzen natürlicher Schwingungsmoden der Rohranordnung, beispielsweise von Biegeschwingungsmoden.

Nach einer ersten Ausgestaltung der zweiten Weiterbildung des Meßaufnehmers der Erfindung ist ferner vorgesehen, daß jedes der beiden Kopplerelemente erster Art symmetrisch bezüglich der ersten gedachten Längsschnittebene der Rohranordnung ist.

Nach einer zweiten Ausgestaltung der zweiten Weiterbildung des Meßaufnehmers der Erfindung ist ferner vorgesehen, daß jedes der beiden Kopplerelemente erster Art symmetrisch bezüglich der zweiten gedachten Längsschnittebene der Rohranordnung ist.

Nach einer dritten Ausgestaltung der zweiten Weiterbildung des Meßaufnehmers der Erfindung ist ferner vorgesehen, daß beiden Kopplerelemente erster Art symmetrisch bezüglich einer sowohl zur ersten gedachten Längsschnittebene als auch zur zweiten gedachten Längsschnittebene der Rohranordnung jeweils senkrechten gedachte Querschnittsebene der Rohranordnung im Meßaufnehmer angeordnet sind.

Nach einer vierten Ausgestaltung der zweiten Weiterbildung des Meßaufnehmers der Erfindung ist ferner vorgesehen, daß die beiden Kopplerelemente erster Art äquidistant bezüglich einer sowohl zur ersten gedachten Längsschnittebene als auch zur zweiten gedachten Längsschnittebene der Rohranordnung jeweils senkrechten gedachte Querschnittsebene der Rohranordnung im Meßaufnehmer angeordnet sind.

Nach einer fünften Ausgestaltung der zweiten Weiterbildung des Meßaufnehmers der Erfindung ist ferner vorgesehen, daß die beiden Kopplerelemente erster Art bezüglich einer sowohl zur ersten gedachten Längsschnittebene als auch zur zweiten gedachten Längsschnittebene der Rohranordnung jeweils senkrechten gedachte Querschnittsebene der Rohranordnung parallel verlaufend im Meßaufnehmer angeordnet sind.

Nach einer sechsten Ausgestaltung der zweiten Weiterbildung des Meßaufnehmers der Erfindung ist ferner vorgesehen, daß jedes der beiden Kopplerelemente erster Art jeweils so ausgebildet und im Meßaufnehmer plaziert ist, daß es bezüglich der ersten gedachten Längsschnittebene der Rohranordnung und/oder bezüglich der zweiten gedachten Längsschnittebene der Rohranordnung symmetrisch ist.

Nach einer siebenten Ausgestaltung der zweiten Weiterbildung des Meßaufnehmers der Erfindung ist ferner vorgesehen, daß sowohl das erste Kopplerelement erster Art als auch das zweite Kopplerelement erster Art jeweils mittels plattenförmiger Teileelemente gebildet ist.

Nach einer achten Ausgestaltung der zweiten Weiterbildung des Meßaufnehmers der Erfindung ist ferner vorgesehen, daß jedes der beiden Kopplerelemente erster Art jeweils zumindest abschnittsweise gewölbt ist, beispielsweise in derart, daß es bezüglich einer zwischen dem ersten Kopplerelement erster Art und dem zweiten Kopplerelement erster Art verlaufende, sowohl zur ersten gedachten Längsschnittebene der Rohranordnung als auch zur zweiten gedachten Längsschnittebene der Rohranordnung jeweils senkrechten, gedachten Querschnittsebene der Rohranordnung jeweils zumindest abschnittsweise konvex sind.

Nach einer neunten Ausgestaltung der zweiten Weiterbildung des Meßaufnehmers der Erfindung ist ferner vorgesehen, daß sowohl das erste Kopplerelement erster Art als auch das zweite Kopplerelement erster Art bezüglich einer zwischen dem ersten Kopplerelement erster Art und dem zweiten Kopplerelement erster Art verlaufende, sowohl zur ersten gedachten Längsschnittebene der Rohranordnung als auch zur zweiten gedachten Längsschnittebene der Rohranordnung jeweils senkrechten, gedachten Querschnittsebene der Rohranordnung, nämlich von der Querschnittsebene aus gesehen, jeweils zumindest abschnittsweise konvex sind.

Nach einer zehnten Ausgestaltung der zweiten Weiterbildung des Meßaufnehmers der Erfindung ist ferner vorgesehen, daß das erste Kopplerelement erster Art und das zweite Kopplerelement erster Art mittels wenigstens eines, insb. eine translatorische Bewegung des Verformungskörpers des ersten Kopplerelements erster Art relativ zum zweiten Kopplerelement erster Art in Richtung einer sowohl zur ersten gedachten Längsschnittebene als auch zur zweiten gedachten Längsschnittebene parallelen Längsachse unterdrückenden und/oder stab- oder plattenförmigen, Verbindungselements miteinander mechanisch verbunden sind.

Nach einer dritten Weiterbildung des Meßaufnehmers der Erfindung umfaßt dieser weiters: ein, beispielsweise plattenförmiges, erstes Kopplerelement zweiter Art, das zum Bilden von einlaßseitigen Schwingungsknoten sowohl für Vibrationen, beispielsweise Biegeschwingungen, des ersten Meßrohrs als auch für dazu gegengleiche Vibrationen, beispielsweise Biegeschwingungen, des zweiten Meßrohrs einlaßseitig am ersten Meßrohr und am zweiten Meßrohr fixiert ist, beispielsweise sowohl an einem sich zwischen dem ersten Strömungsteiler und dem ersten Kopplerelement erster Art erstreckenden Rohrsegment des ersten Meßrohrs als auch an einem sich zwischen dem ersten Strömungsteiler und dem ersten Kopplerelement erster Art erstreckenden Rohrsegment des zweiten Meßrohrs; ein, beispielsweise plattenförmiges und/oder zum ersten Kopplerelement zweiter Art baugleiches und/oder zum ersten Kopplerelement zweiter Art paralleles, zweites Kopplerelement zweiter Art, das zum Bilden von auslaßseitigen Schwingungsknoten sowohl für Vibrationen, beispielsweise Biegeschwingungen, des ersten Meßrohrs als auch für dazu gegengleiche Vibrationen, beispielsweise Biegeschwingungen, des zweiten Meßrohrs auslaßseitig am ersten Meßrohr und am zweiten Meßrohr fixiert ist, beispielsweise sowohl an einem sich zwischen dem zweiten Strömungsteiler und dem zweiten Kopplerelement erster Art erstreckenden Rohrsegment des ersten Meßrohrs als auch an einem sich zwischen dem zweiten Strömungsteiler und dem zweiten Kopplerelement erster Art erstreckenden Rohrsegment des zweiten Meßrohrs; ein, beispielsweise plattenförmiges und/oder zum ersten Kopplerelement zweiter Art baugleiches und/oder zum zweiten Kopplerelement zweiter Art paralleles, drittes Kopplerelement zweiter Art, das zum Bilden von einlaßseitigen Schwingungsknoten sowohl für Vibrationen, beispielsweise Biegeschwingungen, des dritten Meßrohrs als auch für dazu gegengleiche Vibrationen, beispielsweise Biegeschwingungen, des vierten Meßrohrs sowohl vom ersten Strömungsteiler als auch vom zweiten Strömungsteiler beabstandet einlaßseitig am dritten Meßrohr und am vierten Meßrohr fixiert ist, beispielsweise sowohl an einem sich zwischen dem ersten Strömungsteiler und dem ersten Kopplerelement erster Art erstreckenden Rohrsegment des dritten Meßrohrs als auch an einem sich zwischen dem ersten Strömungsteiler und dem ersten Kopplerelement erster Art erstreckenden Rohrsegment des vierten Meßrohrs; sowie ein, beispielsweise plattenförmiges und/oder zum ersten Kopplerelement zweiter Art baugleiches und/oder zum ersten Kopplerelement zweiter Art paralleles, viertes Kopplerelement zweiter Art, das zum Bilden von auslaßseitigen Schwingungsknoten sowohl für Vibrationen, beispielsweise Biegeschwingungen, des dritten Meßrohrs als auch für dazu gegengleiche Vibrationen, beispielsweise Biegeschwingungen, des vierten Meßrohrs sowohl vom ersten Strömungsteiler als auch vom zweiten Strömungsteiler wie auch vom ersten Kopplerelement beabstandet auslaßseitig am dritten Meßrohr und am vierten Meßrohr fixiert ist, beispielsweise sowohl an einem sich zwischen dem zweiten Strömungsteiler und dem zweiten Kopplerelement erster Art erstreckenden Rohrsegment des dritten Meßrohrs als auch an einem sich zwischen dem zweiten Strömungsteiler und dem zweiten Kopplerelement erster Art erstreckenden Rohrsegment des vierten Meßrohrs. Der Meßaufnehmer gemäß dieser Ausgestaltung der Erfindung kann beispielsweise dadurch hergestellt werden, daß zunächst sowohl das erste Kopplerelement zweiter Art als auch das zweite Kopplerelement zweiter Art jeweils am ersten Meßrohr und am zweiten Meßrohr zum Herstellen eines ersten Meßrohrpakets fixiert werden sowie sowohl das dritte Kopplerelement zweiter Art als auch das vierte Kopplerelement zweiter Art jeweils am dritten Meßrohr und am vierten Meßrohr zum Herstellen eines zweiten Meßrohrpakets fixiert werden; und daß hernach erst sowohl das erste Kopplerelement erster Art als auch das zweite Kopplerelement erster Art jeweils an wenigstens einem, beispielsweise auch jedem, der Meßrohre des ersten Meßrohrpakets und an wenigstens einem, beispielsweise auch jedem, der Meßrohre des zweiten Meßrohrpakets fixiert werden.

Nach einer ersten Ausgestaltung des Meßsystems der Erfindung ist ferner vorgesehen, daß die vier Meßrohre im Betrieb, angeregt von der Erregeranordnung, simultan Biegeschwingungen, beispielsweise in einem Biegeschwingungsgrundmode erster Art, ausführen. Diese Ausgestaltung der Erfindung weiterbildend ist ferner vorgesehen, daß die Erregeranordnung Schwingungen der Meßrohre, nicht zuletzt auch Biegeschwingungen im ersten Biegeschwingungsmode erster Art, dadurch bewirkt, daß eine mittels des ersten Schwingungserregers generierte, auf das erste Meßrohr wirkende Erregerkraft zu einer mittels des ersten Schwingungserregers zeitgleich generierten, auf das zweite Meßrohr wirkenden Erregerkraft entgegengerichtet, beispielsweise auch gegengleich, ist.

Nach einer zweiten Ausgestaltung des Meßsystems der Erfindung ist ferner vorgesehen, daß die Erregeranordnung wenigstens einen, beispielsweise differentiell, auf das erste und zweite Meßrohr wirkenden, beispielsweise daran fixierten und/oder elektro-dynamischen, ersten Schwingungserreger zum Konvertieren von mittels der Umformer-Elektronik in die Erregeranordnung eingespeister elektrischer Erregerleistung in, beispielsweise mit wenigstens einer mit einer einer Eigenfrequenz eines natürlichen Schwingungsmodes der Rohranordnung entsprechenden Signalfrequenz veränderliche und/oder periodische, Biegeschwingungen des ersten Meßrohrs und in zu nämlichen Biegeschwingungen des ersten Meßrohrs bezüglich der zweiten gedachten Längsschnittebene der Rohranordnung gegengleiche Biegeschwingungen des zweiten Meßrohrs bewirkende mechanische Erregerkräfte aufweist. Diese Ausgestaltung der Erfindung weiterbildend ist ferner vorgesehen, daß der erste Schwingungserreger mittels eines am ersten Meßrohr, beispielsweise im Bereich eines Meßrohr-Scheitelpunktes, gehalterten Permanentmagneten und einer von dessen Magnetfeld durchfluteten, am zweiten Meßrohr, beispielsweise im Bereich eines Meßrohr-Scheitelpunktes, gehalterten Zylinderspule gebildet ist. Alternativ oder in Ergänzung kann Erregeranordnung weiters auch einen, beispielsweise differentiell, auf das dritte und vierte Meßrohr wirkenden, beispielsweise daran fixierten und/oder elektro-dynamischen und/oder zum ersten Schwingungserreger baugleichen und/oder mit dem ersten Schwingungserreger elektrisch seriell verschalteten, zweiten Schwingungserreger zum Konvertieren von mittels der Umformer-Elektronik in die Erregeranordnung eingespeister elektrischer Erregerleistung in, beispielsweise mit wenigstens einer mit einer einer Eigenfrequenz eines natürlichen Schwingungsmodes der Rohranordnung entsprechenden Signalfrequenz veränderliche und/oder periodische, Biegeschwingungen des dritten Meßrohrs und zu nämlichen Biegeschwingungen des dritten Meßrohrs bezüglich der zweiten gedachten Längsschnittebene der Rohranordnung gegengleiche Biegeschwingungen des vierten Meßrohrs bewirkende mechanische Erregerkräfte aufweisen. Der zweite Schwingungserreger kann hierbei mittels eines am dritten Meßrohr, beispielsweise im Bereich eines Meßrohr-Scheitelpunktes, gehalterten Permanentmagneten und einer von dessen Magnetfeld durchfluteten, am vierten Meßrohr, beispielsweise im Bereich eines Meßrohr-Scheitelpunktes, gehalterten Zylinderspule gebildet sein.

Nach einer dritten Ausgestaltung des Meßsystems der Erfindung ist ferner vorgesehen, daß die Umformer-Elektronik mittels wenigstens eines, beispielsweise mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten elektrischen Treibersignals, beispielsweise mit einer veränderlichen maximalen Spannungshöhe und/oder einer veränderlichen maximalen Stromstärke, elektrische Erregerleistung in die Erregeranordnung einspeist; und daß die Erregeranordnung die, nicht zuletzt auch von einer Spannungshöhe und einer Stromstärke des wenigstens einen Treibersignals abhängige, elektrische Erregerleistung zumindest anteilig sowohl in Biegeschwingungen des ersten Meßrohrs und zu den Biegeschwingungen des ersten Meßrohrs bezüglich der zweiten gedachten Längsschnittebene der Rohranordnung gegengleiche Biegeschwingungen des zweiten Meßrohrs als auch in Biegeschwingungen des dritten Meßrohrs und zu den Biegeschwingungen des dritten Meßrohrs bezüglich der zweiten gedachten Längsschnittebene der Rohranordnung gegengleiche Biegeschwingungen des vierten Meßrohrs wandelt. Diese Ausgestaltung der Erfindung weiterbildend ist ferner vorgesehen, daß das wenigstens eine Treibersignal dem ersten Schwingungserreger zugeführt ist, etwa derart, daß dessen Zylinderspule von einem von einer mittels des ersten Treibersignals bereitgestellten veränderlichen ersten Erregerspannung getriebenen ersten Erregerstrom durchflossen ist. Alternativ oder in Ergänzung kann das wenigstens eine Treibersignal eine Vielzahl von Signalkomponenten mit voneinander verschiedener Signalfrequenz aufweisen, wobei wenigstens eine der Signalkomponenten, etwa eine hinsichtlich einer Signalleistung dominierende Signalkomponente, des ersten Treibersignals eine einer Eigenfrequenz eines natürlichen Schwingungsmodes der Rohranordnung, beispielsweise des Biegeschwingungsmodes erster Art, in dem jedes der vier Meßrohre Biegeschwingungen ausführt, entsprechende Signalfrequenz aufweist.

Nach einer vierten Ausgestaltung des Meßsystems der Erfindung ist ferner vorgesehen, daß die Umformer-Elektronik anhand von in der Erregeranordnung umgesetzter elektrischer Erregerleistung einen die Viskosität des strömenden Mediums repräsentierenden Viskosität-Meßwert generiert; und/oder daß die Umformer-Elektronik anhand von vom Meßaufnehmer gelieferten Schwingungssignalen einen die Massendurchflußrate des strömenden Mediums repräsentierenden Massendurchfluß-Meßwert und/oder einen die Dichte des strömenden Mediums repräsentierenden Dichte-Meßwert generiert.

Ein Grundgedanke der Erfindung besteht darin, mittels eines via Verbindungsstreben mit jedem der Meßrohre gekoppelten, als Rahmenkonstruktion bzw. Stabverband ausgebildeten Verformungskörper ein der Einstellung von Eigenfrequenzen natürlicher Schwingungsmoden einer Rohranordnung der in Rede stehenden Art eines Meßaufnehmers vom Vibrationstyp dienendes Kopplerelement bereitzustellen, das eine für den V-Mode wirksame Federsteifigkeit aufweist, die von einer für den X-Mode wirksamen Federsteifigkeit in einem solchen Maße verschieden ist, daß im Ergebnis ein ausreichend hoher Frequenzabstand zwischen den Eigenfrequenzen des V- und des X-Mode, mithin eine gegenseitige Separierung des V- und des X-Modes herbeigeführt ist. Dies nicht zuletzt auch in der Weise, daß der schlußendlich als Nutzmode dienende V-Mode selbst möglichst wenig beeinflußt, nämlich gegenüber seiner ursprünglichen, also bei nämlicher Rohranordnung ohne Kopplerelement auftretenden, Eigenfrequenz möglichst wenig verändert ist. Dies wird vorliegenden auch dadurch erreicht, daß das Kopplerelement in Form einer Zusammenschaltung mehrerer, etwa in Form von

Stab- bzw. Plattenfedern ausgeführten, Teilfederelementen gebildet ist, die in den Richtungen der Hauptachsen der Rohranordnung, nämlich in Richtung der Querachse (X-Richtung), der Hochachse (Y-Richtung) oder der Längsachse (Z-Richtung), bzw. um nämliche Hauptachsen mit teilweise in erheblichem Maße unterschiedlichen Biege- und/oder Zugsteifigkeiten wirken.

Ein Vorteil der Erfindung besteht zudem u.a. darin, daß durch den Einsatz eines oder mehrerer Kopplerelemente der in Rede stehenden Art die Verwendungsmöglichkeiten von Rohranordnungen mit vier gekrümmten Meßrohren in Meßaufnehmern vom Vibrationstyp auf einfache, gleichwohl sehr effektive Weise drastisch verbessert werden. Durch die Verwendung gebogener Meßrohre wiederum können dauerhafte mechanische Spannungen, beispielsweise infolge thermisch bedingter Ausdehnung der Meßrohre oder infolge von seitens der Rohranordnung in den Meßaufnehmer eingetragener Einspannkräfte, innerhalb der Rohranordnung weitgehend vermieden oder zumindest sehr niedrig gehalten und damit einhergehend die Meßgenauigkeit wie auch die strukturelle Integrität des jeweiligen Meßaufnehmers auch bei extrem heißen Medien bzw. zeitlich stark schwankenden Temperaturgradienten innerhalb der Rohranordnung sicher erhalten werden. Darüberhinaus können aufgrund der Symmetrieeigenschaften der Rohranordnung auch jene durch Biegeschwingungen gebogener Meßrohre Querkräfte weitgehend neutralisiert werden, die - wie u.a. in den eingangs erwähnten EP-A 1 248 084 und US-B 73 50 421 diskutiert - im wesentlich senkrecht zu den Längsschnittebenen des jeweiligen Meßaufnehmers bzw. dessen Rohranordnung, nämlich in Y-Richtung, wirken und für die Meßgenauigkeit von Meßaufnehmern vom Vibrationstyp durchaus schädlich sein können. Zudem konnte bei Meßaufnehmern der vorgenannten Art im Vergleich zu konventionellen Meßaufnehmern mit nur einem oder zwei gebogenen Meßrohren eine erhöhte Schwingungsgüte des Meßaufnehmers insgesamt, dies nicht zuletzt auch infolge einer erheblich geringer ausfallenden Dissipation von Schwingungsenergie aus dem Meßaufnehmer in die daran angeschlossene Rohrleitung, etwa infolge von eigentlich unerwünschten Deformationen der Strömungsteiler, festgestellt werden. Darüberhinaus weisen die Schwingungen der Meßrohre, insb. auch jene im V-Mode, von Meßaufnehmern gemäß der vorliegenden Erfindung auch eine - im Vergleich zu herkömmlichen Meßaufnehmer - erheblich verringerte Druckstoß- bzw. Schallabhängigkeit auf.

Ein weiterer Vorteil der Erfindung ist ferner auch darin zu sehen, daß durch die Verwendung von, beispielsweise als Verband einzelner stab- oder plattenförmiger Teilfedern ausgebildeten, Kopplerelementen der in Rede stehenden Art durchaus auch auf herkömmliche Rohrformen zurückgegriffen werden kann und infolgedessen auch überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen. Im Ergebnis dessen können auch die Herstellkosten insgesamt auf einem Niveau gehalten werden, das mit dem herkömmlicher Meßaufnehmer vom Vibrationstyp gleicher nomineller Nennweite etwa gleich ist. Insofern ist ein weiterer Vorteil der Erfindung darin zu sehen, daß dadurch nicht nur eine Möglichkeit geschaffen wird, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen, sondern zudem auch ökonomisch sinnvoll realisiert werden können.

Der erfindungsgemäße Meßaufnehmer ist daher nicht nur für das Messen von Massenströmen in konventionellen Meßbereichen von einigen wenigen Kilogramm/Stunde bis zu einigen 100t/h, sondern auch zum Messen von strömungsfähigen Medien geeignet, die in einer Rohrleitung mit einem Kaliber von größer 150 mm, insb. von 300 mm oder darüber, geführt sind. Zu dem ist der Meßaufnehmer auch zum Messen auch solcher Massendurchflüsse geeignet, die zumindest zeitweise größer als 1000 t/h sind, insb. zumindest zeitweise mehr als 1500 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:

Fign. 1, 2  ein, beispielsweise als Coriolis-Durchfluss/Dichte/Viskositäts-Meßgerät dienendes, In-Line-Meßgerät in perspektivischen, teilweise auch geschnittenen, Seitenansichten;

Fign. 3a, b  eine Projektion des In-line-Meßgerät gemäß Fig. 1 in zwei verschiedenen Seitenansichten;

Fig. 4a  in perspektivischer Seitenansicht einen Meßaufnehmer vom Vibrationstyp mit einer mittels vier gebogenen Meßrohren sowie wenigstens einem dem Einstellen von Eigenfrequenzen der Rohranordnung dienenden Kopplerelement gebildeten Rohranordnung, eingebaut in ein In-line-Meßgerät gemäß Fig. 1;

Fig. 4b  in perspektivischer Seitenansicht die Rohranordnung gemäß Fig. 4a;

Fig. 4c  in einer vergrößerter perspektivischer Seitenansicht das Kopplerelement der Rohranordnung gemäß Fig. 4a bzw. 4b;

Fign. 5a, b  eine Projektion des Meßaufnehmers gemäß Fig. 4a in zwei verschiedenen Seitenansichten;

Fign. 6a, b  Projektionen einer Rohranordnung gemäß Fig. 4b zwei verschiedenen Seitenansichten;

Fign. 7a, b  schematisch Schwingungsmoden (V-Mode; X-Mode) einer Rohranordnung gemäß Fig. 4a, 4b, jeweils in Projektion auf eine gedachte Querschnittsebene nämlicher Rohranordnung;

Fign. 8a, b  schematisch Schwingungsmoden (V-Mode; X-Mode) eines dem Einstellen von Eigenfrequenzen der Rohranordnung dienenden Kopplerelements gemäß Fig. 4a, 4b, jeweils in Projektion auf eine gedachte Querschnittsebene nämlicher Rohranordnung;

Fign. 9  schematisch das dem Einstellen von Eigenfrequenzen der Rohranordnung dienenden Kopplerelements gemäß Fig. 4a, 4b bzw. 8a, 8b, in Projektion auf eine gedachte Längsschnittebene nämlicher Rohranordnung; und

Fig. 10  in perspektivischer Seitenansicht eine weitere Variante einer für Bildung eines In-line-Meßgeräts gemäß Fig. 1 geeigneten Rohranordnung.

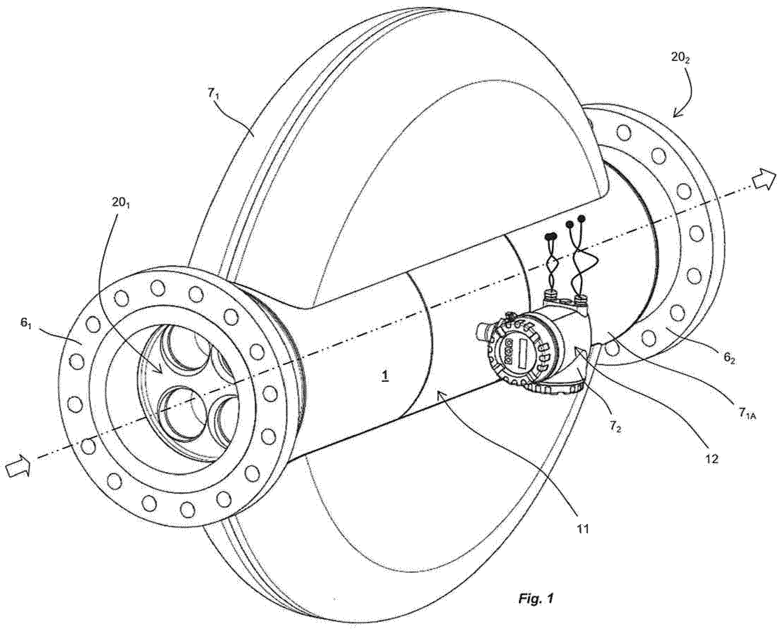

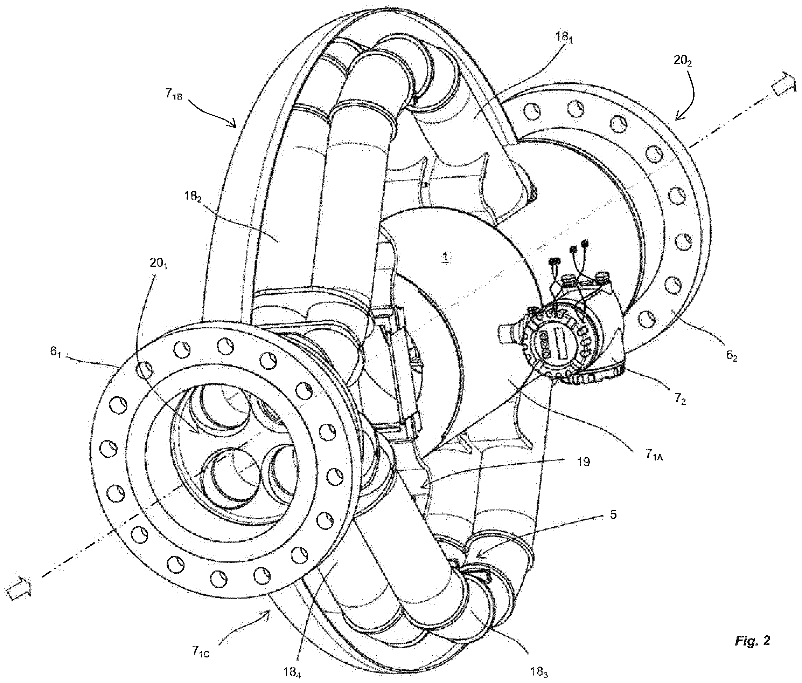

In den Fig. 1, 2 ist ein, insb. als Coriolis-Massedurchfluß- und/oder Dichte-Meßgerät ausgebildetes, Meßsystem 1 schematisch dargestellt, das im nicht zuletzt dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das Meßsystem 1 ggf. auch dazu verwendet werden eine Dichte $\rho$ und/oder eine Viskosität $\eta$ des Mediums zu messen. Im besonderen ist das Meßsystem 1 dafür vorgesehen, solche Medien, wie z.B. Erdöl, Erdgas oder andere petrochemische Stoffe, zu messen, die in einer Rohrleitung mit einem Kaliber (= nominelle Nennweite des Meßsystems) von größer als 250 mm, insb. einem Kaliber von 300 mm oder darüber, strömen. Nicht zuletzt ist das Meßsystem auch dafür vorgesehen, strömende Medien der vorgenannten Art zu messen, die mit einer Massendurchflußrate von größer als 1000 t/h, insb. von größer 1500 t/h, strömen gelassen sind; es kann aber auch ohne weiteres so dimensioniert sein, daß es auch für die Messung bei kleinerer Massendurchflußraten, etwa auch von weniger als 10 t/h, bzw. für Rohrleitungen mit einem kleineren Kaliber, etwa auch von weniger als 100 mm, geeignet ist.

Das - hier als In-Line-Meßgerät, nämlich in den Verlauf der Rohrleitung einsetzbares Meßgerät, in Kompaktbauweise gezeigte - Meßsystem 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen dargestellte - Umformer-Elektronik 12 zum Ansteuern des Meßaufnehmers und zum Auswerten von vom Meßaufnehmer gelieferten Schwingungssignalen. In vorteilhafter Weise kann die, beispielsweise mittels einem oder mehreren Mikroprozessoren und/oder mittels eines oder mehreren digitalen Signalprozessoren gebildete Umformer-Elektronik 12 z.B. so ausgelegt sein, daß sie im Betrieb des Meßsystems 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren kann die Umformer-Elektronik 12 so ausgelegt sein, daß sie von einer externen Energieversorgung, beispielsweise auch über das vorgenannte Feldbussystem, gespeist werden kann. Für den Fall, daß das Meßsystem 1 für eine Ankopplung an ein Feldbus- oder ein anderes Kommunikationssystem vorgesehen ist, kann die, beispielsweise auch vor Ort und/oder via Kommunikationssystem reprogrammierbare, Umformer-Elektronik 12 zu dem eine entsprechende Kommunikations-Schnittstelle für eine Datenkommunikation aufweisen, z.B. zum Senden der Meßdaten an die bereits erwähnte speicherprogrammierbare Steuerung oder ein übergeordnetes Prozeßleitsystem und/oder zum Empfangen von Einstelldaten für das Meßsystem.

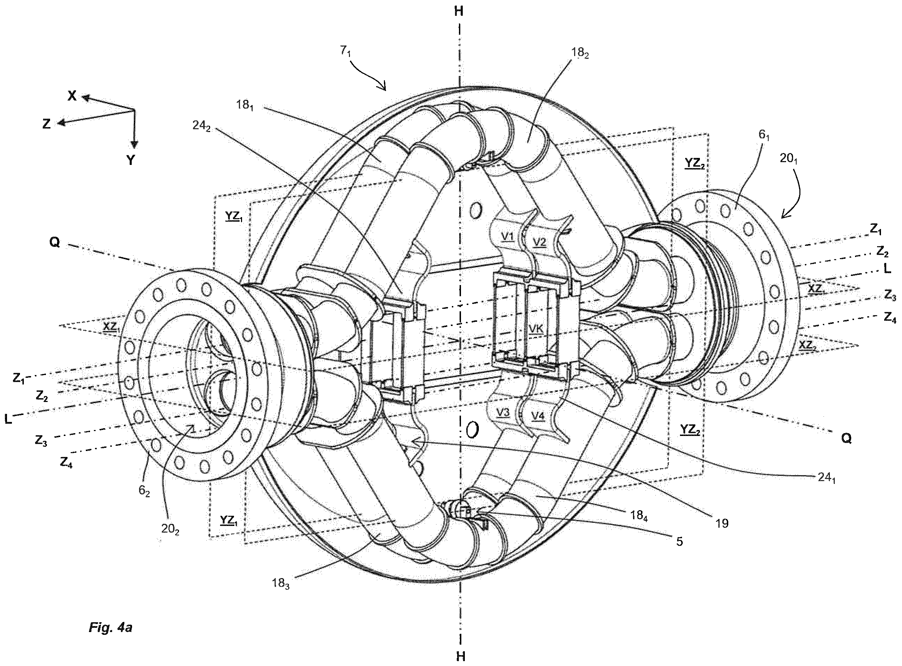

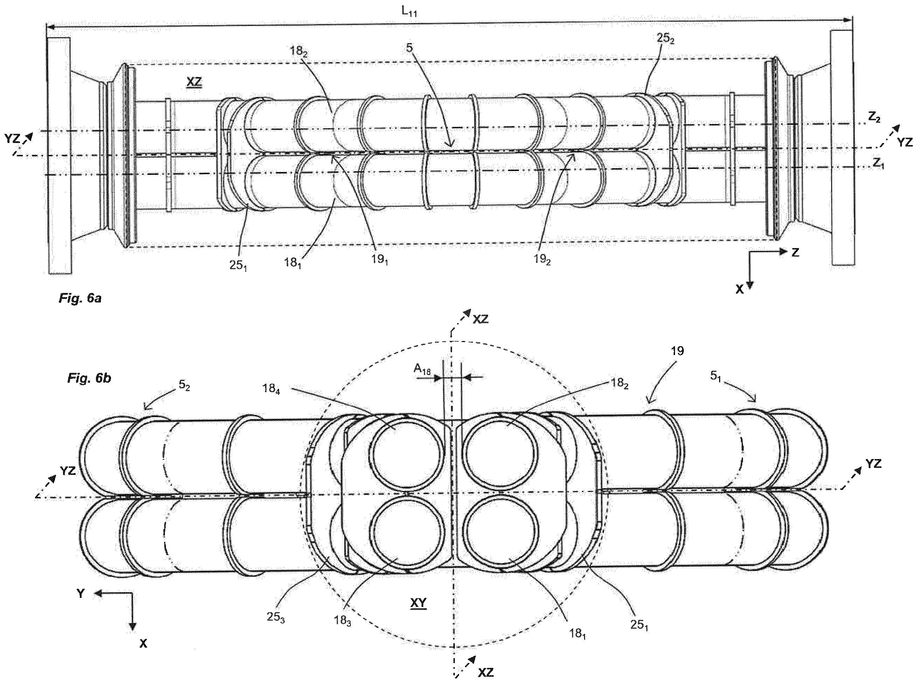

In den Fig. 4a, 4b, 5a, 5b, 6a, 6b ist in unterschiedlichen Darstellungen ein Ausführungsbeispiel für einen für das Meßsystem 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer vom jeweils zu messenden, etwa pulvrigen, flüssigen, gasförmigen oder dampfförmigen, Medium durchströmten - hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. von der Massenduchflußrate abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Umformer-Elektronik entsprechend implementierten Auswerte-Verfahren in der dem Fachmann bekannten Weise z.B. die m Massendurchflußrate, mithin der Massendurchfluß, und/oder die Dichte und/oder die Viskosität des Mediums gemessen werden.

Der Meßaufnehmer 11 weist ein - hier teilweise im wesentlichen rohrförmiges, mithin auch außen teilweise kreiszylindrisches - Aufnehmer-Gehäuse $7_1$ auf, in dem weitere, dem Erfassen der wenigstens einen Meßgröße dienende Komponenten des Meßaufnehmers 11 vor äußeren Umwelteinflüssen, mithin Staub oder Spritzwasser oder auch allfällig auf den Meßaufnehmer von außen einwirkenden Kräften etc., geschützt untergebracht sind. Ein einlaßseitiges erstes Gehäuseende des Aufnehmer-Gehäuses $7_1$ ist mittels eines einlaßseitigen ersten Strömungsteilers $20_1$ und ein aus- laßseitiges zweites Gehäuseende des Aufnehmer-Gehäuses $7_1$ ist mittels auslaßseitigen zweiten Strömungsteilers $20_2$ gebildet. Jeder der beiden, insoweit als integraler Bestandteil des Gehäuses ausgebildeten, Strömungsteiler $20_1$, $20_2$ weist genau vier jeweils voneinander beabstandeten, beispielsweise kreiszylindrische oder kegelförmige bzw. jeweils als Innenkonus ausgebildete, Strömungsöffnungen $20_{1A}$, $20_{1B}$, $20_{1C}$, $20_{1D}$ bzw. $20_{2A}$, $20_{2B}$, $20_{2C}$, $20_{2D}$ auf. Darüberhinaus ist jeder der, beispielsweise aus Stahl gefertigten, Strömungsteiler $20_1$, $20_2$ jeweils mit einem, beispielsweise aus Stahl gefertigten, Flansch $6_1$ bzw. $6_2$ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche $6_1$, $6_2$ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche $6_{1A}$ bzw. $6_{2A}$ auf. Ein Abstand zwischen den beiden Dichtflächen $6_{1A}$, $6_{2A}$ beider Flansche definiert somit praktisch eine Einbaulänge, $L_{11}$, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite $D_{11}$ sowie den dafür ggf. einschlägigen Industrienormen dimensioniert, die einem Kaliber der Rohrleitung, in deren Verlauf der Meßaufnehmer einzusetzen ist, entspricht. Infolge der für den Meßaufnehmer im besondern angestrebten großen Nennweite beträgt dessen Einbaulänge $L_{11}$

gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche $6_1$, $6_2$ können, wie auch aus Fig. 4a ohne weiteres ersichtlich und wie bei derartigen Meßaufnehmer durchaus üblich, dafür möglichst nah an den Strömungsöffnungen der Strömungsteiler $20_1$, $20_2$ angeordnet sein, um so einen möglichst kurzen Vor- bzw. Auslaufbereich in den Strömungsteilern zu schaffen und somit insgesamt eine möglichst kurze Einbaulänge $L_{11}$ des Meßaufnehmers, insb. von weniger als 3000 mm, zu schaffen. Für einen möglichst kompakten Meßaufnehmer mit einem - nicht zuletzt auch bei angestrebt hohen Massendurchflußraten von über 1000 t/h - sind nach einer anderen Ausgestaltung der Erfindung die Einbaulänge und die nominelle Nennweite des Meßaufnehmers aufeinander abgestimmt so bemessen, daß ein Nennweite-zu-Einbaulänge-Verhältnis $D_{11}/L_{11}$ des Meßaufnehmers, definiert durch ein Verhältnis der nominellen Nennweite $D_{11}$ des Meßaufnehmers zur Einbaulänge $L_{11}$ des Meßaufnehmers kleiner als 0.3, insb. kleiner als 0.2 und/oder größer als 0.1, ist. Im hier gezeigten Ausführungsbeispiel ist zumindest ein Mittelsegment $7_{1A}$ des Aufnehmer-Gehäuses $7_1$ mittels eines geraden - hier auch kreiszylindrischen und zunächst dreiteiligen - Rohres gebildet, so daß zur Fertigung des Aufnehmer-Gehäuses $7_1$ beispielsweise auch standardisierte, mithin kostengünstige, geschweißte oder gegossenen Standardrohre, beispielsweise aus Stahlguß oder geschmiedetem Stahl, verwendet werden können. Wie aus der Zusammenschau der Fig. 1 und 2 ferner ohne weiteres ersichtlich, kann das Mittelsegment $7_{1A}$ des Aufnehmer-Gehäuses $7_1$ hierbei beispielsweise auch mittels eines in etwa das Kaliber der anzuschließenden Rohrleitung aufweisenden, mithin mit einer nominellen Nennweite $D_{11}$ des Meßaufnehmers korrespondierenden, Rohrs gebildet sein, insb. einem hinsichtlich Kaliber, Wandstärke und Material der anzuschließenden Rohrleitung entsprechenden und insoweit auch hinsichtlich des erlaubten Betriebsdrucks entsprechend angepaßten Rohr. Nicht zuletzt für den Fall, daß das rohrförmige Mittelsegment wie auch die mit dem jeweiligen Flansch verbundenen Strömungsteiler im Vor- bzw. Auslaufbereich jeweils den gleichen Innendurchmesser aufweisen, kann das Aufnehmer-Gehäuses zudem auch in der Weise gebildet werden, daß an die Enden des das Mittelsegment bildenden Rohrs die Flansche angeformt oder angeschweißt sind, und daß die Strömungsteiler mittels, insb. von den Flanschen etwas beabstandet, an die Innenwand orbital und/oder mittels Laser angeschweißten, die Strömungsöffnungen aufweisenden Platten gebildet sind.

Zum Führen des zumindest zeitweise durch Rohrleitung und Meßaufnehmer strömenden Mediums umfaßt der erfindungsgemäße Meßaufnehmer ferner eine Rohranordnung mit vier im Aufnehmer-Gehäuse 10 schwingfähig gehalterte gebogene, beispielsweise zumindest abschnittsweise kreisbogenförmige und/oder wie hier schematisch dargestellt - zumindest abschnittsweise V-förmige, Meßrohre $18_1$, $18_2$, $18_3$, $18_4$. Die vier - hier gleichlangen sowie paarweise parallelen - Meßrohre kommunizieren jeweils mit der an den Meßaufnehmer angeschlossenen Rohrleitung und werden im Betrieb zumindest zeitweise, insb. auch simultan, in wenigstens einem für Ermittlung der physikalischen Meßgröße geeigneten, aktiv angeregten Schwingungsmode - dem sogenannten Nutzmode - vibrieren gelassen. Von den vier Meßrohren münden ein erstes Meßrohr $18_1$ mit einem einlaßseitigen ersten Meßrohrende in eine erste Strömungsöffnung $20_{1A}$ des ersten Strömungsteilers $20_1$ und mit einem auslaßseitigen zweiten Meßrohrende in eine erste Strömungsöffnung $20_{2A}$ des zweiten Strömungsteilers $20_2$, ein zweites Meßrohr $18_2$ mit einem einlaßseitigen ersten Meßrohrende in eine zweite Strömungsöffnung $20_{1B}$ des ersten Strömungsteilers $20_1$ und mit einem auslaßseitigen zweiten Meßrohrende in eine zweite Strömungsöffnung $20_{2B}$ des zweiten Strömungsteilers $20_2$, ein drittes Meßrohr $18_3$ mit einem einlaßseitigen ersten Meßrohrende in eine dritte Strömungsöffnung $20_{1C}$ des ersten Strömungsteilers $20_1$ und mit einem auslaßseitigen zweiten Meßrohrende in eine dritte Strömungsöffnung $20_{2C}$ des zweiten Strömungsteilers $20_2$ und ein viertes Meßrohr $18_4$ mit einem einlaßseitigen ersten Meßrohrende in eine vierte Strömungsöffnung $20_{1D}$ des ersten Strömungsteilers $20_1$ und mit einem auslaßseitigen zweiten Meßrohrende in eine vierte Strömungsöffnung $20_{2D}$ des zweiten Strömungsteilers $20_2$. Die vier Meßrohre $18_1$, $18_2$, $18_3$, $18_4$ sind somit unter Bildung strömungstechnisch parallel geschalteter Strömungspfade an die, insb. baugleichen, Strömungsteiler $20_1$, $20_2$ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre $18_1$, $18_2$, $18_3$, $18_4$ lediglich mittels nämlicher Strömungsteiler $20_1$, $20_2$ im Aufnehmer-Gehäuse $7_1$ - hier nämlich an dessen Mittelsegment $7_{1A}$ - schwingfähig gehaltert sind. Als Material für die Rohrwände der Meßrohre eignet sich beispielsweise rostfreier, ggf. auch hochfester, Edelstahl, Titan, Zirkonium oder Tantal bzw. damit gebildete Legierungen oder auch Superlegierungen, wie etwa Hastelloy, Inconel etc.. Darüber hinaus kann als Material für die vier Meßrohre $18_1$, $18_2$, $18_3$, $18_4$ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze.

Alternativ oder in Ergänzung sind nach einer weiteren Ausgestaltung der Erfindung zumindest das erste und das zweite Meßrohr $18_1$, $18_2$ hinsichtlich des Materials, aus dem deren Rohrwände bestehen, und/oder hinsichtlich ihrer geometrischen Rohr-Abmessungen, insb. einer Meßrohrlänge, eines Rohr-Außendurchmessers, einer Rohrwandstärke und/oder eines Kalibers, mithin hinsichtlich eines von Kaliber und Wandstärke jedes der Meßrohre jeweils bestimmten Rohrquerschnitts, baugleich ausgeführt. Ferner sind auch zumindest das dritte und das vierte Meßrohr $18_3$, $18_4$ hinsichtlich des Materials, aus dem deren Rohrwände bestehen, und/oder hinsichtlich ihrer geometrischen Rohr-Abmessungen, insb. hinsichtlich einer Meßrohrlänge, eines Rohr-Außendurchmessers, einer Rohrwandstärke und/oder eines Kalibers, baugleich, so daß im Ergebnis die vier Meßrohre $18_1$, $18_2$, $18_3$, $18_4$ zumindest paarweise im wesentlichen baugleich ausgebildet sind. Vorzugsweise sind die vier Meßrohre $18_1$, $18_2$, $18_3$, $18_4$ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers, einer Form der jeweiligen Biegelinie und/oder eines Kalibers, baugleich realisiert; dies im besonderen derart, daß die vier Meßrohre jeweils den gleichen Rohrquerschnitt aufweisen, nämlich daß sowohl das zweite Meßrohr als auch das dritte Meßrohr und das vierte Meßrohr jeweils ein Kaliber, das jeweils gleich einem Kaliber, $D_{18}$, des ersten Meßrohrs ist, sowie jeweils eine Wandstärke, die gleich einer Wandstärke, $h_{18}$, des ersten Meßrohrs ist, mithin sowohl das zweite Meßrohr als auch das dritte Meßrohr und das vierte Meßrohr jeweils einen Außendurchmesser der gleich einem Außendurchmesser, $D_{18}+2 \cdot h_{18}$, des ersten Meßrohrs ist, aufweisen, so daß auch ein, von Kaliber und Wandstärke abhängiges, Flächenträgheitsmoment jedes der Meßrohre und - bei Verwendung auch des gleichen Materials für alle vier Meßrohre - sowohl das zweite Meßrohr als auch das dritte Meßrohr und das vierte Meßrohr jeweils eine vom vom Material des jeweiligen Meßrohrs Elastizitätsmodul sowie vom jeweiligen Flächenträgheitsmoment abhängige Biegesteifigkeit, die jeweils gleich der Biegesteifigkeit, $E_{18} \cdot J_{18}$, des ersten Meßrohrs ist, bzw. eine Leermasse, die gleich einer Leermasse, $M_{18}$, des ersten Meßrohrs ist, aufweisen. Im Ergebnis dessen ist für diesen Fall zumindest auch eine minimale Biegeschwingungs-Resonanzfrequenz jedes der vier - leeren oder gleichmäßig von einem homogenen Medium durchströmten - Meßrohre $18_1$, $18_2$, $18_3$, $18_4$ im wesentlichen gleich den jeweiligen minimalen Biegeschwingungs-Resonanzfrequenzen der verbleibenden anderen Meßrohre.

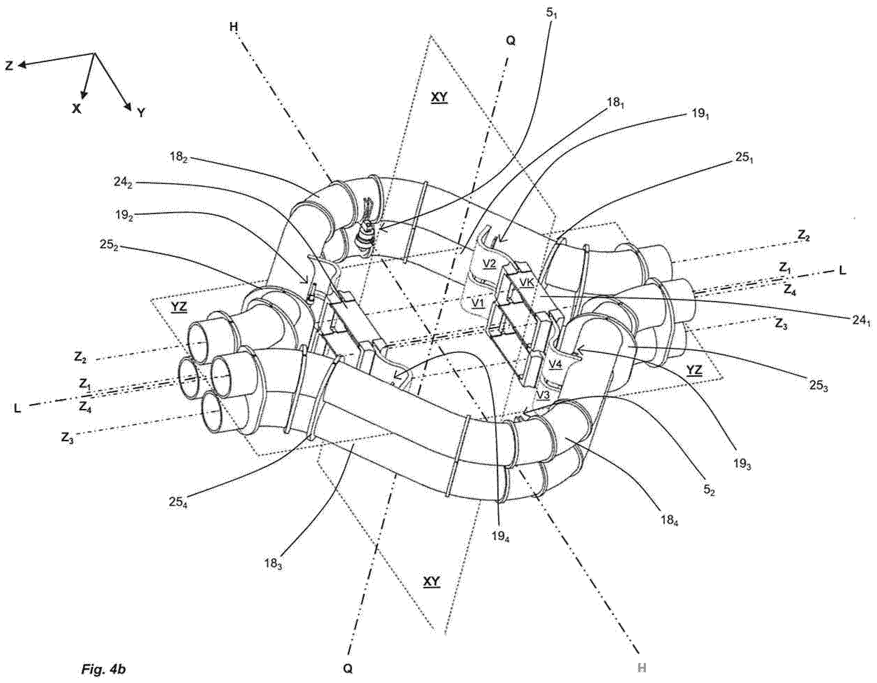

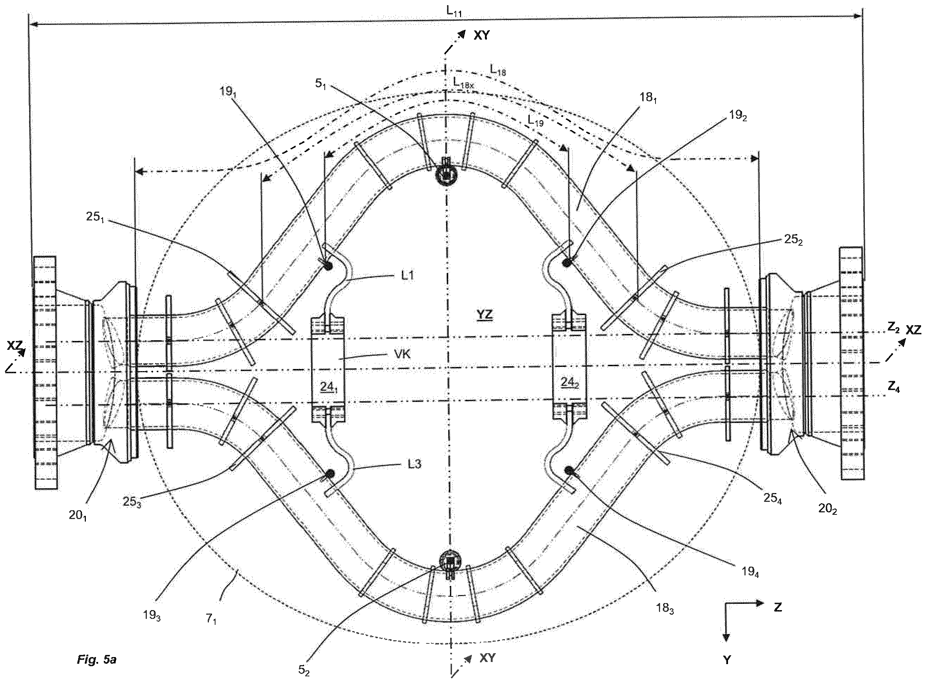

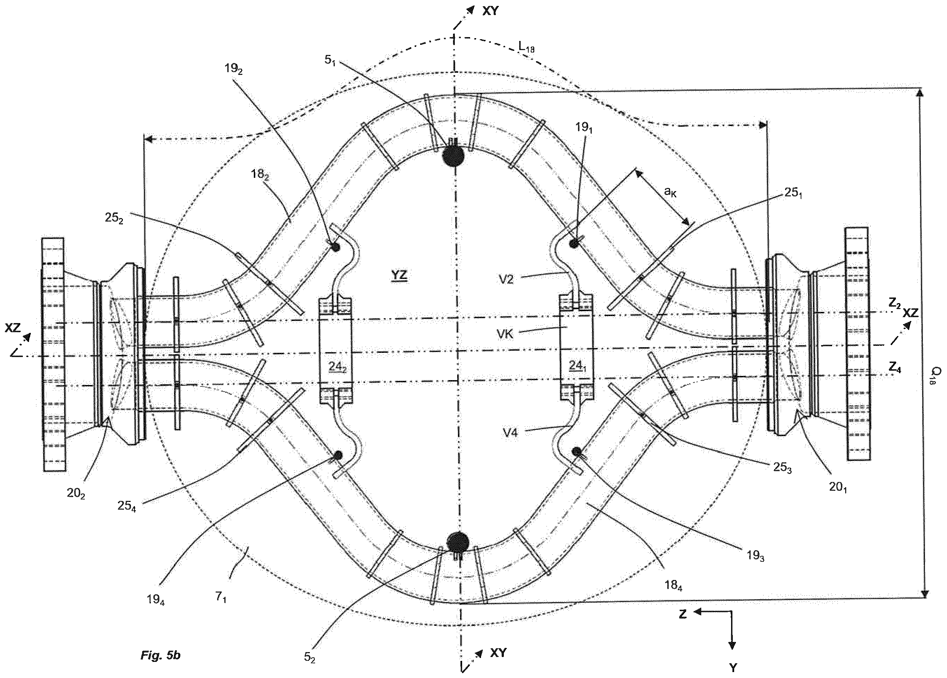

Beim erfindungsgemäßen Meßaufnehmer sind die Meßrohre - wie auch aus der Zusammenschau der Fig. 2, 4a und 4b ohne weiteres ersichtlich - ferner so ausgebildet und im Meßaufnehmer angeordnet, daß die Rohranordnung eine sowohl zwischen dem ersten Meßrohr $18_1$ und dem dritten Meßrohr $18_3$ als auch zwischen dem zweiten Meßrohr $18_2$ und dem vierten Meßrohr $18_4$ liegende erste gedachte Längsschnittebene XZ aufweist, bezüglich der die Rohranordnung spiegelsymmetrisch ist, und daß die Rohranordnung weiters eine zu deren gedachter erster Längsschnittebene XZ senkrechte, sowohl zwischen dem ersten Meßrohr $18_1$ und zweiten Meßrohr $18_2$ als auch zwischen dem dritten Meßrohr $18_3$ und vierten Meßrohr $18_4$ verlaufende zweite gedachte Längsschnittebene YZ aufweist, bezüglich der die Rohranordnung gleichfalls spiegelsymmetrisch ist. Im Ergebnis dessen sind nicht nur durch allfällige thermisch bedingte Ausdehnung der Meßrohre innerhalb der Rohranordnung generierte mechanische Spannungen minimiert, sondern können auch durch die Biegeschwingungen der gebogenen Meßrohre innerhalb der Rohranordnung allfällig induzierte, im wesentlichen senkrecht zur Schnittlinie der beiden vorgenannten gedachten Längsschnittebenen wirkende Querkräfte weitgehend neutralisiert werden, nicht zuletzt auch jene, u.a. auch in den eingangs erwähnten EP-A 1 248 084 und US-B 73 50 421 erwähnten, Querkräfte, die im wesentlichen senkrecht zur ersten gedachten Längsschnittebene XZ gerichtet sind. Wie nicht zuletzt auch aus den Fig. 4a, 4b, 5a, 5b ersichtlich, weist im hier gezeigten Ausführungsbeispiel jedes der vier Meßrohre jeweils einen Meßrohr-Scheitelpunkt, definiert als größter senkrechter Abstand des jeweiligen Meßrohres von der ersten gedachten Längsschnittebene XZ, auf. Im übrigen weist die die Rohranordnung, wie auch aus der Zusammenschau der Fig. 4a-6b ohne weiteres ersichtlich, eine sowohl zur ersten gedachten Längsschnittebene XZ als auch zur zweiten gedachten Längsschnittebene YZ jeweils senkrechte gedachte Querschnittebene XY auf. Gemäß einer vorteilhaften Ausgestaltung der Erfindung ist die Rohranordnung ferner so ausgebildet, daß ein Massenschwerpunkt der Rohranordnung in der gedachten Querschnittsebene XY liegt bzw. daß die Rohranordnung bezüglich der gedachten Querschnittsebene XY spiegelsymmetrisch ist, etwa derart, daß die gedachte Querschnittsebene XY jedes der vier Meßrohre in dessen jeweiligen Meßrohr-Scheitelpunkt schneidet.

Zur weiteren Symmetrisierung des Meßaufnehmers und insoweit auch zur weiteren Vereinfachung von dessen Aufbau sind die beiden Strömungsteiler $20_1$, $20_2$ gemäß einer weiteren Ausgestaltung der Erfindung ferner so ausgebildet und so im Meßaufnehmer angeordnet, daß, wie auch in den Fig. 4a und 4b schematisch dargestellt, eine die erste Strömungsöffnung $20_{1A}$ des ersten Strömungsteilers $20_1$ mit der ersten Strömungsöffnung $20_{2A}$ des zweiten Strömungs-teilers $20_2$ imaginär verbindende gedachte erste Verbindungsachse $Z_1$ des Meßaufnehmers parallel zu einer die zweite Strömungsöffnung $20_{1B}$ des ersten Strömungsteilers $20_1$ mit der zweiten Strömungsöffnung $20_{2B}$ des zweiten Strö-mungsteilers $20_2$ imaginär verbindende gedachten zweiten Verbindungsachse $Z_2$ des Meßaufnehmers verläuft, und daß eine die dritte Strömungsöffnung $20_{1C}$ des ersten Strömungsteilers $20_1$ mit der dritten Strömungsöffnung $20_{2C}$ des zweiten Strömungsteilers $20_2$ imaginär verbindende gedachte dritten Verbindungsachse $Z_3$ des Meßaufnehmers parallel zu einer die vierte Strömungsöffnung $20_{1D}$ des ersten Strömungsteilers $20_1$ mit der vierten Strömungsöffnung $20_{2B}$ des zweiten Strömungsteilers $20_2$ imaginär verbindende gedachten vierten Verbindungsachse $Z_4$ des Meßaufnehmers ver-läuft. Wie in der Fig. 4a und 4b gezeigte, sind die Strömungsteiler ferner so ausgebildet und im Meßaufnehmer so angeordnet, daß die Verbindungsachsen $Z_1$, $Z_2$, $Z_3$, $Z_4$ auch zu einer mit der Rohrleitung im wesentlichen fluchtenden und/oder mit vorgenannter Schnittlinie der beiden gedachten Längsschnittebenen XZ, YZ der Rohranordnung koinzidente Hauptströmungsachse L des Meßaufnehmers parallel sind. Desweiteren können die beiden Strömungsteiler $20_1$, $20_2$ zudem auch so ausgebildet und so im Meßaufnehmer angeordnet sein, daß eine erste gedachte Längsschnittebene $XZ_1$ des Meßaufnehmers, innerhalb der die erste gedachte Verbindungsachse $Z_1$ und die zweite gedachte Verbindungs-achse $Z_2$ verlaufen, parallel zu einer zweiten gedachten Längsschnittebene $XZ_2$ des Meßaufnehmers ist, innerhalb der die gedachte dritte Verbindungsachse $Z_3$ und die gedachte vierte Verbindungsachse $Z_4$ verlaufen. Zudem sind die Meßrohre in vorteilhafter Wiese ferner so angeordnet, daß die Rohranordnung zwischen dem zweiten Meßrohr und dem vierten Meßrohr einen, letztlich auch von einem minimalen Abstand zwischen der zweiten und vierten Strömungsöffnung des ersten Strömungsteilers bzw. der zweiten und vierten Strömungsöffnung des zweiten Strömungsteilers bestimmten, minimalen Abstand aufweist, der gleich einem, letztlich von einem minimalen Abstand zwischen der ersten und dritten Strömungsöffnung des ersten Strömungsteilers bzw. der ersten und dritten Strömungsöffnung des zweiten Strömungsteilers bestimmten, minimalen Abstand, $A_{18}$, zwischen dem ersten Meßrohr und dem dritten Meßrohr ist,

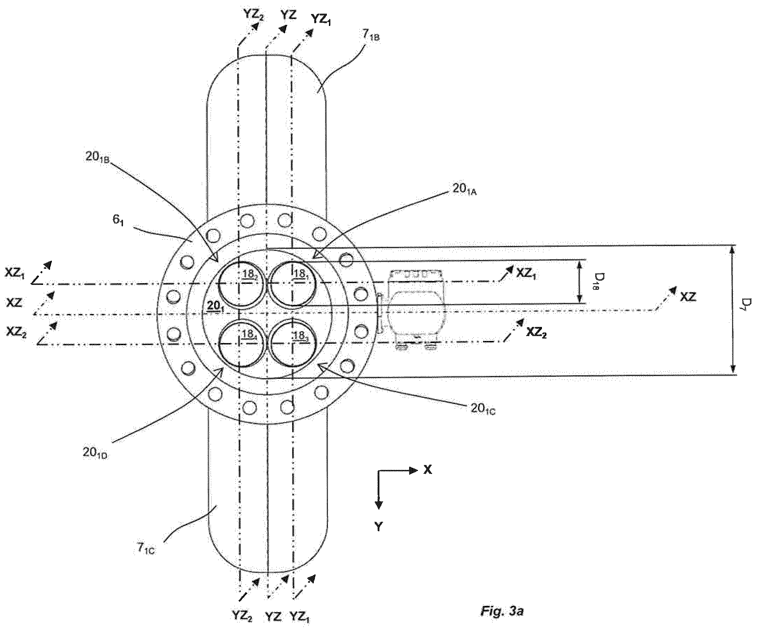

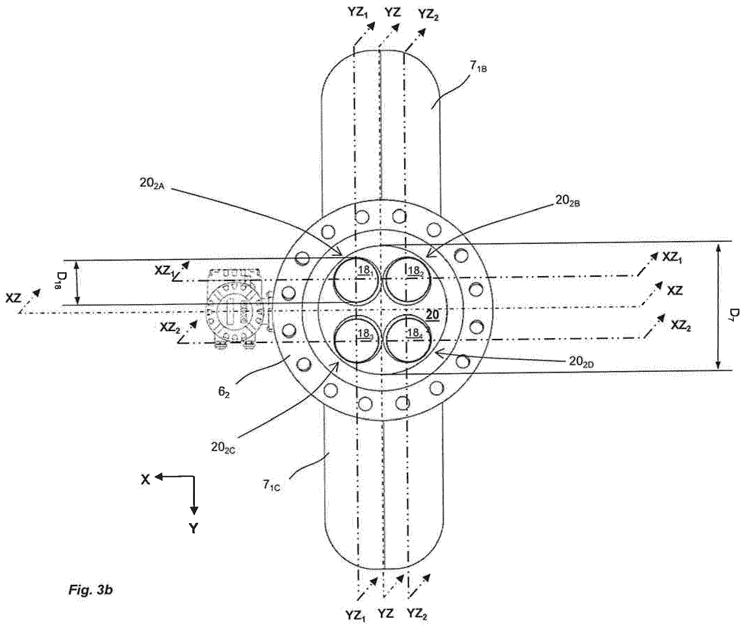

Darüberhinaus sind die Meßrohre gemäß einer weiteren Ausgestaltung der Erfindung ferner so ausgebildet und so im Meßaufnehmer angeordnet, daß die gedachte erste Längsschnittebene XZ der Rohranordnung, wie u.a. auch aus der Zusammenschau der Fig. 3a und 4a ersichtlich, zwischen der vorgenannten ersten gedachten Längsschnittebene $XZ_1$ des Meßaufnehmers und der vorgenannten zweiten gedachten Längsschnittebene $XZ_2$ des Meßaufnehmers liegt, beispielsweise auch so, daß die erste Längsschnittebene XZ der Rohranordnung parallel zur ersten und zweiten Längsschnittebene $XZ_1,XZ_2$ des Meßaufnehmers ist. Ferner sind die Meßrohre so ausgebildet und im Meßaufnehmer angeordnet, daß gleichermaßen auch die zweite gedachte Längsschnittebene YZ der Rohranordnung zwischen der dritten gedachten Längsschnittebene $YZ_1$ des Meßaufnehmers und der vierten gedachten Längsschnittebene $YZ_2$ des Meßaufnehmers verläuft, etwa derart, daß die zweite gedachte Längsschnittebene YZ der Rohranordnung parallel zur dritten gedachten Längsschnittebene $YZ_1$ des Meßaufnehmers und parallel zur vierten gedachten Längsschnittebene $YZ_2$ des Meßaufnehmers ist. Im hier gezeigten Ausführungsbeispiel ist die Rohranordnung, wie aus der Zusammenschau der Fig. 4a, 4b, 5a, 5b und 6a ohne weiteres ersichtlich, ferner so ausgebildet und so im Aufnehmergehäuse plaziert, daß im Ergebnis nicht nur die gemeinsame Schnittlinie der ersten und zweiten gedachten Längsschnittebenen XZ, YZ der Rohranordnung parallel bzw. koinzident zur Längsachse L ist, sondern auch eine gemeinsame Schnittlinie der ersten Längsschnittebene XZ und der Querschnittsebene XY parallel zu einer zur Längsachse L senkrechten gedachten Querachse Q des Meßaufnehmers und eine gemeinsame Schnittlinie der zweiten Längsschnittebene YZ und der Querschnittsebene XY parallel zu einer zur Längsachse L senkrechten gedachten Hochachse H des Meßaufnehmers sind.

Gemäß einer weiteren vorteilhaften Ausgestaltung der Erfindung sind die Strömungsöffnungen des ersten Strömungsteilers $20_1$ ferner so angeordnet, daß jene gedachten Flächenschwerpunkte, die zu den - hier kreisförmigen - Querschnittsflächen der Strömungsöffnungen des ersten Strömungsteilers gehören, die Eckpunkte eines gedachten Rechteck oder eines gedachten Quadrats, bilden, wobei nämliche Querschnittsflächen wiederum in einer gemeinsamen gedachten, senkrecht zu einer - beispielsweise innerhalb der ersten Längsschnittebene XZ der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den Längsschnittebenen des Meßaufnehmers senkrechten Querschnittebene des ersten Strömungsteilers liegen. Ferner sind auch die Strömungsöffnungen des zweiten Strömungsteilers $20_2$ so angeordnet, daß zu - hier ebenfalls kreisförmigen - Querschnittsflächen der Strömungsöffnungen des zweiten Strömungsteilers $20_2$ zugehörige gedachte Flächenschwerpunkte die Eckpunkte eines gedachten Rechtecks bzw. Quadrats bilden, wobei nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des zweiten Strömungsteilers liegen. Gemäß einer weiteren Ausgestaltung der Erfindung sind die Meßrohre so gebogen und so im Meßaufnehmer angeordnet, daß ein Kaliber-zu-Höhe-Verhältnis $D_{18}/Q_{18}$ der Rohranordnung, definiert durch ein Verhältnis des Kalibers, $D_{18}$, des ersten Meßrohrs zu einer maximalen seitlichen Ausdehnung $Q_{18}$ der Rohranordnung, gemessen von einem Scheitelpunkt des ersten Meßrohrs zu einem Scheitelpunkt des dritten Meßrohrs bzw. gemessen von einem Scheitelpunkt des zweiten Meßrohrs zu einem Scheitelpunkt des vierten Meßrohrs, mehr als 0.05, insb. mehr als 0.07 und/oder weniger als 0.35, insb. weniger als 0.2, beträgt.

Zwecks der Realisierung eines möglichst kompakten Meßaufnehmers, nicht zuletzt auch für den erwähnten Fall, daß dieser eine vergleichsweise große nominelle Nennweite von 250 mm oder mehr aufweisen soll, und/oder daß die Meßrohre seitlich vergleichsweise weitausladend sind, kann das Aufnehmer-Gehäuse $7_1$, wie aus der Zusammenschau der Fig. 1 und 2 ferner ohne weiteres ersichtlich, in vorteilhafter Weise ferner dadurch gebildet sein, daß das Aufnehmer-Gehäuse $7_1$ mittels eines - hier zwecks vereinfachter Handhabung beispielsweise zunächst dreiteiligen, also aus drei einzelnen Segmente zusammengefügtes - entsprechende seitliche Ausnehmungen aufweisenden Rohres, das - wie bereits angedeutet - in etwa das Kaliber der anzuschließenden Rohrleitung aufweist, mithin mit einer nominellen Nennweite $D_{11}$ des Meßaufnehmers korrespondiert, sowie seitlich an dem schlußendlich das Mittelssegment des Aufnehmergehäuses bildenden Rohr fixierten, etwa angeschweißten, seitlich aus dem Mittelssegment herausragende Segmente der Meßrohre umgebende, insb. baugleichen, Gehäusekappen $7_{1B}$, $7_{1C}$ gebildet sein. Von den beiden Gehäusekappen $7_{1B}$, $7_{1C}$ können -wie aus der Zusammenschau der Fig. 1-4a ersichtlich - z.B. eine erste Gehäusekappe $7_{1B}$ über ein auf einer ersten Seite aus dem - nicht zuletzt auch als Traggestell für die Rohranordnung dienenden, mithin als Trägerrohr ausgebildeten - Mittelsegment herausragendes Segment des ersten Meßrohrs und ein auf der ersten Seite aus dem Mittelsegment herausragendes Segment des zweiten Meßrohrs und eine, etwa zur ersten Gehäusekappe baugleiche, zweite Gehäusekappe $7_{1C}$ über ein auf einer der ersten Seite gegenüberliegenden zweiten Seite aus dem Mittelsegment herausragendes Segment des dritten Meßrohrs und ein auf der zweiten Seite aus dem Mittelsegment herausragendes Segment des vierten Meßrohrs gestülpt sein. Im Ergebnis dessen sind die Meßrohre $18_1$, $18_2$, $18_3$,

$18_4$ bzw. die damit gebildete Rohranordnung des Meßaufnehmers 11 sind, wie aus der Zusammenschau der Fign. 1, 2 und 4a ohne weiteres ersichtlich vom - hier mittels des im besonderen auch als Trägerohr dienenden Mittelsegment sowie der daran seitlich fixierten zwei Gehäusekappen gebildeten - Aufnehmer-Gehäuse $7_1$ vollständig umhüllt. Für den vorgenannten Fall, daß das Aufnehmergehäuse mittels des rohrförmigen Mittelsegement und den daran seitlich fixierten Gehäusekappen gebildet ist, sind die vier Meßohre $18_1$, $18_2$, $18_3$, $18_4$ und das Aufnehmergehäuse $7_1$ nach einer weiteren Ausgestaltung der Erfindung - nicht zuletzt auch zwecks einer Minimierung der Einbaumaße des gesamten Meßaufnehmers - aufeinander abgestimmt ferner so bemessen, daß ein Trägerrohrzu-Meßrohr-Innendurchmesser-Verhältnis des Meßaufnehmers, definiert durch ein Verhältnis des größten Innendurchmessers des als Trägerrohr ausgebildeten Mittelsegments des Aufnehmergehäuses zu einem Kaliber $D_{18}$ des ersten Meßrohrs größer als 3 und/oder kleiner als 5, insb. kleiner als 4, ist.

Als Material für das Aufnehmer-Gehäuse $7_1$ können im übrigen Stähle, wie etwa Baustahl bzw. rostfreier Stahl, oder auch andere geeignete bzw. üblicherweise hierfür geeignete hochfeste Werkstoffe verwendet werden. Für die meisten Anwendungen der industriellen Meßtechnik, insb. auch in der petrochemischen Industrie, können zudem auch Meßrohre aus rostfreiem Stahl, beispielsweise auch Duplexstahl, Superduplexstahl oder einem anderen (hochfesten) Edelstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse $7_1$, die Strömungs-teiler $20_1$, $20_2$ wie auch die Rohrwände der Meßrohre $18_1$, $18_2$, $18_3$, $18_4$ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann. Überdies kann das Aufnehmer-Gehäuse $7_1$ ferner in vorteilhafter Weise auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses $7_1$ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Umformer-Elektronik 12 im Betrieb intern erzeugten Betriebsparametern möglichst frühzeitig erfaßt und signalisiert werden können. Zur Vereinfachung des Transports des Meßaufnehmers bzw. des gesamten damit gebildeten In-line-Meßgeräts können ferner, wie beispielsweise auch in der eingangs erwähnten US-B 73 50 421 vorgeschlagen, einlaßseitig und auslaßseitig am außen am Aufnehmer-Gehäuse fixierte eine Transport-Öse vorgesehen sein.

Wie bereits eingangs erwähnt, werden beim Meßaufnehmer 11 die für die Messung erforderlichen Reaktionskräfte im jeweils zu messenden Medium durch das, beispielsweise simultane, Schwingenlassen der Meßrohre $18_1$, $18_2$, $18_3$, $18_4$ in einem aktiv angeregten Schwingungsmode, dem sogenannten Nutzmode, bewirkt. Zum Anregen von Schwingungen der Meßrohre, nicht zuletzt auch denen im Nutzmode, umfaßt der Meßaufnehmer ferner eine mittels wenigstens eines auf die Meßrohre $18_1$, $18_2$, $18_3$, $18_4$ einwirkenden elektro-mechanischen, beispielsweise elektro-dynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger, mithin die damit gebildete Erregeranordnung dient hierbei im besonderen dazu, eine von der Umformer-Elektronik - etwa mittels wenigstens eines elektrischen Treibersignals - eingespeiste elektrische Erregerleistung $P_{exc}$ in solche, z.B. pulsierenden oder harmonischen, Erregerkräfte $F_{exc}$ zu konvertieren, die möglichst gleichzeitig, gleichmäßig jedoch gegensinnig auf wenigstens zwei die Meßrohre, etwa das erste und zweite Meßrohr, einwirken, ggf. auch von den beiden Meßrohre weiter auf die anderen zwei Meßrohre mechanisch gekoppelt werden, und so Schwingungen im Nutzmode bewirken. Die - durch Konvertierung von in die Erregeranordnung eingespeister elektrischer Erregerleistung $P_{exc}$ generierten - Erregerkräfte $F_{exc}$ können in dem Fachmann an und für sich bekannter Weise, z.B. mittels einer in der Umformer-Elektronik 12 vorgesehenen, letztlich das Treibersignal liefernden Betriebsschaltung eingestellt werden, etwa mittels in der Betriebsschaltung implementierten Strom- und/ oder Spannungs-Reglern hinsichtlich ihrer Amplitude und, z.B. mittels einer in Betriebsschaltung gleichfalls vorgesehenen Phasen-Regelschleife (PLL), hinsichtlich ihrer Frequenz, vgl. hierzu beispielsweise auch die US-A 48 01 897 oder die US-B 63 11 136. Gemäß einer weiteren Ausgestaltung der Erfindung ist daher ferner vorgesehen, daß die Umformer-Elektronik für die Generierung der Erregerkräfte benötigte elektrische Erregerleistung in die Erregeranordnung mittels wenigstens eines, dem Schwingungserreger, mithin der Erregeranordnung beispielsweise via Verbindungsleitungen zugeführten und/oder zumindest zeitweise periodischen, elektrischen Treibersignals einspeist, das mit wenigstens einer mit einer einer Eigenfrequenz eines natürlichen Schwingungsmodes der Rohranordnung entsprechenden Signalfrequenz veränderlich ist, etwa einem solchen, in dem jedes der vier Meßrohre, wie bei Meßaufnehmern vom Vibrationstyp mit gekrümmten Meßrohren durchaus üblich, Biegeschwingungen um eine jeweilige statische Ruhlage nach Art eines einseitig eingespannten Auslegers ausführt. Beispielsweise kann das wenigstens eine Treibersignal auch eine Vielzahl von Signalkomponenten mit voneinander verschiedener Signalfrequenz aufweisen, von denen wenigstens eine - etwa eine hinsichtlich einer Signalleistung dominierende - Signalkomponente eine einer Eigenfrequenz eines natürlichen Schwingungsmodes der Rohranordnung in dem jedes der vier Meßrohre Biegeschwingungen ausführt, beispielsweise also dem erwähnten Biegeschwingungsmode erster Art, entsprechende Signalfrequenz aufweist. Darüberhinaus kann es ferner von Vorteil sein - etwa zwecks Anpassens der eingespeisten Erregerleistung an die momentan für eine ausreichende Schwingungsamplitude tatsächlich benötige -, das wenigstens eine Treibersignal hinsichtlich einer maximalen Spannungshöhe (Spannungsamplitude) und/oder einer maximalen Stromstärke (Stromamplitude) veränderlich auszuführen - etwa derart, daß beispielsweise Zylinderspule des wenigstens einen Schwingungserregers von einem von einer mittels nämlichen Treibersignals bereitgestellten veränderlichen Erregerspannung getriebenen Erregerstrom durchflossen ist.

Ziel der aktiven Anregung der Meßrohre zu Schwingungen ist es im Besonderen, nicht zuletzt auch für den Fall, daß das mittels des Meßaufnehmers schlußendlich gebildete Meßsystem zur Messung des Massendurchflusses verwendet werden soll, mittels der im Nutzmode vibrierenden Meßrohre im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Beispielsweise können die Meßrohre $18_1$, $18_2$, $18_3$, $18_4$ mittels der daran gehalterten elektro-mechanischen Erregeranordnung zu, insb. simultanen, Biegeschwingungen, insb. auf einer momentanen mechanischen Eigenfrequenz der mittels der vier Meßrohre $18_1$, $18_2$, $18_3$, $18_4$ gebildeten Rohranordnung, angeregt werden, bei denen sie - zumindest überwiegend - lateral ausgelenkt und, wie aus der Zusammenschau der Fign. 3a, 3b, 6a, 6b, 7a, 7b für den Fachmann ohne weiteres ersichtlich, paarweise zueinander im wesentlichen gegengleich schwingen gelassen werden. Dies im besonderen derart, daß von jedem der Meßrohre $18_1$, $18_2$, $18_3$, $18_4$ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende, zu den erwähnten Verbindungsachsen $Z_1$, $Z_2$, $Z_3$, $Z_4$ jeweils parallele gedachte Schwingungsachse ausgebildet sind, wobei die vier Schwingungsachsen im hier gezeigten Ausführungsbeispiel gleichermaßen zueinander wie auch zu der die beiden Strömungsteiler imaginär verbindenden und durch einen Massenschwerpunkt des Meßaufnehmers gedachten Längsachse L des gesamten Meßaufnehmers parallel sind. Anders gesagt, können die Meßrohre, wie bei Meßaufnehmern vom Vibrationstyp mit einem oder mehr gebogenen Meßrohren durchaus üblich, jeweils zumindest abschnittsweise nach Art eines endseitig eingespannten Auslegers schwingen gelassen werden, mithin also Ausleger-Biegeschwingungen um jeweils eine zu wenigstens zwei der gedachten Verbindungsachsen $Z_1$, $Z_2$, $Z_3$, $Z_4$ parallele gedachte Schwingungsachse ausführen. Gemäß einer Ausgestaltung der Erfindung ist die Erregeranordnung ferner derart ausgebildet ist, daß damit das erste Meßrohr $18_1$ und das zweite Meßrohr $18_2$ zu bezüglich der zweiten gedachten Längsschnittebene YZ gegengleichen, insb. auch zu bezüglich der zweiten gedachten Längsschnittebene YZ symmetrischen, Biegeschwingungen und das dritte Meßrohr $18_3$ und das vierte Meßrohr $18_4$ zu bezüglich der zweiten gedachten Längsschnittebene YZ gegengleichen, insb. auch zu bezüglich der zweiten gedachten Längsschnittebene YZ symmetrischen, Biegeschwingungen anregbar sind. Alternativ oder in Ergänzung dazu ist die Erregeranordnung nach einer weiteren Ausgestaltung der Erfindung ferner derart ausgebildet, daß damit das erste Meßrohr $18_1$ und das dritte Meßrohr $18_3$ zu bezüglich der zweiten gedachten Längsschnittebene YZ gegengleichen, beispielsweise auch zu bezüglich der zweiten gedachten Längsschnittebene YZ symmetrischen, Biegeschwingungen und das zweite Meßrohr $18_2$ und das vierte Meßrohr $18_4$ zu bezüglich der zweiten gedachten Längsschnittebene YZ gegengleichen, beispielsweise zu bezüglich der zweiten gedachten Längsschnittebene YZ symmetrischen, Biegeschwingungen anregbar sind.

Gemäß einer weiteren Ausgestaltung der Erfindung sind die Meßrohre $18_1$, $18_2$, $18_3$, $18_4$ im Betrieb mittels der Erregeranordnung 5 im Nutzmode ferner zumindest anteilig, insb. überwiegend, zu Biegeschwingungen angeregt, die eine Biegeschwingungsfrequenz aufweisen, die in etwa gleich einer momentanen mechanischen Resonanzfrequenz der die vier Meßrohre $18_1$, $18_2$, $18_3$, $18_4$ umfassenden Rohranordnung, mithin einer momentanen Eigenfrequenz eines Biegeschwingungsmode der Rohranordnung entspricht, ist oder die zumindest in der Nähe einer solchen Eigen- oder Resonanzfrequenz liegt. Die momentanen mechanischen Resonanzfrequenzen von Biegeschwingungen sind dabei bekanntlich in besonderem Maße von Größe, Form und Material der Meßrohre $18_1$, $18_2$, $18_3$, $18_4$ wie auch von einer momentanen Dichte des durch die Meßrohre hindurchströmenden Mediums abhängig und kann insoweit im Betrieb des Meßaufnehmers innerhalb eines durchaus einige Kilohertz breiten NutzFrequenzbandes veränderlich sein. Bei Anregung der Meßrohre auf einer momentanen Resonanzfrequenz kann somit einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre $18_1$, $18_2$, $18_3$, $18_4$, angetrieben von der Erregeranordnung, ferner zumindest zeitweise mit im wesentlichen gleicher Schwingungsfrequenz, insb. auf jeweils ein und derselben, insoweit einer gemeinsamen, natürlichen mechanischen Eigenfrequenz, schwingen gelassen. In vorteilhafter Weise sind das Schwingungsverhalten der mittels der vier Meßrohre $18_1$, $18_2$, $18_3$, $18_4$ gebildeten Rohranordnung wie auch die die Erregeranordnung steuernden Treibersignale ferner so aufeinander abgestimmt, daß zumindest die im Nutzmode angeregten Schwingungen der vier Meßrohre $18_1$, $18_2$, $18_3$, $18_4$ so ausgebildet sind, daß das erste und das zweite Meßrohr $18_1$, $18_2$ - etwa nach Art zweier Stimmgabelzinken - zueinander im wesentlichen gegengleich, mithin zumindest in der gedachten Querschnittsebene XY mit einer gegenseitigen Phasenverschiebung von etwa 180°, schwingen und auch das dritte und das vierte Meßrohr $18_3$, $18_4$ gleichermaßen zueinander im wesentlichen gegengleich schwingen.

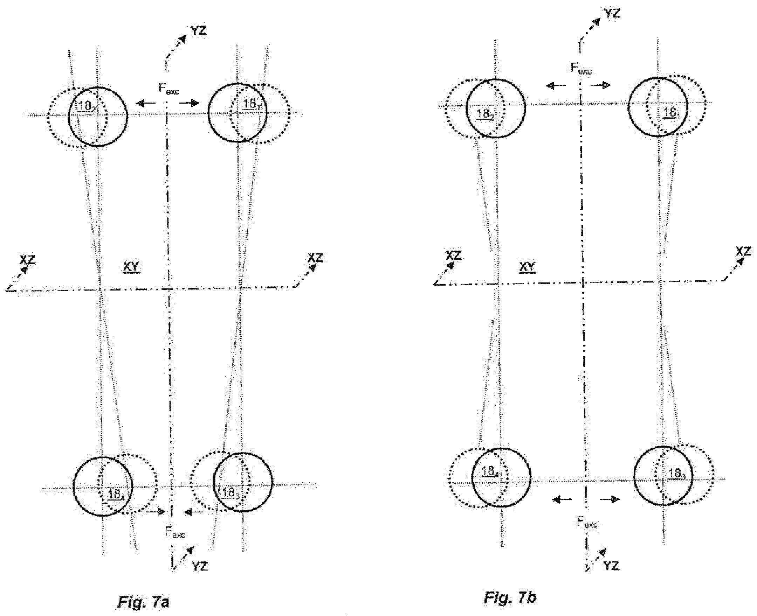

Untersuchungen an Meßsystemen mit einem Meßaufnehmer gemäß der in Rede stehenden Art haben ferner überraschender Weise ergeben, daß sich als Nutzmode, nicht zuletzt auch für die Ermittlung der Massendurchflußrate sowie der Dichte des im Meßaufnehmer geführten Mediums, im besonderen jener der Rohranordnung innewohnende natürliche - im weiteren als Biegeschwingungsgrundmode erster Art oder auch als V-Mode bezeichnete - Schwingungsmode eignet, in dem - wie auch in Fig. 7a schematisch dargestellt - das erste Meßrohr und das zweite Meßrohr bezüglich der zweiten gedachten Längsschnittebene YZ gegengleiche Biegeschwingungen um jeweils eine dem jeweiligen Meßrohr zugehörige statische Ruhelage ausführen, und in dem das dritte Meßrohr und das vierte Meßrohr bezüglich der zweiten gedachten Längsschnittebene ebenfalls gegengleiche Biegeschwingungen um jeweils eine dem jeweiligen Meßrohr zugehörige statische Ruhelage ausführen, und zwar so, daß - bezüglich der zweiten gedachten Längsschnittebene YZ - nämliche Biegeschwingungen des ersten Meßrohrs auch gegengleich zu nämlichen Biegeschwingungen des dritten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des vierten Meßrohrs sind. Die - hier ebenfalls als Ausleger-Biegeschwingungen um jeweils eine zu wenigstens zwei der gedachten Verbindungsachsen parallele gedachte Schwingungsachse ausgebildeten, die Rohranordnung in Projektion auf die Querschnittsebene XY zeitweise V-förmig erscheinen lassenden (vgl. Fig. 7a) - gegengleichen Biegeschwingungen des ersten und zweiten Meßrohrs bzw. des dritten und vierten Meßrohrs im V-Mode sind bei symmetrisch aufgebauter Rohranordnung und gleichmäßig durchströmter Rohranordnung zudem bezüglich der zweiten gedachten Längsschnittebene YZ symmetrisch ausgebildet. Die besondere Eignung des V-Modes als Nutzmode für Meßaufnehmer mit vier gebogenen Meßrohren konnte dabei nicht zuletzt auch auf die für das Schwingverhalten des Meßaufnehmers - sowohl räumlich als auch zeitlich gesehen - dabei insgesamt sehr günstig ausfallenden Spannungsverteilung im Meßaufnehmer, nicht zuletzt auch im Bereich der beiden Strömungsteiler, sowie auch auf die gleichermaßen günstig, mithin sehr gering ausfallenden schwingungsbedingten Deformierungen des Meßaufnehmers im allgemeinen, sowie der Strömungsteiler im besonderen, zurückgeführt werden.

Außer dem vorgenannten V-Mode weist die Rohranordnung zudem auch einen - im weiteren als X-Mode bezeichneten - natürlichen Biegeschwingungsmode zweiter Art auf, in dem - wie in Fig. 7b schematisch dargestellt - das erste Meßrohr und das zweite Meßrohr bezüglich der zweiten gedachten Längsschnittebene YZ gegengleiche Biegeschwingungen um die jeweils zugehörige statische Ruhelage ausführen und in dem das dritte Meßrohr und das vierte Meßrohr bezüglich der zweiten gedachten Längsschnittebene YZ gegengleiche Biegeschwingungen um jeweils zugehörige statische Ruhelage ausführen, im Unterschied zu den Biegeschwingungen im V-Mode, jedoch in der Weise, daß - bezüglich der zweiten gedachten Längsschnittebene YZ - nämliche Biegeschwingungen des ersten Meßrohrs auch gegengleich zu nämlichen Biegeschwingungen des vierten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des dritten Meßrohrs sind. Bei symmetrisch aufgebauter und gleichmäßig von Medium durchströmter Rohranordnung sind im übrigen auch die - hier wiederum als Ausleger-Biegeschwingungen um jeweils eine zu wenigstens zwei der gedachten Verbindungsachsen parallele gedachte Schwingungsachse ausgebildeten, die Rohranordnung in Projektion auf die Querschnittsebene XY zeitweise X-förmig erscheinen lassenden (vgl. Fig. 7b) - Biegeschwingungen im X-Mode ebenfalls bezüglich der zweiten gedachten Längsschnittebene YZ symmetrisch. Um eine separate, nicht zuletzt auch definierte Anregung des V-Modes bzw. des X-Modes über einen möglichst weiten - u.a. auch von im Betrieb schwankenden Dichten, Massendurchflußraten, Temperaturverteilungen im Meßaufnehmer etc. geprägten - Betriebsbereich des Meßaufnehmers zu gewährleisten, ist gemäß einer weiteren Ausgestaltung der Erfindung die mittels der vier Meßrohre gebildete Rohranordnung, mithin der damit gebildet Meßaufnehmer, so dimensioniert, daß eine - beispielsweise bei vollständig mit Luft als Referenzmedium gefüllter Rohranordnung meßbare - Eigenfrequenz $f_{18V,Ref}$, des Biegeschwingungsmode erster Art (V-Mode), von einer, insb. bei vollständig mit Luft gefüllter Rohranordnung bzw. zeitgleich zur Eigenfrequenz $f_{18V,Ref}$ des Biegeschwingungsmode erster Art (V-Mode) meßbaren, Eigenfrequenz $f_{18X}$ des Biegeschwingungsmode zweiter Art (X-Mode) verschieden ist, beispielsweise so, daß die Eigenfrequenzen $f_{18V,Ref}$, $f_{18X,Ref}$, der beiden nämlichen Biegeschwingungsmoden (V-Mode, X-Mode) unter vorgenannten Referenzbedingungen um 10Hz oder mehr voneinander abweichen. Im besonderen ist, nicht zuletzt auch für den Fall großer nomineller Nennweiten von mehr als 150 mm, die Rohranordnung so ausgebildet, daß, nämliche Eigenfrequenz $f_{18V,Ref}$ des Biegeschwingungsmode erster Art um mehr als 10Hz größer als nämliche Eigenfrequenz $f_{18X,Ref}$ des Biegeschwingungsmode zweiter Art ist. Die Erregeranordnung ist gemäß einer weiteren Ausgestaltung der Erfindung daher derart ausgebildet, daß damit das erste Meßrohr $18_1$ und das zweite Meßrohr $18_2$ im Betrieb zu gegengleichen Biegeschwingungen und das dritte Meßrohr $18_3$ und das vierte Meßrohr $18_4$ im Betrieb gegengleiche Biegeschwingungen anregbar sind, insb. auch dem Biegeschwingungsmode erster Art (V-Mode) entsprechenden Biegeschwingungen auf deren momentaner Eigenfrequenz $f_{18V}$ bzw. dem Biegeschwingungsmode zweiter Art (X-Mode) entsprechenden Biegeschwingungen auf deren momentaner Eigenfrequenz $f_{18V}$, letztere Biegeschwingungen ggf. auch simultan mit den dem Biegeschwingungsmode erster Art (V-Mode) entsprechenden Biegeschwingungen.

Gemäß einer weiteren Ausgestaltung der Erfindung ist die Erregeranordnung 5, nicht zuletzt auch zwecks Anregung von gegengleichen Biegeschwingungen des ersten und zweiten Meßrohrs und/oder des dritten und vierten Meßrohrs, mittels eines, insb. differentiell auf das erste Meßrohr $18_1$ und das zweite Meßrohr $18_2$ wirkenden, ersten Schwingungserregers $5_1$ gebildet. Ferner ist vorgesehen, daß als erster Schwingungserreger $5_1$ ein, insb. differentiell, auf wenigstens zwei der Meßrohre $18_1$, $18_2$, $18_3$, $18_4$ wirkender Schwingungserreger vom elektrodynamischen Typ dient. Dementsprechend ist der erster Schwingungserreger $5_1$ ferner mittels eines am ersten Meßrohr gehaltenen Permanentmagneten und einer von dessen Magnetfeld durchfluteten, am zweiten Meßrohr gehaltenen Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist.

Zwecks Erhöhung des Wirkungsgrades der Erregeranordnung bzw. zwecks der Erhöhung der damit generierten Erregerkräfte bei gleichzeitig möglichst symmetrischem Aufbau umfaßt die Erregeranordnung nach einer Weiterbildung der Erfindung ferner einen, insb. elektrodynamischen und/oder differentiell auf das dritte Meßrohrs $18_3$ und das vierte Meßrohr $18_4$ wirkenden, zweiten Schwingungserreger $5_2$. Der zweite Schwingungserreger $5_2$ ist in vorteilhafter Weise zumindest insoweit baugleich zum ersten Schwingungserreger $5_1$ ausgebildet, als er analog zu dessen Wirkprinzip arbeitet, beispielsweise also ebenfalls vom elektrodynamischen Typ ist. Gemäß einer weiteren Ausgestaltung ist der zweite Schwingungserreger $5_2$ daher mittels eines am dritten Meßrohr gehaltenen Permanentmagneten und einer von dessen Magnetfeld durchfluteten, am vierten Meßrohr gehaltenen Zylinderspule gebildet. Die beiden Schwingungserreger $5_1$, $5_2$ der Erregeranordnung 5 können in vorteilhafter Weise elektrisch seriell verschaltet sind, insb. derart, daß ein gemeinsames Treibersignal gemeinsamem mithin simultane Schwingungen der Meßrohre $18_1$, $18_3$, $18_2$, $18_4$ anregt, etwa Biegeschwingungen im V-Mode und/oder im X-Mode. Nicht zuletzt für den zuvor erwähnten Fall, daß sowohl Biegeschwingungen im V-Mode als auch Biegeschwingungen im X-Mode mittels der beiden Schwingungserreger $5_1$, $5_2$ aktiv angeregt werden sollen, kann es von Vorteil sein, die Schwingungserreger $5_1$, $5_2$ so zu dimensionieren und so an der Rohranordnung anzubringen, daß im Ergebnis ein Übertragungsfaktor des ersten Schwingungserregers $5_1$, definiert durch ein Verhältnis von darin eingespeister elektrischer Erregerleistung zu einer damit erzeugten Schwingungen der Meßrohre bewirkende Erregerkraft, zumindest innerhalb eines den V-Mode und den X-Mode umfassenden Frequenzbandes von einem Übertragungsfaktor des zweiten Schwingungserregers $5_1$, definiert durch ein Verhältnis von darin eingespeister elektrischer Erregerleistung zu einer damit erzeugten Schwingungen der Meßrohre bewirkende Erregerkraft, verschieden ist, etwa derart, daß nämliche Übertragungsfaktoren um 10% oder mehr voneinander abweichen. Dies ermöglicht beispielsweise auch eine getrennte Anregung von V- und X-Mode, nicht zuletzt auch bei serieller Verschaltung der beiden Schwingungserreger $5_1$, $5_2$ und/oder Speisung der beiden Schwingungserreger $5_1$, $5_2$ mit einem einzigen gemeinsamen Treibersignal, und kann im Falle elektrodynamischer Schwingungserreger $5_1$, $5_2$ z.B. durch Verwendung von Zylinderspulen mit verschieden Impedanzen bzw. unterschiedlichen Windungszahlen und/oder von unterschiedlich dimensionierten bzw. aus unterschiedlichen magnetischen Materialien bestehenden Permanentmagneten auf sehr einfache Weise erreicht werden. Es sei an dieser Stelle zudem ferner noch erwähnt, daß, obgleich der bzw. die Schwingungserreger der im Ausführungsbeispiel gezeigten Erregeranordnung jeweils etwa mittig an den jeweiligen Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Wie aus den Fig. 2, 4a, 4b, 5a, und 5b jeweils ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre $18_1$, $18_2$, $18_3$ bzw. $18_4$ reagierende, beispielsweise elektrodynamische, Sensoranordnung 19 zum Erzeugen von Vibrationen, insb. Biegeschwingungen, der Meßrohre repräsentierenden Schwingungssignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Sensoranordnung mittels eines, insb. elektrodynamischen und/oder zumindest Schwingungen des ersten Meßrohrs $18_1$ relativ zum zweiten Meßrohr $18_2$ differentiell erfassenden, einlaßseitigen ersten Schwingungssensors $19_1$ sowie eines, insb. elektrodynamischen und/oder zumindest Schwingungen des ersten Meßrohrs $18_1$ relativ zum zweiten Meßrohr $18_2$ differentiell erfassenden, auslaßseitigen zweiten Schwingungssensors $19_2$ gebildet, welche beiden Schwingungssensoren jeweils auf Bewegungen der Meßrohre $18_1$, $18_2$, $18_3$, $18_4$, insb. deren laterale Auslenkungen und/oder Verformungen, reagierend, ein erstes bzw. zweites Schwingungssignal liefern. Dies im besonderen in der Weise, daß wenigstens zwei der von der Sensoranordnung 19 gelieferten Schwingungssignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren $19_1$, $19_2$ können dafür-wie bei Meßaufnehmern der in Rede stehenden Art durchaus üblich - im wesentlichen äquidistant zum ersten Schwingungser-

reger $5_1$ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Sensoranordnung 19 zudem auch mittels eines, insb. elektrodynamischen und/oder Schwingungen des dritten Meßrohrs $18_3$ relativ zum vierten Meßrohr $18_4$ differentiell erfassenden, einlaßseitigen dritten Schwingungssensors $19_3$ sowie eines, insb. elektrodynamischen und/oder Schwingungen des dritten Meßrohrs $18_3$ relativ zum vierten Meßrohr $18_4$ differentiell erfassenden, auslaßseitigen vierten Schwingungssensors $19_4$ gebildet. Zur weiteren Verbesserung der Signalqualität wie auch zur Vereinfachung der die Meßsignale empfangenden Umformer-Elektronik 12 können desweiteren der erste und dritte Schwingungssensor $19_1$, $19_3$ elektrisch seriell verschaltet sein, beispielsweise derart, daß ein gemeinsames Schwingungssignal gemeinsame einlaßseitige Schwingungen des ersten und dritten Meßrohrs $18_1$, $18_3$ relativ zum zweiten und vierten Meßrohr $18_2$, $18_4$ repräsentiert. Alternativ oder in Ergänzung können auch der zweite und vierte Schwingungssensor $19_2$, $19_4$ derart elektrisch seriell verschaltet sein, daß ein gemeinsames Schwingungssignal beider Schwingungssensoren $19_2$, $19_4$ gemeinsame auslaßseitige Schwingungen des ersten und dritten Meßrohrs $18_1$, $18_3$ relativ zum zweiten und vierten Meßrohr $18_2$, $18_4$ repräsentiert.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor $19_1$ mittels eines - hier im Bereich einlaßseitig zu erfassender Schwingungen - am ersten Meßrohr gehaltenen Permanentmagneten und einer von dessen Magnetfeld durchfluteten, am zweiten Meßrohr - hier entsprechend ebenfalls im Bereich einlaßseitig zu erfassender Schwingungen - gehaltenen Zylinderspule, und der zweite Schwingungssensor $19_2$ mittels eines - im Bereich auslaßseitig zu erfassender Schwingungen - am ersten Meßrohr gehaltenen Permanentmagneten und einer von dessen Magnetfeld durchfluteten, am zweiten Meßrohr gehaltenen - hier entsprechend ebenfalls im Bereich auslaßseitig zu erfassender Schwingungen - Zylinderspule gebildet. Gleichermaßen können zudem auch der ggf. vorgesehene dritte Schwingungssensor $19_3$ entsprechend mittels eines am dritten Meßrohr gehaltenen Permanentmagneten und einer von dessen Magnetfeld durchfluteten, am vierten Meßrohr gehaltenen Zylinderspule, und der ggf. vorgesehene vierte Schwingungssensor $19_4$ mittels eines am dritten Meßrohr gehaltenen Permanentmagneten und einer von dessen Magnetfeld durchfluteten, am vierten Meßrohr gehaltenen Zylinderspule gebildet sein.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Desweiteren können, wie bei Meßaufnehmern der in Rede stehenden Art durchaus üblich, zusätzlich zu den Schwingungssensoren weitere, insb. Hilfs- bzw. Störgrößen erfassende, Sensoren im Meßaufnehmer vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßaufnehmers und/oder Änderungen der Empfindlichkeit des Meßaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können. Zur Gewährleistung einer möglichst hohen Empfindlichkeit des Meßaufnehmers auf den Massendurchfluß sind nach einer weiteren Ausgestaltung der Erfindung die Meßrohre und die Schwingungssensoren so im Meßaufnehmer angeordnet, daß eine einem entlang einer Biegelinie des ersten Meßrohrs gemessenen Abstand zwischen dem ersten Schwingungssensor $19_1$ und dem zweite Schwingungssensor $19_2$ entsprechende Meßlänge, $L_{19}$, des Meßaufnehmers mehr als 500 mm, insb. mehr als 600 mm, beträgt. Nicht zuletzt zur Schaffung eines möglichst kompakten, dennoch aber für den Massendurchfluß möglichst empfindlichen Meßaufnehmers sind nach einer weiteren Ausgestaltung der Erfindung die Schwingungssensoren $19_1$, $19_2$, abgestimmt auf die Einbaulänge $L_{11}$ des Meßaufnehmers, so im Meßaufnehmer angeordnet, daß ein Meßlänge-zu-Einbaulänge-Verhältnis $L_{19}/L_{11}$ des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis $D_{18}/L_{19}$, des Meßaufnehmers, welches durch ein Verhältnis des Kalibers $D_{18}$ des ersten Meßrohrs zur erwähnten Meßlänge $L_{19}$ des Meßaufnehmers definiert ist, mehr als 0.05, insb. mehr als 0.09, beträgt.

Die Sensoranordnung 19 ist ferner, wie bei derartigen Meßaufnehmern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Die Meßschaltung empfängt die Schwingungssignale der Sensoranordnung 19 und generiert daraus, ggf. auch unter Berücksichtung mittels des wenigstens einen Treibersignals in die Erregeranordnung eingespeister, mithin auch darin umgesetzter elektrischer Erregerleistung, die eingangs erwähnten Meßwerte, die beispielsweise eine Massedurchflußrate, einen totalisierten Massendurchfluß und/oder eine Dichte und/oder eine Viskosität des zu messenden Mediums repräsentieren können, und die ggf. vor Ort angezeigt und/oder auch an ein dem Meßsystem übergeordnetes Datenverarbeitungssystem inform digitaler Meßdaten gesendet und daselbst entsprechend weiterverarbeitet werden können. Im besonderen ist die Meßschaltung, mithin die damit gebildete Umformer-Elektronik ferner dafür vorgesehen und ausgelegt, anhand von in der Erregeranordnung umgesetzter elektrischer Erregerleistung, beispielsweise periodisch wiederkehrend und/oder auf Abruf, einen die Viskosität des strömenden Mediums repräsentierenden Viskosität-Meßwert zu generieren und/oder anhand von vom Meßaufnehmer gelieferten Schwingungssignalen, beispielsweise periodisch wiederkehrend und/oder auf Abruf, einen die Massendurchflußrate des strömenden Mediums repräsentierenden Massendurchfluß-Meßwert und/oder, beispielsweise periodisch wiederkehrend und/oder auf Abruf, einen die Dichte des strömenden Mediums repräsentierenden Dichte-Meßwert zu generieren.

Die oben erwähnte Verwendung differentiell wirkender Schwingungserreger bzw. Schwingungssensoren birgt dabei u.a. auch den Vorteil, daß zum Betreiben des erfindungsgemäßen Meßaufnehmers auch solche etablierten Meß- und Betriebsschaltungen verwendet werden können, wie sie beispielsweise bereits in herkömmlichen Coriolis-Massedurchfluß-/ Dichtemeßgeräten breite Anwendung gefunden haben.

Die Umformer-Elektronik 12, einschließlich der darin realisierten Meß- und Betriebsschaltung, kann desweiteren beispielsweise in einem separaten Elektronik-Gehäuse $7_2$ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse $7_1$, fixiert ist. Bei dem hier gezeigten Ausführungsbeispiel ist daher am Aufnehmer-Gehäuse $7_1$ ferner ein dem Haltern des Elektronik-Gehäuses $7_2$ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Umformer-Elektronik 12 angeordnet sein.

Wie bereits mehrfach erwähnt ist das Meßsystem und insoweit auch der Meßaufnehmer 11 im besonderen für Messungen auch hoher Massendurchflüsse von mehr als 1000 t/h in einer Rohrleitung von großem Kaliber von mehr als 250 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 50 mm beträgt, insb. aber größer als 100 mm ist. Ferner ist nach einer weiteren Ausgestaltung des Meßaufnehmers vorgesehen, daß jedes der Meßrohre $18_1$, $18_2$, $18_3$, $18_4$ jeweils ein einem jeweiligen Rohr-Innendurchmesser entsprechendes Kaliber $D_{18}$ aufweist, das mehr als 40 mm beträgt. Im besonderen sind die Meßrohre $18_1$, $18_2$, $18_3$, $18_4$ ferner so ausgebildet, das jedes ein Kaliber $D_{18}$ von mehr als 60 mm aufweist. Alternativ oder in Ergänzung dazu sind die Meßrohre $18_1$, $18_2$, $18_3$, $18_4$ nach einer anderen Ausgestaltung der Erfindung ferner so bemessen, daß sie jeweils eine Meßrohrlänge $L_{18}$ von wenigstens 1000 mm aufweisen. Die Meßrohrlänge $L_{18}$ entspricht im hier gezeigten Ausführungsbeispiel mit gleichlangen Meßrohren $18_1$, $18_2$, $18_3$, $18_4$ jeweils einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs. Im besonderen sind die Meßrohre $18_1$, $18_2$, $18_3$, $18_4$ dabei so ausgelegt, daß deren Meßrohrlänge $L_{18}$ jeweils größer als 1200 mm ist. Dementsprechend ergibt sich zumindest für den erwähnten Fall, daß die Meßrohre $18_1$, $18_2$, $18_3$, $18_4$ aus Stahl bestehen, bei den üblicherweise verwendeten Wandstärken von über 1 mm eine Leermasse, $M_{18}$, von jeweils wenigstens 20 kg, insb. mehr als 30 kg, aufweist. Ferner ist aber angestrebt, die Leermasse jedes der Meßrohre $18_1$, $18_2$, $18_3$, $18_4$ kleiner als 50 kg zu halten.

In Anbetracht dessen, daß, wie bereits erwähnt, jedes der Meßrohre $18_1$, $18_2$, $18_3$, $18_4$ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 l oder mehr haben kann, kann dann die die vier Meßrohre $18_1$, $18_2$, $18_3$, $18_4$ umfassende Rohranordnung zumindest bei hindurchströmendem Medium mit hoher Dichte eine GesamtMasse von weit über 80 kg erreichen. Besonders bei der Verwendung von Meßrohren mit vergleichsweise großem Kaliber $D_{18}$, großer Wandstärke und großer Meßrohrlänge $L_{18}$ kann die Masse der von den Meßrohren $18_1$, $18_2$, $18_3$, $18_4$ gebildeten Rohranordnung ohne weiteres aber auch größer als 100 kg oder zumindest mit hindurchströmendem Medium, z.B. Öl oder Wasser, mehr als 120 kg betragen. Infolgedessen beträgt eine Leermasse $M_{11}$ des Meßaufnehmers insgesamt auch weit mehr als 200 kg, bei nominellen Nennweiten $D_{11}$ von wesentlich größer als 250 mm sogar mehr als 300 kg. Im Ergebnis kann beim erfindungsgemäßen Meßaufnehmer ein Massenverhältnis $M_{11}/M_{18}$ einer Leermasse $M_{11}$ des gesamten Meßaufnehmers zu einer Leermasse $M_{18}$ des ersten Meßrohrs durchaus größer als 10, insb. größer als 15, sein. Um bei den erwähnten hohen Leermassen $M_{11}$ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite $D_{11}$ des Meßaufnehmers abgestimmt auf

dessen Leermasse $M_{11}$ so bemessen, daß ein Masse-zu-Nennweite-Verhältnis $M_{11}/D_{11}$ des Meßaufnehmers 11, definiert durch ein Verhältnis der Leermasse $M_{11}$ des Meßaufnehmers 11 zur nominellen Nennweite $D_{11}$ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis $M_{11}/D_{11}$ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis $M_{11}/M_{18}$ kleiner als 25 zu halten. Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge $L_{11}$ des Meßaufnehmers 11, so bemessen, daß ein Kaliber-zu-Einbaulänge-Verhältnis $D_{18}/L_{11}$ des Meßaufnehmers, definiert durch ein Verhältnis des Kalibers $D_{18}$ zumindest des ersten Meßrohrs zur Einbaulänge $L_{11}$ des Meßaufnehmers 11, mehr als 0.02, insb. mehr als 0.05 und/oder weniger als 0.09, insb. weniger als 0.07, beträgt. Alternativ oder in Ergänzung sind die Meßrohre $18_1$, $18_2$, $18_3$, $18_4$, abgestimmt auf die oben erwähnte Einbaulänge $L_{11}$ des Meßaufnehmers, so bemessen, daß ein Meßrohrlänge-zu-Einbaulänge-Verhältnis $L_{18}/L_{11}$ des Meßaufnehmers, definiert durch ein Verhältnis der oben bezeichnten Meßrohrlänge $L_{18}$ zumindest des ersten Meßrohrs zur Einbaulänge $L_{11}$ des Meßaufnehmers, mehr als 0.7, insb. mehr als 0.8 und/oder weniger als 1.2, beträgt.

Zwecks einer Verbesserung der mechanischen Kopplung der vier Meßrohre, einhergehend mit einer Vergleichmäßigen der von den vier Meßrohren simultan ausgeführten Schwingungen im Nutzmode auch bei allfällig durch Bauteiletoleranzen bedingten Ungleichheiten einerseits, sowie andererseits auch zwecks einer möglichst einfachen, gleichwohl effektiven Realisierung einer ausreichenden Separierung des erwähnten V-Modes vom X-Modes hinsichtlich ihrer Eigenfrequenzen $f_{18V}$, $f_{18X}$, beispielsweise also in der erwähnten Größenordnung von 10Hz oder mehr, umfaßt die erfindungsgemäße Rohranordnung, mithin der damit gebildete Meßaufnehmer ferner wenigstens ein erstes Kopplerelement $24_1$ erster Art zum Einstellen von Eigenfrequenzen natürlicher Schwingungsmoden der Rohranordnung. Die Funktionsweise nämlichen Kopplerelements $24_1$ erster Art kann vereinfacht damit erklärt werden, daß dadurch zusätzlich zu Biegesteifigkeiten, $c_{18}$, die den Meßrohren jeweils innewohnen und die Eigenfrequenzen der Schwingungsmoden der Rohranordnung, insb. auch die des V- und X-Modes, maßgeblich mitbestimmenden, weitere, nämlich dem Kopplerelement innewohnende Biege- oder Federsteifigkeiten, $c_{24V}$, $c_{24X}$, innerhalb der Rohranordnung zur Wirkung gelangen. Dabei weist nämliches Kopplerelement in Sonderheit eine überwiegend für den V-Mode wirksame, mithin dessen Eigenfrequenz, $f_{18V}$, maßgeblich mitbestimmende Biege- bzw. Federsteifigkeit, $c_{24V}$, auf, die von einer überwiegend für den X-Mode wirksame, mithin dessen Eigenfrequenz, $f_{18X}$, maßgeblich mitbestimmende Biege- bzw. Federsteifigkeit, $c_{24X}$, verschieden ist, so daß also das Kopplerelement modenspezifische Biege- oder Federsteifigkeiten, $c_{24V}$, $c_{24X}$, zu den für den V- und den X-Mode eher unspezifischen, nämlich nahezu gleichen Biegesteifigkeiten, $c_{18}$, der Meßrohre hinzufügt, wodurch der gesamten Rohranordnung im Ergebnis für den V- und den X-Mode gleichermaßen spezifische Biege- oder Federsteifigkeiten, $4c_{18}+c_{24V}$, $4c_{18}+c_{24X}$, innewohnen.

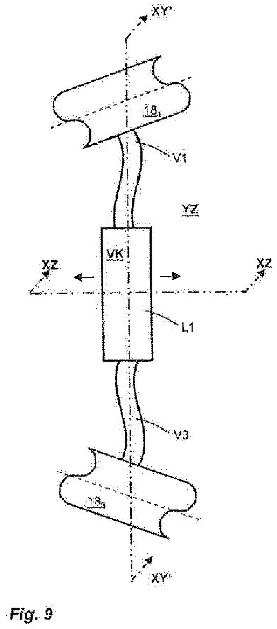

Das Kopplerelement $24_1$ erster Art ist - wie auch in den Fig. 4a bis 9 schematisch dargestellt - sowohl vom ersten Strömungsteiler als auch vom zweiten Strömungsteiler beabstandet an jedem der vier Meßrohre fixiert und dient beim erfindungsgemäßen Meßaufnehmer im besonderen dazu, Eigenfrequenzen solcher natürlicher Schwingungsmoden der Rohranordnung einzustellen, in denen gleichzeitig jedes der vier Meßrohre jeweils Biegeschwingungen um eine jeweilige statische Ruhelage ausführen kann bzw. ausführt. Das Kopplerelement $24_1$ erster Art ist gemäß einer weiteren Ausgestaltung der Erfindung ferner so ausgebildet und an den Meßrohren angebracht, daß es - wie auch der Zusammenschau der Fig. 4a, 4b bzw. 5a, 5b ersichtlich - bezüglich der erwähnten ersten gedachten Längsschnittebene XZ des Meßaufnehmers bzw. bezüglich der erwähnten zweiten gedachten Längsschnittebene YZ des Meßaufnehmers im wesentlichen symmetrisch ist, mithin also die erste gedachte Längsschnittebene XZ und/oder die zweite gedachte Längsschnittebene YZ jeweils auch Symmetrieebene des Kopplerelements $24_1$ erster Art ist.

Das erste Kopplerelement erster Art weist einen - im hier gezeigten Ausführungsbeispiel mittels einer eine Vielzahl von Profilstäben bzw. Platten aufweisenden Rahmenkonstruktion gebildeten, im wesentlichen kastenförmigen - Verformungskörper VK sowie vier - hier jeweils mittels eines gebogenen Stab- bzw. Plattenelements gebildete, zumal zumindest paarweise oder sämtlich auch im wesentlichen baugleiche - Verbindungsstreben auf, von denen eine erste Verbindungsstrebe V1 mit dem Verformungskörper und mit dem ersten Meßrohr $18_1$, eine zweite Verbindungsstrebe V2 mit dem Verformungskörper und mit dem zweiten Meßrohr, eine dritte Verbindungsstrebe V3 mit dem Verformungskörper und mit dem dritten Meßrohr, und eine vierte Verbindungsstrebe V4 mit dem Verformungskörper und mit dem vierten Meßrohr verbunden sind.

Jener Bereich einer jeden Verbindungstrebe V1, V2, v3 bzw. V4, an der diese jeweils mit dem Verformungskörper VK verbunden ist, bildet somit jeweils ein erstes Strebenende der jeweiligen Verbindungstrebe, während jener andere Bereich einer jeden Verbindungstrebe, der jeweils mit dem einen der Meßrohre verbunden ist, jeweils ein zweites Strebenende der jeweiligen Verbindungstrebe bildet. Jede der vier Verbindungsstreben V1, V2, V3, V4 weist insoweit also jeweils eine durch einen minimalen Abstand zwischen deren jeweiligen ersten Strebenende und deren jeweiligen zweiten Strebenende definierte Strebenlänge auf, die schlußendlich auch einer wirksamen Länge eines als Kräfte und/oder Moment vom Verformungskörper VK zum jeweils verbundenen Meßrohr (bzw. *vice versa*) übertragender Hebelarm wirkenden Segments der jeweiligen Verbindungsstrebe entspricht. Nach einer weiteren Ausgestaltung der Erfindung ist hierbei ferner vorgesehen, die Verbindungsstreben so auszubilden, daß sowohl die zweite Verbindungsstrebe als auch die dritte sowie die vierte Verbindungsstrebe jeweils eine Strebenlänge aufweisen, die jeweils gleich der Strebenlänge, $L_{V1}$, der ersten Verbindungsstrebe ist. Wenngleich im hier gezeigten Ausführungsbeispiel die Verbindungsstreben jeweils mit einer dem ersten Strebenende zugehörigen Stirnfläche bündig am Verformungskörper und mit einer dazu jeweils distalen, dem jeweiligen zweiten Strebenende zugehörigen Stirnfläche am jeweiligen Meßrohr fixiert sind, ist es selbstverständlich auch möglich, die Verbindungstreben über deren jeweiliges erstes Strebenende und/oder über deren jeweilige zweite Strebenende hinausragen zu lassen, etwa um jeweils eine Bohrung zur Aufnahme des jeweiligen Meßrohrs bereitzustellen und/oder allfällig benötigte endständige, nämlich Ausgleichsmomente bewirkende Ausgleichsmassen daran fixieren zu können.

Die vier, insb. baugleichen, Verbindungsstreben V1, V2, V3, bzw. V4 können beispielsweise jeweils aus dem selben oder einem ähnlichen Material wie der Verformungskörper und/oder aus dem selben oder einem ähnlichen Material wie die Meßrohre, mithin aus einem Metall, beispielsweise rostfreiem Stahl, Duplexstahl, Superduplexstahl, Automatenstahl, Titan, Zirkonium oder Tantal bzw. damit gebildete Legierungen oder auch Superlegierungen, wie etwa Hastelloy, Inconel etc., bestehen und, beispielsweise durch Hartverlöten oder Schweißen, stoffschlüssig mit dem jeweiligen Meßrohr verbunden sein. Alternativ oder in Ergänzung zu einer stoffschlüssigen Verbindung der Verbindungsstreben V1, V2, V3, bzw. V4 mit dem jeweiligen Meßrohr können die Verbindungsstreben aber auch, beispielsweise mittels Aufschrumpfen und/oder Aufpressen, kraft- bzw. reibschlüssig mit dem jeweiligen Meßrohr verbunden sein, etwa analog dem in der eingangs erwähnten US-A 60 47 457 vorgeschlagenen Verfahren. Auf sehr einfache und kostengünstige Weise können die Verbindungsstreben V1, V2, V3, bzw. V4 z.B. aus einem einfachen, ggf. auch zumindest abschnittsweise gebogenen, Flachstab hergestellt werden. Ferner können die vier Verbindungsstreben V1, V2, V3, bzw. V4 ebenfalls stoffschlüssig, beispielsweise also durch Hartverlöten oder Schweißen, am Verformungskörper VK fixiert sein oder aber auch mittels Schraubverbindung mit dem Verformungskörper verbunden sein.

Jede der vier Verbindungsstreben V1, V2, V3, bzw. V4 weist u.a. jeweils eine maximale Biegesteifigkeit, $E_{V1} \cdot J_{V1,max}$, $E_{V2} \cdot J_{V2,max}$, $E_{V3} \cdot J_{V3,max}$ bzw. $E_{V4} \cdot J_{V4,max}$, um eine nämlicher Längsstrebe jeweils immanente gedachte Biegehauptachse auf bzw. trägt diese (gemäß dem Fachmann bekannter Regeln für parallel bzw. seriell verkoppelte Federelemente) anteilig zur gesamten Federsteifigkeit des Kopplerelements $24_1$ erster Art bei. Die maximal Biegesteifigkeit der jeweiligen Verbindungsstrebe V1, V2, V3 bzw. V4, ist jeweils von einem vom Material nämlicher Verbindungsstrebe abhängigen Elastizitätsmodul, $E_{V1}$, $E_{V2}$, $E_{V3}$ bzw. $E_{V4}$, wie auch von einem jeweiligen minimalen Flächenträgheitsmoment, $J_{V1,max}$ $J_{V2,max}$, $J_{V3,max}$ bzw. $J_{V4,max}$, bestimmt, wobei gemäß einer weiteren Ausgestaltung der Erfindung sowohl das maximale Flächenträgheitsmoment der zweite Verbindungsstrebe als auch das maximale Flächenträgheitsmoment der dritten Verbindungsstrebe und das maximale Flächenträgheitsmoment der vierten Verbindungsstrebe jeweils gleich dem maximalen Flächenträgheitsmoment, $J_{V1,max}$, der ersten Verbindungsstrebe ist. Ferner ist gemäß einer anderen Ausgestaltung der Erfindung jede der vier Verbindungsstreben V1, V2, V3, V4 jeweils so angeordnet, daß die gedachte Biegehauptachse von deren jeweiligen maximalen Flächenträgheitsmoment jeweils sowohl zur ersten Längsschnittebene XZ als auch zur zweiten gedachten Längsschnittebene YZ parallel verläuft, mithin also ein Beitrag der maximalen Biegesteifigkeiten der Verbindungsstreben zumindest an den für die Eigenfrequenzen des V-Modes und des X-Modes jeweils wirksamen Biege- oder Federsteifigkeiten, $4c_{18}+c_{24v}$, $4c_{18}+c_{24x}$, des Kopplerelements $24_1$ erster Art möglichst groß ist.

Neben der maximalen Biegesteifigkeit weist jede der vier Verbindungsstreben naturgemäß jeweils auch eine vom vom jeweiligen Material nämlicher Verbindungsstrebe abhängigen Elastizitätsmodul wie auch von einem jeweiligen minimalen Flächenträgheitsmoment, $J_{V1,min}$, $J_{V2,min}$, $J_{V3,min}$, bzw. $J_{V4,min}$, um eine nämlicherVerbindungsstrebe jeweils immanente gedachte Biegehauptachse bestimmte minimale Biegesteifigkeit, $E_{V1} \cdot J_{V1,min}$, $E_{V2} \cdot J_{V2,min}$, $E_{V3} \cdot J_{V3,min}$, bzw. $E_{V4} \cdot J_{V4,min}$, auf, wobei gemäß einer weiteren Ausgestaltung der Erfindung jede der vier Verbindungsstreben jeweils so angeordnet ist, daß die gedachte Biegehauptachse von deren jeweiligen minimalen Flächenträgheitsmoment zur ersten Längsschnittebene XZ parallel verläuft und zur zweiten gedachten Längsschnittebene YZ senkrecht ist, mithin also ein Beitrag der minimalen Biegesteifigkeiten der Verbindungsstreben zumindest an den für die Eigenfrequenzen des V-Modes und des X-Modes jeweils wirksamen Biege- oder Federsteifigkeiten, $4c_{18}+c_{24v}$, $4c_{18}+c_{24x}$, des Kopplerelements $24_1$ erster Art jeweils vernachlässigbar klein ist.

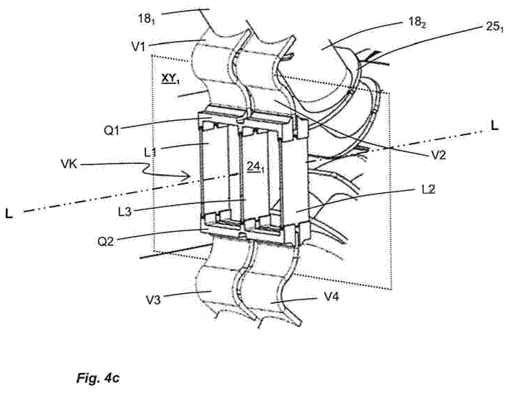

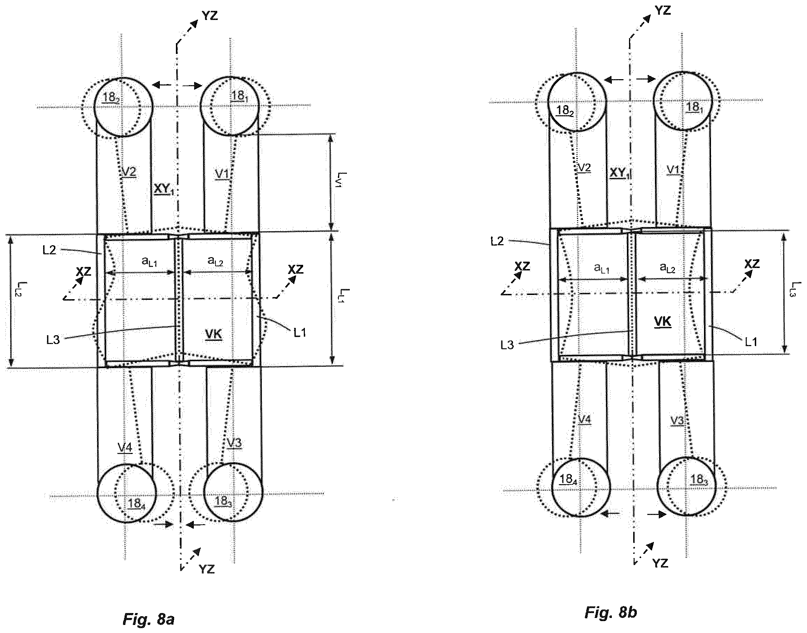

Im besonderen ist, wie auch aus der Zusammenschau der Fig. 4a, 4b, 4c, 8a, und 8b ohne weiteres ersichtlich, vorgesehen, daß jede der, insb. baugleichen, Verbindungsstreben des Kopplerelements $24_1$ erster Art in Projektion auf die gedachte Querschnittsebene XY zumindest abschnittsweise, beispielsweise auch überwiegend oder-wie in den Fig. 4a, 4b, 4c, 8a, und 8b schematisch dargestellt - vollständig, gerade ist und/oder daß jede der Verbindungsstreben des Kopplerelements erster Art zumindest abschnittsweise senkrecht zur ersten gedachten Längsschnittebene XZ, mithin parallel zur zweiten gedachten Längsschnittebene YZ verläuft. Für den erwähnten Fall, daß jede der Verbindungsstreben des Kopplerelements erster Art einen geraden Teilabschnitt aufweist, der senkrecht zur ersten gedachten Längsschnittebene XZ, mithin parallel zur zweiten gedachten Längsschnittebene YZ verläuft, ist nach einer weiteren Ausgestaltung der Erfindung ferner vorgesehen, daß, wie auch aus der Zusammenschau der Fig. 4a, 4b, 4c, 8a, und 8b ersichtlich, die erste und die dritte Verbindungsstrebe zueinander und die zweite und vierte Verbindungsstrebe zueinander fluchtend ausgerichtet sind, und/oder daß jede der Verbindungsstreben des Kopplerelements erster Art die erste gedachte Längsschnittebene XZ, insb. mit dem erwähnten jeweiligen geraden Teilabschnitt, imaginär schneidet, beispielsweise unter einem Winkel von möglichst genau 90°.

Nach einer weiteren Ausgestaltung der Erfindung weist der Verformungskörper des - im hier gezeigten Ausführungsbeispiel quasi als Stabverband ausgebildeten - Kopplerelements wenigstens zwei - hier baugleiche plattenförmige - Längsstreben auf, von denen eine, insb. zumindest abschnittsweise gerade, sich von der ersten Verbindungsstrebe zur dritten Verbindungsstrebe erstreckende erste Längsstrebe L1 sowie eine sich von der zweiten Verbindungsstrebe zur vierten Verbindungsstrebe erstreckende, insb. zumindest abschnittsweise gerade bzw. zur ersten Längsstrebe baugleiche, zweite Längsstrebe L2 auf. Die erste Längsstrebe L1 ist hierbei von der zweiten gedachten Längsschnittebene YZ beabstandet, ausschließlich auf einer sowohl vom ersten als auch vom dritten Meßrohr eingenommene Seite nämlicher Längsschnittebene YZ angeordnet, während die zweite Längsstrebe L2 von der zweiten gedachten Längsschnittebene YZ, insb. gleichweit wie die erste Längsstrebe, beabstandet, ausschließlich auf einer sowohl vom zweiten als auch vom vierten Meßrohr eingenommene Seite nämlicher Längsschnittebene YZ angeordnet ist.

Jede der beiden Längsstreben trägt zur gesamten Federsteifigkeit des Kopplerelements $24_1$ erster Art u.a. jeweils eine minimale Biegesteifigkeit, $E_{L_1} \cdot J_{L_1,min}$ bzw. $E_{L_1} \cdot J_{L_1,min}$, um eine nämlicher Längsstrebe jeweils immanente gedachte Biegehauptachse sowie eine Federsteifigkeit, $c_{L_1}$ bzw. $c_{L_{12}}$, für eine auf nämliche Längsstrebe jeweils einwirkende, jeweils senkrecht zur ersten gedachten Längsschnittebene XZ gerichteten Zug- bzw. Druckkraft bei. Die minimale Biegesteifigkeit der jeweiligen Längsstrebe ist jeweils von einem von einem Material nämlicher Längsstrebe abhängigen Elastizitätsmodul, $E_{L_1}$ bzw. $E_{L_2}$, wie auch von einem jeweiligen minimalen Flächenträgheitsmoment, $J_{L_1,min}$ bzw. $J_{L_2,min}$, bestimmt, während die Federsteifigkeit vom jeweiligen Elastizitätsmodul, $E_{L_1}$ bzw. $E_{L_2}$, wie auch von der jeweiligen Strebenlänge, $l_{L_1}$ bzw. $l_{L_2}$, sowie einem jeweiligen Flächeninhalt, $A_{L_1}$ bzw. $A_{L_2}$, einer mit der ersten gedachten Längsschnittebene XZ jeweils koinzidenten Querschnittsfläche der jeweiligen Längsstrebe bestimmt ist, dies im besonderen derart, daß sich die Federsteifigkeit, $c_{L_1}$, der ersten Längsstrebe proportional zur Beziehung $E_{L_1} \cdot A_{L_1} / l_{L_1}$ und die Federsteifigkeit, $c_{L_2}$, der zweiten Längsstrebe proportional zur Beziehung $E_{L_2} \cdot A_{L_2} / l_{L_2}$ verhält. Nach einer weiteren Ausgestaltung der Erfindung sind die erste Längsstrebe und die zweite Längsstrebe ferner so ausgebildet und angeordnet sind, daß die minimale Biegesteifigkeit, $E_{L_1} \cdot J_{L_1,min}$, der ersten Längsstrebe gleich der minimalen Biegesteifigkeit, $E_{L_2} \cdot J_{L_2,min}$, der zweiten Längsstrebe ist bzw. daß die Federsteifigkeit, $c_{L_1}$, der ersten Längsstrebe gleich der Federsteifigkeit, $c_{L_2}$, der zweiten Längsstrebe ist.

Zwecks Realisierung eines möglichst einfachen Aufbaus des Kopplerelements ist jede der beiden Längsstreben in vorteilhafter Weise ferner jeweils so ausgebildet, daß sie in Projektion auf die erwähnte gedachte Querschnittsebene XY der Rohranordnung zumindest abschnittsweise, insb. überwiegend oder vollständig, gerade ist, und/oder daß sie zumindest abschnittsweise senkrecht zur erwähnten ersten gedachten Längsschnittebene XZ, mithin parallel zur erwähnten zweiten gedachten Längsschnittebene YZ verläuft. Nach einer weiteren Ausgestaltung der Erfindung weist daher jede der beiden Längsstrebe L1 jeweils einen zumindest in Projektion auf die gedachte Querschnittsebene XY geraden Teilabschnitt auf, der, sich in Projektion auf nämliche Querschnittsebene XY, im Falle der ersten Längsstrebe mit einer Länge, $lL_1$, zwischen der ersten und dritten Verbindungsstrebe bzw. im Falle der zweiten Längsstrebe mit einer Länge, $l_{L_2}$, zwischen der zweiten und vierten Verbindungsstrebe erstreckend, zumindest in Projektion auf die gedachte Querschnittsebene XY senkrecht zur ersten gedachten Längsschnittebene XZ sowie, im Fall der ersten Längsstrebe in einem Abstand, $a_{L_1}$ bzw. im Fall der zweiten Längsstrebe in einem Abstand, $a_{L_2}$, parallel zur zweiten gedachten Längsschnittebene YZ verläuft. Hierbei hat es sich ferner gezeigt, daß der Abstand, $a_{L_1}$, der ersten Längsstrebe L1 bzw. der Abstand, $a_{L_2}$, der zweiten Längsstrebe zur zweiten gedachten Längsschnittebene YZ zwecks Erzielung eines für die angestrebte Separierung der Eigenfrequenzen des V- und des X-Modes der Rohranordnung ausreichenden Beitrags der Längsstreben an der gesamten Federsteifigkeit des Kopplerelements $24_1$ erster Art jeweils mehr als 50% des Außendurchmessers, $D_{18} + 2 \cdot h_{18}$, des ersten Meßrohrs bzw. der vier Meßrohre betragen sollte, umgekehrt aber durchaus weniger als 200% des nämlichen Außendurchmesser, $D_{18} + 2 \cdot h_{18}$, betragen kann.

Wie aus der Zusammenschau der Fig. 4a, 4b, 4c, 8a, 8b ersichtlich sind im hier gezeigten Ausführungsbeispiel die beiden Längsstreben L1, L2 ferner so ausgebildet, daß praktisch jeweils die gesamte Längsstrebe zumindest in Projektion auf die gedachte Querschnittsebene XY gerade ist, daß sich also der gerade Teilabschnitt der ersten Längsstrebe von der ersten Verbindungsstrebe bis zur dritten Verbindungsstrebe erstreckt, mithin dessen Länge, $lL_1$, einem minimalen Abstand zwischen dem ersten Strebenende der ersten Verbindungsstrebe und dem ersten Strebenende der dritten Verbindungsstrebe entspricht, bzw. der gerade Teilabschnitt der zweiten Längsstrebe von der zweiten Verbindungsstrebe bis zur vierten Verbindungsstrebe erstreckt, mithin dessen Länge, $l_{L_2}$, einem minimalen Abstand zwischen dem ersten Strebenende der ersten zweiten Verbindungsstrebe und dem ersten Strebenende der vierten Verbindungsstrebe entspricht. Im hier gezeigte Ausführungsbeispiel ist desweiteren der gerade Teilabschnitt der ersten Längsstrebe L1 gleichweit von der ersten gedachten Längsschnittebene XZ entfernt wie der gerade Teilabschnitt der zweiten Längsstrebe L1, so daß der Abstand, $a_{L1}$, in dem die erste Längsstrebe parallel zur zweiten gedachten Längsschnittebene YZ verläuft gleich dem Abstand, $a_{L2}$, in dem die zweite Längsstrebe parallel zu nämlicher Längsschnittebene YZ verläuft, ist, bzw. ist der gerade Teilabschnitt der ersten Längsstrebe gleichlang ist wie der gerade Teilabschnitt der zweiten Längsstrebe, so daß die Länge, $IL_1$, mit der sich gerade Teilabschnitt der ersten Längsstrebe zwischen der ersten und dritten Verbindungsstrebe erstreckt, gleich der Länge, $l_{L2}$, mit der sich gerade Teilabschnitt der zweiten Längsstrebe zwischen der ersten und dritten Verbindungsstrebe erstreckt, ist. Weiterführende Untersuchungen haben ferner gezeigt, daß eine für die angestrebte Separierung des V-Modes vom X-Modes hinsichtlich ihrer Eigenfrequenzen $f_{18V}$, $f_{18X}$, optimale Strebenlänge für die Verbindungsstreben bzw. für die Längsstreben in einem Bereich liegt, in dem die Vorschrift:

$$\frac{I_{V1}}{I_{V1}+0,5\cdot I_{L1}} > 0,3$$ , als auch die Vorschrift: $$\frac{I_{V1}}{I_{V1}+0,5\cdot I_{L1}} < 0,7$$ erfüllt sind. Darüberhinaus konnte für das Kopplerelement $24_1$ erster Art sowohl hinsichtlich der Separierung des V-Modes vom X-Modes als auch hinsichtlich einer effektiven mechanischen Kopplung der vier Meßrohre besonders gute Ergebnisse erzielt werden können, wenn das Kopplerelement $24_1$ im Vergleich zu den Meßrohren so dimensioniert ist, daß im Ergebnis die Rohranordnung insgesamt sowohl die Vorschrift: $$\frac{I_{V1}+0,5\cdot I_{L1}}{0,5\cdot Q_{18}-(D_{18}+2\cdot h_{18})} > 0,2$$ als auch die Vorschrift $$\frac{I_{V1}+0,5\cdot I_{L1}}{0,5\cdot Q_{18}-(D_{18}+2\cdot h_{18})} < 0,9$$ erfüllt,

bzw. wenn der Verformungskörper VK des Kopplerelemnts $24_1$ im Vergleich zu den Meßrohren so dimensioniert ist, daß die Rohranordnung im Ergebnis sowohl die Vorschrift: $$\frac{0,5\cdot I_{L1}}{0,5\cdot Q_{18}-(D_{18}+2\cdot h_{18})} > 0,1$$ als auch die Vorschrift:

$$\frac{0,5\cdot I_{L1}}{0,5\cdot Q_{18}-(D_{18}+2\cdot h_{18})} < 0,5$$ erfüllt.

Die beiden, insb. baugleichen, Längsstreben L1, L2 können beispielsweise jeweils aus demselben oder einem ähnlichen Material wie die Meßrohre bzw. die Verbindungsstreben, mithin aus einem Metall, beispielsweise Stahl, bzw. gebildet sein, und beispielsweise aus einem einfachen Flachstab hergestellt sein. Darüberhinaus sind die beiden Längsstreben in vorteilhafter Weise so im Meßaufnehmer angeordnet und ausgerichtet, daß sie jeweils die erste gedachte Längsschnittebene XZ - beispielsweise mit dem erwähnten geraden Teilabschnitt - imaginär schneiden, etwa in der in den Fig. 4a, 4b, 4c bzw. 8a, 8b gezeigten Weise, nämlich jeweils unter einem Winkel von 90°.

Nicht zuletzt auch für den erwähnten Fall, daß die Eigenfrequenz, $f_{18V}$, des V-Modes niedriger eingestellt sein soll, als die Eigenfrequenz, $f_{18X}$, des X-Modes, sind gemäß einer weiteren Ausgestaltung der Erfindung die erste Längsstrebe und die zweite Längstrebe so angeordnet, daß sowohl die erwähnte gedachte Biegehauptachse des minimalem Flächenträgheitsmoments, $J_{L1,min}$, der ersten Längsstrebe als auch die gedachte Biegehauptachse des minimalem Flächenträgheitsmoments, $J_{L2,min}$, der zweiten Längsstrebe jeweils sowohl zur ersten Längsschnittebene XZ als auch zur zweiten gedachten Längsschnittebene YZ parallel verlaufen, mithin also ein Beitrag der minimalen Biegesteifigkeiten der Längsstreben zumindest an den für die Eigenfrequenzen des V- Modes und des X-Modes jeweils wirksamen Biege- oder Federsteifigkeiten, $4c_{18}+c_{24v}$, $4c_{18}+C_{24x}$, des Kopplerelements $24_1$ erster Art jeweils möglichst groß ist. Darüberhinaus kann eine im Sinne der angestrebten Separierung der Eigenfrequenzen, $f_{18V}$, $f_{18X}$, des V- und X-Modes hohe Wirksamkeit des Kopplerelements $24_1$ erster Art dadurch erreicht werden, wenn die maximale Biegesteifigkeit, $E_{V1}\cdot J_{V1,max}$, der ersten Verbindungsstrebe V1, mithin auch die der zweiten, dritten und vierten Verbindungsstrebe V2, V3, bzw. V4, jeweils größer als die minimale Biegesteifigkeit, $E_{L1}\cdot J_{L1,min}$, der ersten Längsstrebe gewählt ist, dies im besonderen dann, wenn daß das erste Kopplerelement bzw. die damit gebildete Rohranordnung im Ergebnis die Vorschrift $$\frac{E_{V1}\cdot J_{V1,max}}{E_{L1}\cdot J_{L1,min}} > 5$$ erfüllt. Alternativ oder in Ergänzung hierzu

Wie aus der Zusammenschau der Fig. 4a, 4b, 4c, 8a, 8b, und 9 desweiteren ersichtlich, sind die beiden Längsstreben im gezeigten Ausführungsbeispiel ferner so angeordnet, daß eine jeder der Längsstreben jeweils immanente gedachte, einer maximalen Biegesteifigkeit, $E_{L1}\cdot J_{L1,max}$ bzw. $E_{L1}\cdot J_{L2,max}$, der jeweiligen Längsstrebe zughörige Biegehauptachse jeweils zur ersten gedachten Längsschnittebene XZ parallel und zur zweiten gedachten Längsschnittebene YZ senkrecht verläuft, mithin also ein Beitrag der maximalen Biegesteifigkeiten der Längsstreben zumindest an den für die Eigenfrequenzen des V- Modes und des X-Modes jeweils wirksamen Biege- oder Federsteifigkeiten, $4c_{18}+c_{24v}$, $4c_{18}+C_{24x}$, des Kopplerelements $24_1$ erster Art jeweils vernachlässigbar klein ist. Die maximale Biegesteifig-

keit, $E_{L1} \cdot J_{L1,max}$ bzw. $E_{L1} \cdot J_{L2,max}$, ist jeweils von einem maximalen Flächenträgheitsmoment, $J_{L1,max}$ bzw. $J_{L2,max}$, der jeweiligen Längsstrebe um die jeweils zugehörige gedachte Biegehauptachse sowie wiederum vom Elastizitätsmodul, $E_{L1}$ bzw. $E_{L2}$, bestimmt. In vorteilhafter Weise sind zudem auch die maximalen Biegesteifigkeiten, $E_{L1} \cdot J_{L1,max}$ bzw. $E_{L1} \cdot J_{L2,max}$, für jede der beiden Längsstreben L1, L2 jeweils gleich groß bemessen.

Nach einer weiteren Ausgestaltung der Erfindung weist der Verformungskörper VK weiters eine, insb. zumindest abschnittsweise gerade und/oder abschnittsweise zur zweiten gedachten Längsschnittebene YZ nicht-parallele, hier beispielsweise senkrecht verlaufende, erste Querstrebe Q1 auf. Wie aus der Zusammenschau der Fig. 4a, 4b, 4c, 8a, und 8b ohne weiteres ersichtlich, erstreckt sich die, beispielsweise aus dem gleichen Material wie die Verbindungsstreben V1, V2, V3, V4 und/oder die Längsstreben L1, L2 hergestellte, erste Querstrebe Q1 dabei von der ersten Verbindungsstrebe zur zweiten Verbindungsstrebe, hier beispielsweise derart, daß die auch von der ersten Längsstrebe L1 bis zur zweiten Längsstrebe L2 reicht. .Im hier gezeigten Ausführungsbeispiel ist dabei sowohl die erste Verbindungsstrebe als auch die zweite Verbindungsstrebe mit ihrem jeweiligen ersten Strebenende jeweils unmittelbar an der ersten Querstrebe Q1 fixiert. Wie die Verbindungs- bzw. die Längsstreben kann auch die erste Querstrebe beispielsweise mittels eines, etwa aus Metall, mithin dem gleichen oder einem ähnlichen Material wie die Verbindungs- bzw. die Längsstreben bestehenden, Flachstabs gebildet sein. Wie die beiden Längsstreben L1, L2 leistet auch die Querstrebe Q1 eine entsprechenden zur gesamten Federsteifigkeit des Kopplerelements $24_1$ erster Art, und zwar im besonderen eine minimale Biegesteifigkeit, $E_{Q1} \cdot J_{Q1,min}$, um eine nämlicher Querstrebe Q1 immanente gedachte Biegehauptachse, wobei nämliche minimale Biegesteifigkeit, $E_{Q1} \cdot J_{Q1,min}$, wiederum von einem vom Material nämlicher Querstrebe Q1 abhängigen Elastizitätsmodul, $E_{Q1}$. wie auch von einem jeweiligen minimalen Flächenträgheitsmoment, $J_{Q1,min}$, nämlicher Querstrebe Q1 bestimmt ist. Nach einer weiteren Ausgestaltung der Erfindung ist die Querstrebe Q1 dabei ferner so angeordnet, daß die gedachte Biegehauptachse von deren minimalem Flächenträgheitsmoment, $J_{Q1,min}$, sowohl zur ersten Längsschnittebene XZ als auch zur zweiten gedachten Längsschnittebene YZ parallel verläuft, beispielsweise auch derart, daß, wie in den Fig. 4a, 4b, 4c, 8a bzw. 8b gezeigt, nämliche gedachte Biegehauptachse in der zweiten gedachten Längsschnittebene YZ liegt. Darüberhinaus ist die Querstrebe Q1 ferner auch so ausgerichtet, daß eine zu einer maximale Biegesteifigkeit, $E_{Q1} \cdot J_{Q1,max}$, der Querstrebe Q1 zugehörige, gedachte Biegehauptachse zur ersten gedachten Längsschnittebene XZ senkrecht und zur zweiten gedachten Längsschnittebene YZ parallel verläuft, wobei die maximale Biegesteifigkeit, $E_{Q1} \cdot J_{Q1,max}$, von einem maximalen Flächenträgheitsmoment, $J_{Q1,max}$, um nämliche gedachte Biegehauptachse und wiederum vom Elastizitätsmodul, $E_{Q1}$, bestimmt ist. Im Ergebnis dessen ist also ein Beitrag der maximalen Biegesteifigkeit der Quersstrebe Q1 zumindest an den für die Eigenfrequenzen des V- Modes und des X-Modes jeweils wirksamen Biege- oder Federsteifigkeiten, $4c_{18} + c_{24v}$, $4c_{18} + c_{24x}$, des Kopplerelements $24_1$ erster Art wiederum vernachlässigbar klein.

Bei dem hier gezeigten Ausführungsbeispiel weist der Verformungskörper desweiteren eine - hier sich in gleicher Weise wie die erste Querstrebe Q1 - von der ersten Längsstrebe zur zweiten Längsstrebe erstreckende, mithin beispielsweise zumindest abschnittsweise gerade und/oder abschnittsweise zur zweiten gedachten Längsschnittebene YZ nicht-parallele und/oder zur ersten Querstrebe baugleiche, zweite Querstrebe Q2 auf, die wie auch die erste Querstrebe Q1 ebenfalls mittels eines, etwa aus Metall bestehenden, Flachstabs gebildet sein kann, und die im besonderen gleichermaßen wie die erste Querstrebe Q1 zur gesamten Federsteifigkeit des Kopplerelements $24_1$ erster Art beiträgt, nämlich ebenfalls eine minimale Biegesteifigkeit, $E_{Q2} \cdot J_{Q2,min}$, um eine nämlicher Querstrebe Q2 immanente gedachte Biegehauptachse, wobei nämliche minimale Biegesteifigkeit, $E_{Q2} \cdot J_{Q2,min}$, wiederum vom Elastizitätsmodul, $E_{L1}$, wie auch von einem jeweiligen minimalen Flächenträgheitsmoment, $J_{Q2,min}$, nämlicher Querstrebe Q1 bestimmt ist. Nach einer weiteren Ausgestaltung der Erfindung sind die erste und zweite Querstrebe ferner jeweils so angeordnet, daß jeweils die gedachte Biegehauptachse von deren jeweiligen minimalem Flächenträgheitsmoment, $J_{Q1,min}$ bzw. $J_{Q2,min}$, jeweils sowohl zur ersten Längsschnittebene XZ als auch zur zweiten gedachten Längsschnittebene YZ parallel verläuft, mithin also ein Beitrag der minimalen Biegesteifigkeiten der Querstreben Q1, Q2 zumindest an den für die Eigenfrequenzen des V- Modes und des X-Modes jeweils wirksamen Biege- oder Federsteifigkeiten, $4c_{18} + c_{24v}$, $4c_{18} + c_{24x}$, des Kopplerelements $24_1$ erster Art jeweils möglichst groß ist. Die Quersstreben können hierbei beispielsweise auch derart angeordnet sein, daß, wie in den Fig. 4a, 4b, 4c, 8a bzw. 8b gezeigt, jede der beiden gedachten Biegehauptachsen jeweils in der zweiten gedachten Längsschnittebene YZ liegt. In vorteilhafter Weise können die erste Querstrebe Q1 und die zweite Querstrebe Q2 desweiteren jeweils aus gleichem Material und/oder jeweils aus Stahl bestehen.

Zwecks einer weiteren Verbesserung der Wirksamkeit für die mit der Erfindung angestrebte Separierung der Eigenfrequenz des V-Modes der Rohranordnung von der des X-Modes weist der Verformungskörper gemäß einer weiteren Ausgestaltung der Erfindung zusätzlich zur ersten und zweiten Längsstrebe ferner wenigstens eine weitere sich von der ersten Querstrebe zur zweite Querstrebe mit einer Länge, $I_{L3}$, erstreckende, in Projektion auf die gedachte Querschnittsebene XY gerade Längsstrebe, nämlich eine dritte Längsstrebe L3, auf. Die dritte Längsstrebe ist, wie in den Fig. 4a, 4b, oder 4c bzw. 8a, 8b schematisch dargestellt, mit einem ersten Strebenende an der ersten Querstrebe sowie mit einem dem gegenüberliegenden zweiten Strebenende an der zweiten Querstrebe fixiert, und zwar im hier gezeigten Ausführungsbeispiel in einem Bereich, in dem die erste Querstrebe Q1 bzw. die zweite Querstrebe die zweite gedachte Längsschnittebene YZ jeweils imaginär schneiden. Die dritte Längsstrebe L3 kann beispielsweise wiederum plattenförmig bzw. mittels eines entsprechenden Flachstabs, etwa aus dem gleichen Material wie die beiden anderen Längsstreben L1, L2 und/oder die beiden Querstreben Q1, Q1, gebildet sein, beispielsweise einem Stahl. Gemäß einer weiteren Ausgestaltung der Erfindung ist ferner die Länge, $I_{L_3}$, der dritte Längsstrebe L3 größer als 10% der Länge, $IL_1$, der ersten Längsstrebe L1 bzw. kleiner als 120% der Länge, $IL_1$, der ersten Längsstrebe L1 gewählt. Beispielsweise kann die Längsstrebe L3, wie auch aus der Zusammenschau der Fig. 4a, 4b, 4c, 8a, 8b ersichtlich, etwa gleichlang ausgebildet sein wie die beiden anderen Längsstreben L1, L2.

Für den hier gezeigten Fall, daß der Verformungskörper mittels einer ungerade Anzahl an Längsstreben gebildet ist, ist nämliche dritte Längsstrebe L3 zudem so angeordnet, daß sie jeweils gleichweit von der ersten Längsstrebe L1 wie von zweiten Längsstrebe L2 beabstandet ist. Im Ergebnis dessen trägt die dritte Längsstrebe L3 im vorliegenden Ausführungsbeispiel eine weitere Federsteifigkeit, $c_{L_3}$, für eine auf nämliche Längsstrebe L3 einwirkende, senkrecht zur ersten gedachten Längsschnittebene XZ gerichteten Zug- bzw. Druckkraft bei, welche Federsteifigkeit, $c_{L3,min}$, sich im wesentlichen proportional zu einer Vorschrift $E_{L_3} \cdot A_{L_3} / I_{L_3}$ verhält, mithin durch eine vom vom Material nämlicher Längsstrebe L3 abhängigen Elastizitätsmodul, $E_{L_3}$, wie auch von deren Länge, $IL_3$, sowie einem Flächeninhalt, $A_{L_3}$, einer mit der ersten gedachten Längsschnittebene XZ koinzidenten Querschnittsfläche bestimmt ist. Ferner kann auch die dritte Längsstrebe L3 in vorteilhafter Weise so angeordnet sein, daß eine einer nämlicher Längsstrebe L3 immanenten minimalen Biegesteifigkeit, $E_{L_3}{\cdot}J_{L_3,min}$, zugehörige gedachte Biegehauptachse sowohl zur ersten gedachten Längsschnittebene XZ als auch zur zweiten gedachten Längsschnittebene YZ parallel verläuft bzw. daß eine einer nämlicher Längsstrebe L3 immanenten maximalen Flächenträgheitsmoment, $J_{L3,max}$, zugehörige gedachte Biegehauptachse zur ersten gedachten Längsschnittebene XZ parallel und zur zweiten gedachten Längsschnittebene YZ senkrecht verläuft. Die minimale Biegesteifigkeit, $E_{L_3}{\cdot}J_{L3,min}$, der dritten Längsstrebe L3 ist dabei wiederum von dem durch deren Material vorgegebenen Elastizitätsmodul, $E_{L_3}$, wie auch von einem minimalen Flächenträgheitsmoment, $J_{L3,min}$, um die diesem zughörige gedachte Biegehauptachse abhängig, während neben dem Elastizitätsmodul, $E_{L_3}$, ein maximales Flächenträgheitsmoment, $J_{L3,max}$, um nämliche, der maximalen Biegesteifigkeit, $E_{L_3}{\cdot}J_{L3,max}$, zughörige, gedachte Biegehauptachse die maximale Biegesteifigkeit, $E_{L_3}{\cdot}J_{L3,max}$, bestimmt.

Nicht zuletzt auch für den erwähnten Fall, daß die Eigenfrequenz, $f_{18V}$, des V-Modes niedriger eingestellt sein soll, als die Eigenfrequenz, $f_{18X}$, des X-Modes, sind die erste, zweite und dritte Längsstrebe nach einer weiteren Ausgestaltung der Erfindung ferner jeweils so bemessen und so relativ zueinander angeordnet, daß das der Verformungskörper VK, mithin das damit gebildete Kopplerelement, $24_1$ erster Art bzw. die damit gebildete die Rohranordnung, im Ergebnis die Vorschrift:

$$\frac{\left(\dfrac{a_{L1}}{2}\right)^2 \cdot \dfrac{E_{L1} \cdot A_{L1}}{I_{L1}} + \left(\dfrac{a_{L1}}{2}\right)^2 \cdot \dfrac{E_{L3} \cdot A_{L3}}{I_{L3}}}{6 \cdot \dfrac{E_{L1} \cdot J_{L1,min}}{I_{L1}}} > 1 \ \text{bzw.}$$

die Vorschrift:

$$\frac{\left(\dfrac{a_{L2}}{2}\right)^2 \cdot \dfrac{E_{L2} \cdot A_{L2}}{I_{L2}} + \left(\dfrac{a_{L2}}{2}\right)^2 \cdot \dfrac{E_{L3} \cdot A_{L3}}{I_{L3}}}{6 \cdot \dfrac{E_{L2} \cdot J_{L2,min}}{I_{L2}}} > 1$$

erfüllt. Ferner sollte der Verformungskörper im Vergleich zu den Verbindungsstreben möglichst so bemessen, daß das Kopplerelement $24_1$ erster Art im Ergebnis die Vorschrift:

$$\frac{\left(\dfrac{a_{L1}}{2}\right)^2 \cdot \left(\dfrac{E_{L1} \cdot A_{L1}}{I_{L1}} + \dfrac{E_{L3} \cdot A_{L3}}{I_{L3}}\right)}{3 \cdot \dfrac{E_{V1} \cdot J_{V1,max}}{I_{V1}}} > 2$$

erfüllt.

Im Ergebnis weiterführender Untersuchungen hat es sich ferner gezeigt, daß das Kopplerelement $24_1$ erster Art für die angestrebte Separierung der Eigenfrequenz, $f_{18V}$, des V-Modes von der Eigenfrequenz, $f_{18X}$, des X-Modes, optimal ist, wenn es die Vorschrift

$$\frac{\dfrac{1}{I_{V1}^2} \cdot \left[ \dfrac{1}{3 \cdot \dfrac{E_{V1} \cdot J_{V1,max}}{I_{V1}}} + \dfrac{1}{\left(\dfrac{a_{L1}}{2}\right)^2 \cdot \left(\dfrac{E_{L1} \cdot A_{L1}}{I_{L1}} + \dfrac{E_{L3} \cdot A_{L3}}{I_{L3}}\right)} \right]}{\dfrac{1}{I_{V1}^2} \cdot \left[ \dfrac{1}{3 \cdot \dfrac{E_{V1} \cdot J_{V1,max}}{I_{V1}}} + \dfrac{1}{6 \cdot \dfrac{E_{L1} \cdot J_{L1,min}}{I_{L1}}} \right]} > 1$$

erfüllt.

Darüberhinaus haben weitererführende Untersuchungen es als sehr vorteilhaft gezeigt, wenn - wie in den Fig. 4a, 4b, oder 4c bzw. 8a, 8b angedeutet - die erste Querstrebe Q1 in einem Bereich, in dem diese die zweite gedachte Längsschnittebene YZ imaginär schneidet, einen kleineren Querschnitt, mithin ein kleineres - hier nämlich auch minimales - Flächenträgheitsmoment, $J_{Q1,min}$, als in einem angrenzenden, sich zur ersten Verbindungstrebe V1 hin erstreckenden Nachbarbereich und als in einem angrenzenden, sich zur zweiten Verbindungstrebe V2 hin erstreckenden Nachbarbereich, bzw. die zweite Querstrebe Q2 in einem Bereich, in dem diese die zweite gedachte Längsschnittebene YZ imaginär schneidet, einen kleineren Querschnitt, mithin kleineres - hier nämlich auch minimales - Flächenträgheitsmoment, $J_{Q2,min}$, als in einem angrenzenden, sich zur dritten Verbindungstrebe V3 hin erstreckenden Nachbarbereich und als in einem angrenzenden, sich zur vierten Verbindungstrebe V4 hin erstreckenden Nachbarbereich, aufweist, und wenn - im erwähnte Fall der Verwendung einer ungeraden Anzahl an Längsstreben der vorgenanten Art zur Bildung des Kopplerelements $24_1$ - die dritte Längsstrebe L3 mit dem ersten Strebenende an der ersten Querstrebe Q1 in nämlichem Bereich von deren minimalen Flächenträgheitsmoment, $J_{Q1,min}$, und mit dem zweiten Strebenende an der zweiten Querstrebe Q2 im Bereich von deren minimalen Flächenträgheitsmoment, $J_{Q2,min}$ fixiert ist. Im Ergebnis dessen kann beispielsweise der Beitrag der beiden Querstreben Q1, Q2 zu der überwiegend für den V-Mode wirksamen Federsteifigkeit, $c_{24v}$, des Kopplerelements $24_1$ erster Art, mithin zu der die Eigenfrequenz des V-Modes der Rohranordnung insgesamt bestimmenden Federsteifigkeit, $4c_{18}+c_{24v}$, relativ zu dem Beitrag verringert werden, den die beiden Querstreben Q1, Q2 zu der überwiegend für den X-Mode wirksamen Federsteifigkeit, $c_{24X}$, des Kopplerelements $24_1$ erster Art, mithin zu der die Eigenfrequenz des X-Modes der Rohranordnung insgesamt bestimmenden Federsteifigkeit, $4c_{18}+c_{24X}$, leisten.

Dem Kopplerelement $24_1$ erster Art wohnen naturgemäß eine Vielzahl natürlicher Eigenmoden inne, von denen einige durchaus auch eine gewisse Bedeutung für eine hinsichtlich der angestrebten Separierung der Eigenfrequenzen des V-Modes und des X-Modes der Rohranordnung optimale Dimensionierung des Kopplerelements aufzeigen können. Beispielsweise kann das in den Fig. 4a, 4b, 4c bzw. 8a, 8b jeweils gezeigte, eher als Rahmenkonstruktion - ausgebildete Kopplerelement $24_1$ erster Art einen Eigenmode erster Art aufweisen, in dem der Verformungskörper nämlichen Kopplerelements mechanische Schwingungen in einer zur gedachte Querschnittsebene XY parallelen Koppler- bzw. Schwingungsebene $XY_1$ mit einer Eigenfrequenz, $f_{24X}$, ausführt, die - wie auch in Fig. 8a schematisch dargestellt - sowohl bezüglich der ersten gedachten Längsschnittebene YZ als auch bezüglich der zweiten gedachten Längsschnittebene YZ spiegelsymmetrisch sind bzw. die den Verformungskörper sowohl bezüglich der ersten gedachten Längsschnittebene YZ als auch bezüglich der zweiten gedachten Längsschnittebene YZ spiegelsymmetrisch erscheinen lassen. Ferner kann nämliches Kopplerelement $24_1$ zudem einen weiteren Eigenmode, nämlich einen Eigenmode zweiter Art aufweisen, in dem der Verformungskörper nämlichen Kopplerelements mechanische Schwingungen in nämlicher, zur gedachte Querschnittsebene XY parallelen Kopplerebene $XY_1$ mit einer, zumeist von der Eigenfrequenz, $f_{24X}$, des Eigenmodes erster Art verschiedenen, Eigenfrequenz, $f_{24V}$, ausführen kann, die - wie in der Fig. 8b schematisch dargestellt - lediglich bezüglich der zweiten gedachten Längsschnittebene YZ spiegelsymmetrisch sind bzw. die den Verformungskörper vorübergehend lediglich bezüglich der zweiten gedachten Längsschnittebene YZ spiegelsymmetrisch erscheinen lassen.

Wie aus der Zusammenschau der Fig. 7a, 7b, 8a, 8b ersichtlich, korrespondieren dabei der dem Kopplerelement $24_1$ innwohnende Eigenmode erster Art mit dem X-Mode der Rohranordnung bzw. der dem Kopplerelement $24_1$ innwohnende Eigenmode zweiter Art mit dem V-Mode der Rohranordnung hinsichtlich der jeweiligen Schwingungsbewegungen. In Kenntnis dessen ist gemäß einer weiteren Ausgestaltung der Erfindung der Verformungskörper, mithin das damit gebildet Kopplerelement ferner so dimensioniert, daß ein nämlichem Kopplerelement immanentes Eigenfrequenz-Verhältnis, $f_{24X}/f_{24V}$, definiert durch ein Verhältnis der Eigenfrequenz von dessen Eigenmode erster Art zur Eigenfrequenz von dessen Eigenmode zweiter Art, größer als eins, möglichst aber auch größer als 10, ist. Infolgedessen ist nämlich auch ein dem Kopplerelement $24_1$ immanentes Federsteifigkeits-Verhältnis, definiert durch ein Verhältnis einer die Eigenfrequenz, $f_{24X}$, von dessen Eigenmode erster Art, mithin auch die Eigenfrequenz des X-Modes der gesamten Rohranordnung mitbestimmenden Federsteifigkeit, $c_{24X}$, zu einer die Eigenfrequenz, $f_{24V}$, von dessen Eigenmode zweiter Art, mithin auch die Eigenfrequenz des V-Modes der gesamten Rohranordnung mitbestimmenden Federsteifigkeit, $c_{24V}$, größer als eins bzw. idealerweise auch größer als 10.

Für den Fall, daß das Kopplerelement $24_1$ erster Art im wesentlichen einer Kombination vorangehend einzeln beschriebener Detaillösungen, nicht zuletzt aber auch dem sich aus der Zusammenschau der Fig. 4a, 4b, 4c, 5a, 5b sowie 8a, 8b ergebenden Aufbau entspricht, kann die überwiegend für den X-Mode wirksamen Federsteifigkeit, $c_{24X}$, mit im übrigen durchaus guter Genauigkeit über die Beziehung

$$\frac{1}{l_{V1}^2} \cdot \left[ \frac{1}{3 \cdot \dfrac{E_{V1} \cdot J_{V1,max}}{l_{V1}}} + \frac{1}{\left(\dfrac{a_{L1}}{2}\right)^2 \cdot \left( \dfrac{E_{L1} \cdot A_{L1}}{l_{L1}} + \dfrac{E_{L3} \cdot A_{L3}}{l_{L3}} \right)} \right] \approx c_{24x}$$

abgeschätzt werden, während die überwiegend für den V-Mode wirksamen Federsteifigkeit, $c_{24V}$, des Kopplerelements $24_1$ erster Art in guter Nährung der Beziehung entspricht:

$$\frac{1}{l_{V1}^2} \cdot \left[ \frac{1}{3 \cdot \dfrac{E_{V1} \cdot J_{V1,max}}{l_{V1}}} + \frac{1}{6 \cdot \dfrac{E_{L1} \cdot J_{L1,min}}{l_{L1}}} \right] \approx c_{24v} .$$

Weiterführende Untersuchungen an Rohranordnungen gemäß der vorliegenden Erfindung haben zudem ergeben, daß weitere für den Betrieb eines Meßaufnehmers gemäß der Erfindung beachtenswerter natürliche Schwingungsmoden des Kopplerelements solche Eigenmode des Kopplerelements $24_1$ sein können, in denen der Verformungskörper mit einer jeweiligen Eigenfrequenz um eine zugehörige statische Ruhlage oszillieren kann, derart, daß auch die vier Verbindungsstreben simultan dazu Biegeschwingungen um eine jeweilige statische Ruhelage in Richtung der Längsachse ausführen. Von besonderem Interesse ist hierbei beispielsweise auch jener - hier als Eigenmode dritter Art bezeichneter - Eigenmode des Kopplerelements $24_1$, in dem der Verformungskörper, sich im wesentlichen lediglich translatorisch in Richtung einer sowohl zur ersten gedachten Längsschnittebene als auch zur zweiten gedachten Längsschnittebene parallelen Längsachse - hier also auch der Längsachse L - bewegend, mit einer Eigenfrequenz, $f_{24Z}$, um eine zugehörige statische Ruhlage oszillieren kann, nämlich derart, daß die vier Verbindungsstreben im wesentlichen gleichsinnig bzw. gleichmäßig Biegeschwingungen um eine jeweilige statische Ruhelage in Richtung der nämlichen Längsachse ausführen. In Kenntnis dessen ist gemäß einer weiteren Ausgestaltung der Erfindung das Kopplerelement erster Art ferner so ausgebildet, daß die Eigenfrequenz, $f_{24Z}$, von dessen Eigenmode dritter Art ungleich der erwähnten, bei vollständig mit Luft gefüllten Meßrohren meßbaren, Eigenfrequenz, $f_{18V,Ref}$, des Biegeschwingungsmode erster Art der Rohranordnung ist. Hierbei hat es beispielsweise als besonders vorteilhaft gezeigt, wenn - nicht zuletzt zwecks Vermeidung von Schwingungen des Kopplerelement erster Art in Resonanz zu den Biegeschwingungen im V-Mode - nämliche Eigenfrequenz, $f_{24Z}$, des Kopplerelements erster Art um mehr als 10Hz größer als nämliche Eigenfrequenz, $f_{18V,Ref}$, des V-Modes der Rohranordnung ist bzw. wenn nämliche Eigenfrequenz, $f_{24Z}$, des Kopplerelements erster Art mehr als 101%, möglichst auch mehr als 105%, der nämlichen Eigenfrequenz, $f_{18V,Ref}$, des V-Modes der Rohranordnung beträgt. Weiter von Interesse kann ferner beispielsweise auch jener - hier als Eigenmode vierter Art bezeichneter - Eigenmode des Kopplerelements $24_1$ sein, in dem der Verformungskörper sich lediglich translatorisch in der erwähnten Koppler- bzw. Schwingungsebene $XY_1$ bewegend, mit einer Eigenfrequenz, $f_{24XY}$, um dessen zugehörige statische Ruhlage oszillieren kann, und zwar derart, daß die vier Verbindungsstreben gleichsinnig und/oder gleichmäßig Biegeschwingungen um deren jeweilige statische Ruhelage in der Kopplerebene $XY_1$ ausführen. Auch jene Eigenfrequenz, $f_{24XY'}$, des Eigenmodes vierter Art des Kopplerelements $24_1$ sollte zur Vermeidung von unerwünschten Störeinflüssen wiederum höher als die Eigenfrequenz, $f_{18X}$, des Biegeschwingungsmode zweiter Art der Rohranordnung eingestellt sein, und zwar möglichst in der Weise, daß nämliche Eigenfrequenz, $f_{24XY'}$, des Schwingungsmodes vierter Art des Kopplerelements erster Art um mehr als 10Hz größer als nämliche Eigenfrequenz, $f_{18X}$, des X-Modes der Rohranordnung ist, und/oder daß nämliche Eigenfrequenz, $f_{24XY'}$, des Schwingungsmodes vierter Art des Kopplerelements erster Art mehr als 101%, möglichst auch mehr als 105%, der nämlichen Eigenfrequenz, $f_{18X}$, des X-Modes der Rohranordnung beträgt.

Zwecks Vermeidung seitens des Kopplerelements erster Art potentiell generierten Störeinflüsse, etwa in einem der vorgenannten Eigenmoden des Kopplerelements erster Art auf einer Eigenfrequenz des aktiv angeregten Nutzmodes, mithin des V-Modes, ist der- hier beispielsweise mittels dreier Längsstreben L1, L2, L3 und zweier Querstreben Q1, Q2 gebildete - Verformungskörper VK des Kopplerelements erster Art nach einer weiteren Ausgestaltung der Erfindung so dimensioniert, daß er eine Masse, $M_{VK}$, aufweist, die weniger als 50% der Leermasse, $M_{18}$, des ersten Meßrohrs beträgt. Ferner sind die, insb. baugleichen, Verbindungsstreben sowie der daran fixierte, ggf. auch eine mehr als 10% der Leermasse, $M_{18}$, des ersten Meßrohrs betragende Masse, $M_{VK}$, aufweisende, Verformungskörper VK nach einer weiteren Ausgestaltung der Erfindung so dimensioniert, daß nämliches Kopplerelement $24_1$ auch die Vorschrift:

$$\frac{\sqrt{\frac{1}{M_{VK}} \cdot \frac{E_{V1} \cdot J_{V1,min}}{I_{V1}^3}}}{f_{18V,Ref}} > 1,05$$

erfüllt, daß also ein zumindest näherungsweise einer Eigenfrequenz des Kopplerelements $24_1$ entsprechender Frequenzwert, $\sqrt{\frac{1}{M_{VK}} \cdot \frac{E_{V1} \cdot J_{V1,min}}{I_{V1}^3}}$, mehr als 105% der oben erwähnten, bei vollständig mit Luft befüllter Rohranordnung meßbaren Eigenfrequenz, $f_{18X,Ref}$, des V-Modes beträgt.

Falls erforderlich - beispielsweise weil der Meßaufnehmer für die Messung extrem heißer Medien bzw. für die Messung in Anwendungen mit über einen weiten Bereich schwankender Betriebstemperatur, etwa infolge wiederkehrend in-situ durchgeführten Reinigungsvorgängen des Meßaufnehmers ("cleaning in process", "sterilizing in process" etc.), vorgesehen ist und insoweit nennenswerte thermische Ausdehnungen der Meßrohre zu erwarten sind - kann das Kopplerelement $24_1$ erster Art ferner so ausgebildet sein, daß es sich im wesentlichen gleichermaßen ausdehnen kann, wie die darüber jeweils gekoppelten Meßrohre, und/oder daß es zumindest gegenüber von Kräften, die in Richtung einer durch die Scheitelpunkte der beiden durch das jeweilige Kopplerelemente zweiter Art miteinander verbundenen Meßrohre verlaufenden, etwa mit der erwähnten gedachten Hochachse H koinzidenten, oder dazu parallelen Wirkungslinie ausreichend nachgiebig ist. Dies kann, wie Untersuchungen an Rohranordnungen gemäß der Erfindung gezeigt haben, ohne weiteres dadurch erreicht werden, indem die Rohranordnung insgesamt die Vorschrift:

$$\frac{\frac{E_{V1} \cdot A_{V1}}{I_{V1}}}{3 \cdot \frac{E_{18} \cdot J_{18}}{a_K^3 \cdot \left(1 - 1,5 \cdot \frac{a_k}{L_{18x}}\right)}} < 20$$
erfüllt. Im Ergebnis dessen kann nämlich ein für eine Vielzahl industrieller Anwendungsfälle durchaus ausreichender, nämlich sich über mehr als 50 K (Kelvin) erstreckender, Temperaturarbeitsbereich für einen Meßaufnehmer gemäß der vorliegenden Erfindung, mithin dem damit gebildeten Meßsystem bereitgestellt werden kann. Die Nachgiebigkeit des Kopplerelements in Richtung der Hochachse H kann - alternativ oder in Ergänzung zur Realisierung vorgenannter Vorschrift mit der Rohranordnung - beispielsweise durch die bereits erwähnte Verwendung eines in Projektion auf die zweite gedachte Längsschnittebene YZ zumindest abschnittsweise, beispielsweise S-förmig, Z-förmig, V-förmig und/oder- wie in Fig. 5a, 5b schematisch dargestellt - eher V-förmig, gekrümmten Flachstabes für die Verbindungsstreben auf einfache, gleichwohl sehr effektive Weise herbeigeführt bzw. weiter verbessert werden. Ferner kann es, nicht zuletzt auch zwecks der Realisierung eines für die angestrebte Separierung der Eigenfrequenzen des V-Modes und des X-Modes der Rohranordnung dennoch ausreichend effektiven Kopplerelements, hierbei durchaus von Vorteil sein, die Verbindungsstreben - wie auch aus der Zusammenschau der Fig. 4a, 4b, 4c, 5a, 5b ersichtlich - lediglich in Projektion auf die zweite gedachte Längsschnittebene YZ, nicht aber in Projektion auf die Querschnittsebene XY bzw. auf die erste gedachte Längsschnittebene XZ gekrümmt auszubilden. Somit kann einerseits eine geringfügige Änderung des relative Abstandes, etwa infolge thermisch bedingter Dehnung, zwischen Meßrohre ermöglicht, und zwar unter weitgehender Vermeidung von das Schwingungsverhalten der Rohranordnung negativ beeinflussenden Erhöhungen von mechanischen Spannungen innerhalb der Rohranordnung, anderseits aber auch eine ausreichende Separierung der der Eigenfrequenzen des V-Modes und des X-Modes der Rohranordnung erzielt werden. Die vorgenannte, in Projektion auf die zweite gedachte Längsschnittebene YZ sichtbare Krümmung der Verbindungsstreben kann in vorteilhafter Weise ferner so ausgebildet sein, daß jede der Verbindungsstreben, wie auch in den Fig. 4a, 4b, 5a, 5b angedeutet, bezüglich der gedachten Querschnittsebene XY, nämlich von der Querschnittsebene XY aus gesehen, jeweils zumindest abschnittsweise konvex sind.

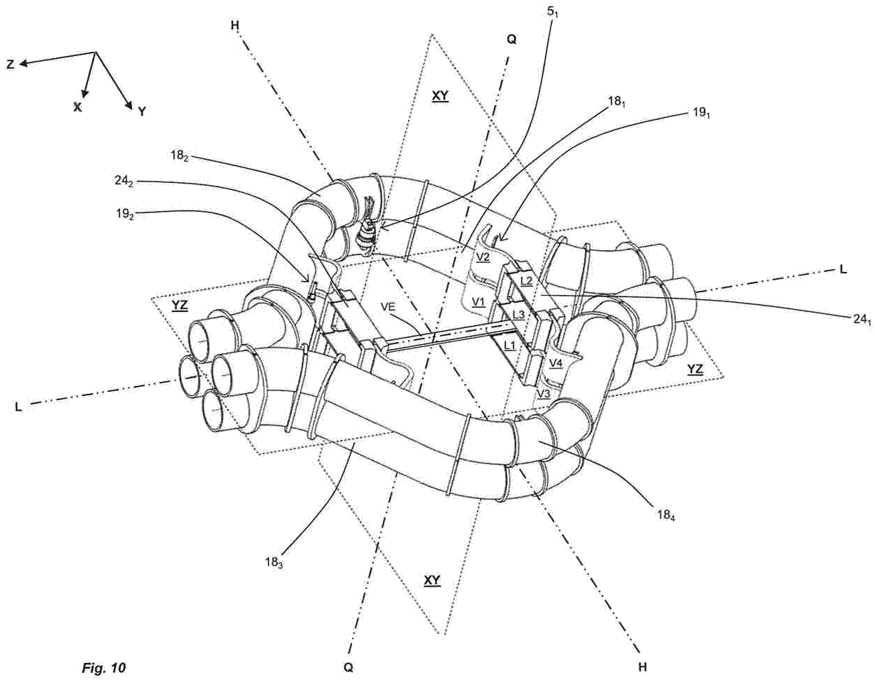

Nicht zuletzt für den erwähnten, mithin in den Fig. 4a, 4b, 4c, 5a, 5b, wie auch der Fig. 10 exemplarisch gezeigten Fall, daß das erste Kopplerelement $24_1$ erster Art von der Querschnittsebene XY beabstandet, hier nämlich einlaßseitig im Meßaufnehmer angeordnet ist, umfaßt die Rohranordnung gemäß einer Weiterbildung außerdem ein, sowohl vom ersten Strömungsteiler als auch vom zweiten Strömungsteiler wie auch vom ersten Kopplerelement $24_1$ erster Art beabstandet, - hier auslaßseitig - an jedem der vier Meßrohre fixiertes, insb. zum ersten Kopplerelement $24_1$ erster Art im wesentlichen baugleiches, zweites Kopplerelement $24_2$ erster Art zum Einstellen von Eigenfrequenzen natürlicher Schwingungsmoden der Rohranordnung, nicht zuletzt auch den Eigenfrequenzen des V-Modes und des X-Modes der Rohranordnung. Für den bereits erwähnten Fall, daß das erste Kopplerelement $24_1$ erster Art einlaßseitig im Meßaufnehmer plaziert und das zweite Kopplerelement $24_2$ erster Art auslaßseitig im Meßaufnehmer plaziert sind, sind die beiden nämlichen Kopplerelemente $24_1$, $24_2$ erster Art gemäß einer weiteren Ausgestaltung der Erfindung zudem auch bezüglich der erwähnten gedachten Querschnittsebene XY des Meßaufnehmers symmetrisch - mithin bezüglich nämlicher Querschnittsebene XY äquidistant und zumindest mit ihrem jeweiligen Verformungskörper bezüglich nämlicher Querschnittsebene XY parallel verlaufend - im Meßaufnehmer angeordnet.

Zur Erzielung eines möglichst großen Frequenzabstandes zwischen der Eigenfrequenz des ersten Kopplerelement erster Art, mithin auch des dem zweiten Kopplerelement erster Art immanenten Eigenmode dritter Art einerseits, und der Eigen- bzw. Resonanzfrequenz des V-Modes der Rohranordnung anderseits kann es hierbei ferner von Vorteil sein, die beiden Kopplerelemente $24_1$, $24_2$ erster Art, wie auch in Fig. 10 schematisch dargestellt, mittels wenigstens eines, beispielsweise stab- oder plattenförmigen, Verbindungselements VE miteinander mechanisch zu verbinden, das hierbei im besonderen dazu dient, eine translatorische Bewegung des Verformungskörpers VK des ersten Kopplerelements $24_1$ erster Art relativ zum zweiten Kopplerelement $24_2$ erster Art in Richtung einer sowohl zur ersten gedachten Längsschnittebene als auch zur zweiten gedachten Längsschnittebene parallelen Längsachse - hier also auch in Richtung der Längsachse L - bzw. eine translatorische Relativbewegung der beiden Kopplerelemente $24_1$, $24_2$ erster Art in nämliche Richtung zumindest signifikant zu unterdrückenden, möglichst aber gänzlich zu verhindern. Das wenigstens eine Verbindungselement VE kann hierfür, wie auch in Fig. 10 schematisch dargestellt, an der dritten Längsstrebe L3 des Kopplerelements $24_1$, mithin bei zu nämlichem Kopplerelement $24_1$ baugleichem zweitem Kopplerelement $24_2$ erster Art, an dessen entsprechender - hier also mittleren - Längsstrebe fixiert sein. Alternativ oder in Ergänzung dazu, kann die der Vermeidung von translatorischen Relativbewegungen dienende mechanische Kopplung der beiden Kopplerelemente $24_1$, $24_2$ erster Art beispielsweise aber auch vermittels an den äußeren Längstreben L1, L2 (und deren jeweiligen Pendant des zweiten Kopplerelementes $24_2$ erster Art) fixierten Verbindungselementen realisiert werden. Das wenigstens eine Verbindungselement VE kann beispielsweise wiederum plattenförmig bzw. mittels eines entsprechenden Flachstabs, etwa aus dem gleichen Material wie die Längsstreben L1, L2 bzw. L3 und/oder die beiden Querstreben Q1, Q1, gebildet sein, beispielsweise also einem Stahl. Ferner können die beiden Längsstreben und das wenigstens eine Verbindungselement beispielsweise auch als monolithisches, mithin fügestellenfreies Bauteil ausgebildet sein. Durch die Verwendung des wenigstens einen die beiden Kopplerelemente $24_1$, $24_2$ mechanisch koppelnden Verbindungselements VE kann der angestrebte Frequenzabstand zwischen dem jeweiligen Eigenmode dritter Art jedes der Kopplerelemente und der Eigen- bzw. Resonanzfrequenz des V-Modes der Rohranordnung somit auch mit Verbindungsstreben V1, V2, V3, V4 von vergleichsweise niedriger minimale Biegesteifigkeit, $E_{V1} \cdot J_{V1,min}$, $E_{V2} \cdot J_{V2,min}$, $E_{V3} \cdot J_{V3,min}$, bzw. $E_{V4} \cdot J_{V4,min}$, mithin von in Richtung der gedachten Hochachse H hoher Nachgiebigkeit erreicht werden. Dies kann, nicht zuletzt für Meßsysteme mit kleiner nomineller Nennweite, insb. von weniger als 100mm, und/oder für Meßsysteme, die für Applikationen mit über einen weiten Bereich schwankender und/oder vergleichsweise hoher Mediums- bzw. Betriebstemperatur vorgesehen sind, durchaus von Vorteil sein.

Falls erforderlich, können desweiteren allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre $18_1$, $18_2$, $18_3$, $18_4$ zumindest paarweise ein- und auslaßseitig jeweils mittels als sogenannte Knotenplatten dienenden Kopplerelemente - im folgenden Kopplerelemente zweiter Art - miteinander mechanisch verbunden sind. Darüber hinaus können mittels solcher Kopplerelemente erster Art, sei es durch deren Dimensionierung und/oder deren Positionierung auf den Meßrohren mechanische Eigenfrequenzen der Meßrohre und somit auch mechanische Eigenfrequenzen der mittels der vier Meßrohre gebildeten Rohranordnung, einschließlich daran angebrachter weiterer Komponenten des Meßaufnehmers, mithin auch die natürlichen Eigenfrequenzen von deren V-Mode bzw. von deren X-Mode, und insoweit auch das Schwingungsverhalten des Meßaufnehmers insgesamt gezielt beeinflußt werden. Die als Knotenplatten dienenden Kopplerelemente zweiter Art können beispielsweise dünne, insb. aus demselben oder einem ähnlichen Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre $18_1$, $18_2$ bzw. $18_3$ bzw. $18_4$ aufgeklemmt und ggf. hernach noch mit dem jeweiligen Meßrohr, beispielsweise durch Hartverlöten oder Schweißen, stoffschlüssig verbunden werden können.

Dementsprechend umfaßt die Rohranordnung gemäß einer weiteren Ausgestaltung der Erfindung ein, beispielsweise plattenförmiges, erstes Kopplerelement $25_1$ zweiter Art, das-wie aus den Fig. 4a, 4b, 5a, 5b, 6a ohne weiteres ersichtlich - zum Bilden von einlaßseitigen Schwingungsknoten zumindest für Vibrationen, nicht zuletzt auch Biegeschwingungen, etwa denen im erwähnten V-Mode, des ersten Meßrohrs und für dazu gegengleiche Vibrationen des zweiten Meßrohrs, vom ersten Strömungsteiler beabstandet, einlaßseitig am ersten Meßrohr und am zweiten Meßrohr fixiert ist, sowie ein, etwa zum ersten Kopplerelement baugleiches, zweites Kopplerelement $25_2$ zweiter Art, das zum Bilden von auslaßseitigen Schwingungsknoten für Vibrationen, nicht zuletzt auch Biegeschwingungen, mithin denen im erwähnten V-Mode bzw. X-Mode, des ersten Meßrohrs $18_1$ und für dazu gegengleiche Vibrationen des zweiten Meßrohrs $18_1$, vom zweiten Strömungsteiler $20_2$ beabstandet, auslaßseitig am ersten Meßrohr $18_1$ und am zweiten Meßrohr $18_2$ fixiert ist. Gleichermaßen weist die Rohranordnung zum Bilden von einlaßseitigen Schwingungsknoten für Vibrationen, insb. den erwähnten Biegeschwingungen, des dritten Meßrohrs und für dazu gegengleiche Vibrationen des vierten Meßrohrs ein, etwa wiederum plattenförmiges bzw. zum ersten Kopplerelement $24_1$ zweiter Art baugleiches, drittes Kopplerelement $25_3$ zweiter Art, das, vom ersten Strömungsteiler beabstandet einlaßseitig, am dritten Meßrohr und am vierten Meßrohr fixiert ist, sowie ein, etwa zum ersten Kopplerelement $25_1$ zweiter Art baugleiches, viertes Kopplerelement $25_4$ zweiter Art, das zum Bilden von auslaßseitigen Schwingungsknoten für Vibrationen, etwa den erwähnten Biegeschwingungen, des dritten Meßrohrs und für dazu gegengleiche Vibrationen des vierten Meßrohrs, vom zweiten Strömungsteiler beabstandet, auslaßseitig auch am dritten Meßrohr und am vierten Meßrohr fixiert ist, auf.

Die vier vorgenannten Kopplerelemente $25_1$, $25_2$, $25_3$, $25_4$ zweiter Art sind gemäß einer weiteren Ausgestaltung der Erfindung und wie auch aus der Zusammenschau der Fig. 4a, 4b, 5a, 5b, 6a, 6b ohne weiteres ersichtlich jeweils an genau zwei, ansonsten aber an keinem weiteren der vier Meßrohre fixiert, so daß im Ergebnis das erste und zweite Kopplerelemente $25_1$, $25_2$ zweiter Art lediglich am ersten und zweiten Meßrohr und das dritte und vierte Kopplerelement $25_3$, $25_4$ zweiter Art lediglich am dritten und vierten Meßrohr fixiert sind. Infolge dessen kann die Rohranordnung, mithin auch der Meßaufnehmer z.B. in der Weise hergestellt, daß zunächst das erste und zweite Kopplerelement $25_1$, $25_2$ zweiter Art jeweils am (künftigen) ersten und zweiten Meßrohr $18_1$, $18_2$ unter Bildung eines ersten Meßrohrpakets und das dritte und vierte Kopplerelement $25_3$, $25_4$ zweiter Art jeweils am (künftigen) dritten und vierten Meßrohr $18_3$, $18_4$ unter Bildung eines zweiten Meßrohrpakets fixiert werden. Somit ist es möglich, die beiden Meßrohrpakte zu einem späteren Zeitpunkt, etwa unmittelbar vor oder auch erst nach dem Einsetzen der beiden Meßrohrpakte in das erwähnte rohrförmige Mittelsegment $7_{1A}$ des (künftigen) Aufnehmergehäuses, durch entsprechendes Fixieren des ersten und zweiten Kopplerelements $24_1$, $24_2$ erster Art an jedem der beiden Meßrohrpakte, etwa einstweilen jeweils an wenigstens einem der Meßrohre $18_1$, $18_2$ des ersten Meßrohrpakets und an wenigstens einem der Meßrohre $18_3$, $18_4$ des zweiten Meßrohrpakets, zur Rohranordnung zusammenzufügen. Dies hat - nicht zuletzt auch für den erwähnten Fall, das der Meßaufnehmer für große nominelle Nennweiten von mehr als 100 mm trotz der relativ großen Abmessungen seiner Komponenten, mithin der Rohranordnung, des Aufnehmergehäuses, der Strömungsteiler etc. - den Vorteil, daß die im Ergebnis relativ ausladende Rohranordnung während des überwiegenden Dauer des gesamten Fertigungsprozesses, indem der Meßaufnehmer hergestellt wird, erst zu einem relativ späten Zeitpunkt in toto gehandhabt zu werden braucht. Darüberhinaus kann dadurch durchaus auch auf solche Rohranordnung zurückgegriffen werden, wie sie bislang in herkömmliche Meßaufnehmer mit Doppelrohranordnung verwendet worden sind, einhergehend mit einer beträchtlichen Reduzierung der Fertigungs- und Lagerhaltungskosten. Falls erforderlich, können die Kopplerelemente $25_1$, $25_2$, $25_3$, $25_4$ aber auch in entsprechender jeweils an allen vier Meßrohren fixiert sein, beispielsweise auch für den Fall, daß der Meßaufnehmer für relativ kleine nominelle Nennweiten von 50 mm oder weniger ausgelegt ist.

Im hier gezeigten Ausführungsbeispiel sind das erste Kopplerelement $25_1$ zweiter Art sowohl an einem sich zwischen dem ersten Strömungsteiler $20_1$ und dem ersten Kopplerelement $24_1$ erster Art erstreckenden - hier abschnittsweise gebogenen - einlaßseitigen Rohrsegment des ersten Meßrohrs $18_1$ als auch an einem sich gleichermaßen zwischen dem ersten Strömungsteiler $20_1$ und dem ersten Kopplerelement $24_1$ erster Art erstreckenden einlaßseitigen Rohrsegment des zweiten Meßrohrs $18_2$ und das zweite Kopplerelement $25_2$ zweiter Art sowohl an einem sich zwischen dem zweiten Strömungsteiler $20_2$ und dem zweiten Kopplerelement $24_2$ erster Art erstreckenden - hier ebenfalls abschnittsweise gebogenen - auslaßseitigen Rohrsegment des ersten Meßrohrs $18_1$ als auch an einem sich gleichermaßen zwischen dem zweiten Strömungsteiler $20_2$ und dem zweiten Kopplerelement $24_2$ erster Art erstreckenden auslaßseitigen Rohrsegment des zweiten Meßrohrs $18_2$ fixiert. In analoger Weise sind das dritte Kopplerelement $25_3$ zweiter Art sowohl an einem sich zwischen dem ersten Strömungsteiler $20_1$ und dem ersten Kopplerelement $24_1$ erster Art erstreckenden - hier ebenfalls abschnittsweise gebogenen - einlaßseitigen Rohrsegment des dritten Meßrohrs $18_3$ als auch an einem sich gleichermaßen zwischen dem ersten Strömungsteiler $20_1$ und dem ersten Kopplerelement $24_1$ erster Art erstreckenden einlaßseitigen Rohrsegment des vierten Meßrohrs $18_4$ und das vierte Kopplerelement $25_4$ zweiter Art sowohl an einem sich zwischen dem zweiten Strömungsteiler $20_2$ und dem zweiten Kopplerelement $24_2$ erster Art erstreckenden - hier wiederum abschnittsweise gebogenen - auslaßseitigen Rohrsegment des dritten Meßrohrs $18_3$ als auch an einem sich gleichermaßen zwischen dem zweiten Strömungsteiler $20_2$ und dem zweiten Kopplerelement $24_1$ erster Art erstreckenden auslaßseitigen Rohrsegment des vierten Meßrohrs $18_4$ fixiert. Dies im besonderen in der Weise, daß - wie aus der Zusammenschau der Fig. 4a, 4b, 5a, 5b ohne weiteres ersichtlich - das zumindest erste und vierte Kopplerelement zweiter Art zueinander parallel sind und zumindest das zweite und dritte Kopplerelement zweiter Art zueinander parallel sind. Jedes der vier vorgenannten, insb. einander baugleichen, Kopplerelemente $25_1$, $25_2$ zweiter Art ist gemäß einer weiteren Ausgestaltung der Erfindung zudem plattenförmig ausgebildet, beispielsweise in derart, daß es jeweils eine rechteckförmige, oder oder aber daß es jeweils, wie auch aus den Fig. 4a, 4b ersichtlich, eine eher ovale Grundfläche aufweist. Wie aus der Zusammenschau der Fig. 4a, 4b, 5a, 5b ferner ersichtlich, könne die vier Kopplerelemente $24_1$, $24_2$ $24_3$, $24_4$ ferner so ausgebildet und im Meßaufnehmer so plaziert sein, daß sie bezüglich der gedachten Längsschnittebene YZ symmetrisch sind und daß sie bezüglich der gedachten Längsschnittebene XZ und bezüglich der gedachten Querschnittsebene XY paarweise symmetrisch angeordnet sind, im Ergebnis also ein Massenschwerpunkt jedes der Kopplerelemente zweiter Art jeweils einen gleichen Abstand zu einem Massenschwerpunkt der Rohranordnung aufweist. Es kann ferner im Sinne einer noch einfacheren und noch genaueren Einstellung des Schwingungsverhaltens des Meßaufnehmers durchaus von Vorteil sein, wenn der Meßaufnehmer, wie beispielsweise in der eingangs erwähnten US-A 2006/0150750 vorgeschlagen und wie in den Fig. 4a, 4b, 5a, 5b angedeutet, darüberhinaus noch weitere, solcher als Knotenplatten wirkenden Kopplerelemente der vorgenannten Art aufweist, beispielsweise also insgesamt 8 oder 12 Kopplerelemente zweiter Art.

Wie in den Fign. 5a und 5b schematisch dargestellt, definieren die Rohrform jedes der Meßrohre zusammen mit einem minimaler Abstand zwischen dem ersten und zweiten Kopplerelement zweiter Art - mithin also bei der Verwendung von 8 oder mehr als solcher Kopplerelemente die dem Massenschwerpunkt der Rohranordnung ein- und auslaßseitig jeweils am nahesten liegenden, insoweit also die ein- und auslaßseitig jeweils innersten Kopplerelemente zweiter Art - jeweils eine Nutz-Schwinglänge, $L_{18x}$, jedes der Meßrohre. Die Nutz-Schwinglänge, $L_{18x}$, des jeweiligen Meßrohrs entspricht hierbei, wie auch in den Fig. 5a und 5b schematisch dargestellt, dabei einer Länge des zwischen den beiden Kopplerelementen $25_1$, $25_2$ zweiter Art verlaufenden Abschnitts der Biegelinie des nämlichen Meßrohrs, wobei nach einer weiteren Ausgestaltung der Erfindung die Kopplerelemente zweiter Art so im Meßaufnehmer plaziert sind, daß im Ergebnis die Nutz-Schwinglänge jedes der Meßrohre $18_1$, $18_2$, $18_3$, $18_4$ weniger als 3000 mm, insb. weniger als 2500 mm und/oder mehr als 800 mm, beträgt. Alternativ oder in Ergänzung ist ferner vorgesehen, die die Meßrohre so auszubilden und die Kopplerelemente erster Art so anzuordnen, daß alle vier Meßrohre $18_1$, $18_2$, $18_3$, $18_4$ im Ergebnis die gleiche Nutz-Schwinglänge, $L_{18x}$, aufweisen. Nach einer weiteren Ausgestaltung der Erfindung sind zu dem das erste Meßrohr und das zweite Meßrohr zumindest über den sich zwischen dem ersten Kopplerelement zweiter Art und dem zweiten Kopplerelement zweiter Art erstreckenden Bereich - mithin also deren jeweiligen Nutz-Schwinglänge - zueinander parallel, und sind auch das dritte Meßrohr und das vierte Meßrohr zumindest über den sich zwischen dem dritten Kopplerelement zweiter Art und dem vierten Kopplerelement zweiter Art erstreckenden Bereich - mithin also deren jeweiligen Nutz-Schwinglänge - zueinander parallel.

Wie aus der Zusammenschau der Fig. 4a, 4b, 5a, und 5b ersichtlich sind das erste Kopplerelement erster Art und das erste bzw. dritte Kopplerelement zweiter Art ferner so angeordnet, daß ein minimaler Abstand zwischen dem ersten Kopplerelement zweiter Art und dem zweiten Ende der zweiten Verbindungsstrebe des Kopplerelements erster Art, gemessen entlang einer Mantellinie des zweiten Meßrohrs, gleich einem minimalen Abstand, $a_K$, zwischen dem ersten Kopplerelement zweiter Art und dem zweiten Ende der ersten Verbindungsstrebe des Kopplerelements erster Art, gemessen entlang einer Mantellinie des ersten Meßrohrs, ist, und daß sowohl ein minimaler Abstand zwischen dem dritten Kopplerelement zweiter Art und dem zweiten Ende der dritten Verbindungsstrebe des Kopplerelements erster Art, gemessen entlang einer Mantellinie des dritten Meßrohrs, als auch minimaler Abstand zwischen dem dritten Kopplerelement zweiter Art und dem zweiten Ende der vierten Verbindungsstrebe des Kopplerelements erster Art, gemessen entlang einer Mantellinie des vierten Meßrohrs, jeweils gleich dem minimalen Abstand, $a_K$, zwischen dem ersten Kopplerelement zweiter Art und dem zweiten Ende der ersten Verbindungsstrebe des Kopplerelements erster Art ist.

Weiterführenden Untersuchungen an Rohranordnungen gemäß der vorliegenden Erfindung haben ferner ergeben, daß es, etwa auch zwecks einer Minimierung des deformierenden Einflusses des Kopplerelements erster Art auf die ursprüngliche natürliche Schwingungsform der Meßrohre, von Vorteil sein kann, wenn das erste Kopplerelement $24_1$, abgestimmt auf die Meßrohre, nicht zuletzt auch auf die aus deren Form und Anordnung resultierenden maximalen seitlichen Ausdehnung $Q_{18}$ der Rohranordnung bzw. auf die Rohrquerschnitte der Meßrohre, so dimensioniert und so mittels seiner Verbindungsstreben an den Meßrohren fixiert ist, daß die Rohranordnung im Ergebnis die Vorschrift:

$$\frac{0,5 \cdot l_{L1}}{0,5 \cdot Q_{18} - \left(D_{18} + 2 \cdot h_{18}\right)} \leq \frac{a_k}{L_{18,x}} + \frac{0,5 \cdot D_{18} + h_{18} + 0,5 \cdot A_{18}}{0,5 \cdot Q_{18} - \left(D_{18} + 2 \cdot h_{18}\right)} \qquad \text{bzw.} \qquad \text{auch} \qquad \text{die} \qquad \text{Vorschrift:}$$

$$\frac{0,5 \cdot l_{L1}}{0,5 \cdot Q_{18} - \left(D_{18} + 2 \cdot h_{18}\right)} > 0,2 \cdot \frac{a_k}{L_{18,x}} + \frac{0,5 \cdot D_{18} + h_{18} + A_{18}}{0,5 \cdot Q_{18} - \left(D_{18} + 2 \cdot h_{18}\right)} \quad \text{erfüllt.}$$

Zwecks einer weiteren Verbesserung der Effektivität, mit der mittels des Kopplerelements erster Art letztlich die angestrebte Separierung der Eigenfrequenzen, $f_{18V}$, $f_{18X}$, des V- und X-Modes der Rohranordnung erzielt wird, sind - alternativ oder in Ergänzung zur vorherigen Vorschrift - die Meßrohre und das Kopplerelement $24_1$ erster Art ferner gemäß einer weiteren Ausgestaltung der Erfindung so ausgebildet bzw. angeordnet, daß die damit gebildete Rohranordnung im Ergebnis die Vorschrift

$$\frac{c24x}{c18} \sim \frac{\dfrac{1}{I_{V1}^2} \cdot \left[ \dfrac{1}{3 \cdot \dfrac{E_{V1} \cdot J_{V1,max}}{I_{V1}}} + \dfrac{1}{\left(\dfrac{a_{L1}}{2}\right)^2 \cdot \left(\dfrac{E_{L1} \cdot A_{L1}}{I_{L1}} + \dfrac{E_{L3} \cdot A_{L3}}{I_{L3}}\right)} \right]}{3 \cdot \dfrac{E_{18} \cdot J_{18}}{a_K^3 \cdot \left(1 - 1.5 \cdot \dfrac{a_k}{L_{18x}}\right)}} > 0.01$$

erfüllt.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre $18_1$, $18_2$, $18_3$, $18_4$, abgestimmt auf die erwähnte Nutz-Schwinglänge, so bemessen, daß ein Kaliber-zu-Schwinglänge-Verhältnis $D_{18}/L_{18x}$ des Meßaufnehmers, definiert durch ein Verhältnis des Kalibers $D_{18}$ des ersten Meßrohrs zur Nutz-Schwinglänge $L_{18x}$ des ersten Meßrohrs, mehr als 0.03, insb. mehr als 0.05 und/oder weniger als 0.15, beträgt. Alternativ oder in Ergänzung hierzu sind nach einer weiteren Ausgestaltung der Erfindung die Meßrohre $18_1$, $18_2$, $18_3$, $18_4$, abgestimmt auf die oben erwähnte Einbaulänge $L_{11}$ des Meßaufnehmer, so bemessen, daß ein Schwinglänge-zu-Einbaulänge-Verhältnis $L_{18x}/L_{11}$ des Meßaufnehmers, definiert durch ein Verhältnis der Nutz-Schwinglänge $L_{18x}$ des ersten Meßrohrs zur Einbaulänge $L_{11}$ des Meßaufnehmers, mehr als 0.55, insb. mehr als 0.6 und/oder weniger als 1.5, beträgt. Nach einer weiteren Ausgestaltung der Erfindung sind die Schwingungssensoren, abgestimmt auf die Nutz-Schwinglänge, so im Meßaufnehmer angeordnet, daß ein Meßlänge-zu-Schwinglänge-Verhältnis $L_{19}/L_{18x}$ des Meßaufnehmers, definiert durch ein Verhältnis der erwähnten Meßlänge $L_{19}$ des Meßaufnehmers zur Nutz-Schwinglänge $L_{18x}$ des ersten Meßrohrs, mehr als 0.3, insb. mehr als 0.4 und/oder weniger als 0.95, beträgt. Im übrigen können Meßlänge, $L_{19}$, und/oder Meßlänge-zu-Schwinglänge-Verhältnis $L_{19}/L_{18x}$ darüberhinaus durchaus auch gemäß den in den eigenen, nicht vorveröffentlichten internationalen Anmeldungen PCT/EP2010/058797 bzw. PCT/EP2010/058799 vorgeschlagenen Kriterien zur Bestimmung optimaler Meßlängen bzw. optimaler Meßlänge-zu-Schwinglänge-Verhältnisse für Meßaufnehmer vom Vibrationstyp genauer bestimmt werden.

Zur Verringerung allfälliger Querempfindlichkeiten des Meßaufnehmers auf Druck, nicht zuletzt auch bei einem möglichst hohen Nennweite-zu-Einbaulänge-Verhältnis $D_{11}/L_{11}$ von größer als 0.1 und einem möglichst niedrigen Schwinglänge-zu-Einbaulänge-Verhältnis $L_{18x}/L_{11}$ von weniger als 1.5, können in vorteilhafter Weise ferner ringförmige Versteifungselementen an den Meßrohren verwendet werden, von denen jedes an genau einem der Meßrohre $18_1$, $18_2$, $18_3$, $18_4$ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen kann es hierbei von Vorteil sein, wenn auf jedem der Meßrohre $18_1$, $18_2$, $18_3$ bzw. $18_4$, wenigstens vier solcher, insb. baugleicher, Versteifungselemente angebracht sind. Die Versteifungselementen können dabei beispielsweise so im Meßaufnehmer 11 plaziert sein, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs $18_1$, $18_2$, $18_3$ bzw. $18_4$ liegt.

Durch die Verwendung von vier statt wie bisher zwei parallel durchströmten gebogenen Meßrohren sowie eines oder mehreren mit diesen verbundenen Kopplerelementen erster Art ist es somit auch möglich, Meßaufnehmer der beschriebenen Art auch für große Massendurchflußraten bzw. mit großen nominellen Nennweiten von weit über 250 mm einerseits mit einer nach wie vor hohen Meßgenauigkeit von über 99,8% bei einem akzeptablem Druckabfall, insb. von weniger als 3 bar, kostengünstig herzustellen und andererseits die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse der Rohranordnung definiertes Massenverhältnis des Meßaufnehmers ohne weiteres kleiner als 3, insb. kleiner als 2.5, gehalten werden kann.

**Patentansprüche**

1. Meßaufnehmer vom Vibrationstyp zum Erfassen wenigstens einer physikalischen Meßgröße eines in einer Rohrleitung geführten strömungsfähigen Mediums, insb. eines Gases, einer Flüssigkeit, eines Pulvers oder eines anderen strömungsfähigen Stoffes, und/oder zum Erzeugen von dem Erfassen einer Massendurchflußrate eines in einer Rohrleitung geführten strömungsfähigen Mediums, insb. eines Gases, einer Flüssigkeit, eines Pulvers oder eines anderen strömungsfähigen Stoffes, dienenden Corioliskräften, welcher Meßaufnehmer umfaßt:

   - ein Aufnehmer-Gehäuse ($7_1$), von dem ein einlaßseitiges erstes Gehäuseende mittels eines genau vier jeweils voneinander beabstandete Strömungsöffnungen ($20_{1A}$, $20_{1B}$, $20_{1C}$, $20_{1D}$) aufweisenden einlaßseitigen ersten Strömungsteiler ($20_1$) und ein auslaßseitiges zweites Gehäuseende mittels eines genau vier jeweils voneinander beabstandete Strömungsöffnungen ($20_{2A}$, $20_{2B}$, $20_{2C}$, $20_{2D}$) aufweisenden auslaßseitigen zweiten Strömungsteilers ($20_2$) gebildet sind;
   - eine Rohranordnung mit vier unter Bildung strömungstechnisch parallel geschalteter Strömungspfade an die Strömungsteiler ($20_1$, $20_2$) angeschlossenen, insb. baugleichen und/oder zueinander paarweise parallelen, gebogenen Meßrohre ($18_1$, $18_2$, $18_3$, $18_4$) zum Führen von strömendem Medium, von denen

      -- ein erstes Meßrohr ($18_1$) mit einem einlaßseitigen ersten Meßrohrende in eine erste Strömungsöffnung ($20_{1A}$) des ersten Strömungsteilers ($20_1$) und mit einem auslaßseitigen zweiten Meßrohrende in eine erste Strömungsöffnung ($20_{2A}$) des zweiten Strömungsteilers ($20_2$) mündet,
      - ein, insb. zum ersten Meßrohr zumindest abschnittsweise paralleles, zweites Meßrohr ($18_2$) mit einem einlaßseitigen ersten Meßrohrende in eine zweite Strömungsöffnung ($20_{1B}$) des ersten Strömungsteilers ($20_1$) und mit einem auslaßseitigen zweiten Meßrohrende in eine zweite Strömungsöffnung ($20_{2B}$) des zweiten Strömungsteilers ($20_2$) mündet,
      -- ein drittes Meßrohr ($18_3$) mit einem einlaßseitigen ersten Meßrohrende in eine dritte Strömungsöffnung ($20_{1C}$) des ersten Strömungsteilers ($20_1$) und mit einem auslaßseitigen zweiten Meßrohrende in eine dritte Strömungsöffnung ($20_{2C}$) des zweiten Strömungsteilers ($20_2$) mündet,
      - ein, insb. zum dritten Meßrohr zumindest abschnittsweise paralleles, viertes Meßrohr ($18_4$) mit einem einlaßseitigen ersten Meßrohrende in eine vierte Strömungsöffnung ($20_{1D}$) des ersten Strömungsteilers ($20_1$) und mit einem auslaßseitigen zweiten Meßrohrende in eine vierte Strömungsöffnung ($20_{2D}$) des zweiten Strömungsteilers ($20_2$) mündet; und
      -- ein, sowohl vom ersten Strömungsteiler als auch vom zweiten Strömungsteiler beabstandet an jedem der vier Meßrohre fixiertes erstes Kopplerelement ($24_1$) erster Art zum Einstellen von Eigenfrequenzen natürlicher Schwingungsmoden der Rohranordnung; sowie

   - eine elektro-mechanische Erregeranordnung (5) zum Erzeugen und/oder Aufrechterhalten von Biegeschwingungen jedes der vier Meßrohre ($18_1$, $18_2$, $18_3$, $18_4$);
   - wobei die beiden Strömungsteiler ($20_1$, $20_2$) so ausgebildet und im Meßaufnehmer angeordnet sind,

      -- daß eine die erste Strömungsöffnung ($20_{1A}$) des ersten Strömungsteilers ($20_1$) mit der ersten Strömungsöffnung ($20_{2A}$) des zweiten Strömungsteilers ($20_2$) imaginär verbindende gedachte erste Verbindungsachse ($Z_1$) des Meßaufnehmers parallel zu einer die zweite Strömungsöffnung ($20_{1B}$) des ersten Strömungsteilers ($20_1$) mit der zweiten Strömungsöffnung ($20_{2B}$) des zweiten Strömungsteilers ($20_2$) imaginär verbindende gedachten zweiten Verbindungsachse ($Z_2$) des Meßaufnehmers verläuft, und
      -- daß eine die dritte Strömungsöffnung ($20_{1C}$) des ersten Strömungsteilers ($20_1$) mit der dritten Strömungsöffnung ($20_{2C}$) des zweiten Strömungsteilers ($20_2$) imaginär verbindende gedachte dritten Verbindungsachse ($Z_3$) des Meßaufnehmers parallel zu einer die vierte Strömungsöffnung ($20_{1D}$) des ersten Strömungsteilers ($20_1$) mit der vierten Strömungsöffnung ($20_{2B}$) des zweiten Strömungsteilers ($20_2$) imaginär verbindende gedachten vierten Verbindungsachse ($Z_4$) des Meßaufnehmers verläuft;

   - wobei die Meßrohre so ausgebildet und so angeordnet sind,

      -- daß die Rohranordnung eine sowohl zwischen dem ersten Meßrohr und dem dritten Meßrohr als auch zwischen dem zweiten Meßrohr und dem vierten Meßrohr verlaufende erste gedachte Längsschnittebene (XZ) aufweist, und
      -- daß die Rohranordnung eine zu deren gedachter erster Längsschnittebene (XZ) senkrechte, sowohl zwischen dem ersten Meßrohr und zweiten Meßrohr als auch zwischen dem dritten Meßrohr und vierten Meßrohr verlaufende zweite gedachte Längsschnittebene (YZ) aufweist; und

- wobei das erste Kopplerelement ($24_1$) erster Art

- einen mittels einer eine Vielzahl von Profilstäben und/oder Platten aufweisenden Rahmenkonstruktion gebildeten und/oder kastenförmigen Verformungskörper (VK) sowie
-- vier, insb. gleichlange und/oder zumindest paarweise baugleiche, Verbindungsstreben aufweist, von denen

--- eine, insb. stab- oder plattenförmige, erste Verbindungsstrebe (V1) sowohl mit dem Verformungskörper als auch mit dem ersten Meßrohr verbunden ist,
--- eine, insb. stab- oder plattenförmige, zweite Verbindungsstrebe (V2) sowohl mit dem Verformungskörper als auch mit dem zweiten Meßrohr verbunden ist,
--- eine, insb. stab- oder plattenförmige, dritte Verbindungsstrebe (V3) sowohl mit dem Verformungskörper als auch mit dem dritten Meßrohr verbunden ist, und
--- eine, insb. stab- oder plattenförmige, vierte Verbindungsstrebe (V4) sowohl mit dem Verformungskörper als auch mit dem vierten Meßrohr verbunden ist.

2. Meßaufnehmer nach dem vorherigen Anspruch,

- wobei die vier, insb. baugleichen, Verbindungsstreben (V1, V2, V3, V4) jeweils aus Metall, insb. einem rostfreien Stahl, bestehen; und/oder
- wobei die vier, insb. baugleichen, Verbindungsstreben (V1, V2, V3, V4) jeweils zumindest anteilig aus einem, insb. rostfreien, Stahl bestehen; und/oder
- wobei jede der vier, insb. baugleichen, Verbindungsstreben (V1, V2, V3, V4) jeweils stoffschlüssig mit dem jeweiligen Meßrohr verbunden ist, insb. mit dem jeweiligen Meßrohr hartverlötet ist und/oder mit dem jeweiligen Meßrohr verschweißt ist; und/oder
- wobei jede der vier, insb. baugleichen, Verbindungsstreben (V1, V2, V3, V4) jeweils stoffschlüssig am Verformungskörper (VK) fixiert ist.

3. Meßaufnehmer nach einem der vorherigen Ansprüche,

- wobei die Erregeranordnung derart ausgebildet ist, daß damit jedes der vier Meßrohre ($18_1$, $18_2$, $18_3$, $18_4$), insb. simultan, zu Biegeschwingungen anregbar ist; und/oder
- wobei die Erregeranordnung derart ausgebildet ist, daß damit das erste Meßrohr ($18_1$) und das zweite Meßrohr ($18_2$) zu bezüglich der zweiten gedachten Längsschnittebene (YZ) gegengleichen, insb. zu bezüglich der zweiten gedachten Längsschnittebene (YZ) symmetrischen, Biegeschwingungen und das dritte Meßrohr ($18_3$) und das vierte Meßrohr ($18_4$) zu bezüglich der zweiten gedachten Längsschnittebene (YZ) gegengleichen, insb. zu bezüglich der zweiten gedachten Längsschnittebene (YZ) symmetrischen, Biegeschwingungen anregbar sind; und/oder
- wobei die Erregeranordnung derart ausgebildet ist, daß damit das erste Meßrohr ($18_1$) und das dritte Meßrohr ($18_3$) zu bezüglich der zweiten gedachten Längsschnittebene (YZ) gegengleichen Biegeschwingungen und das zweite Meßrohr ($18_2$) und das vierte Meßrohr ($18_4$) zu bezüglich der zweiten gedachten Längsschnittebene (YZ) gegengleichen Biegeschwingungen anregbar sind; und/oder wobei die Rohranordnung bezüglich der ersten gedachte Längsschnittebene (XZ) spiegelsymmetrisch ist; und/oder
- wobei die Rohranordnung bezüglich der zweiten gedachte Längsschnittebene (YZ) spiegelsymmetrisch ist; und/oder
- wobei die Rohranordnung sowohl bezüglich der ersten gedachte Längsschnittebene (XZ) als auch bezüglich der zweiten gedachte Längsschnittebene (YZ) spiegelsymmetrisch ist; und/oder
- wobei das erste Kopplerelement ($24_1$) erster Art so ausgebildet und so angeordnet ist, daß es sowohl bezüglich der ersten gedachten Längsschnittebene (XZ) als auch bezüglich der zweiten gedachten Längsschnittebene (YZ) der Rohranordnung spiegelsymmetrisch ist; und/oder
- wobei jedes der vier Meßrohre jeweils eine durch eine von einem von einem Material nämlichen Meßrohrs abhängigen Elastizitätsmodul wie auch von einem von einem Kaliber und einer Wandstärke abhängigen Flächenträgheitsmoment bestimmte Biegesteifigkeit aufweist, und wobei sowohl das zweite Meßrohr als auch das dritte Meßrohr und das vierte Meßrohr jeweils eine Biegesteifigkeit aufweisen, die jeweils gleich der Biegesteifigkeit, $E_{18} \cdot J_{18}$, des ersten Meßrohrs ist; und/oder
- wobei jedes der vier, insb. baugleichen, Meßrohre ($18_1$, $18_2$, $18_3$, $18_4$) zumindest abschnittsweise V-förmig oder zumindest abschnittsweise kreisbogenförmig ist.

**4.** Meßaufnehmer nach einem der vorherigen Ansprüche, wobei

- die erste Verbindungsstrebe (V1) mit einem ersten Strebenende mit dem Verformungskörper und mit einem zweiten Strebenende mit dem ersten Meßrohr verbunden ist,
- die zweite Verbindungsstrebe (V2) mit einem ersten Strebenende mit dem Verformungskörper und mit einem zweiten Strebenende mit dem zweiten Meßrohr verbunden ist,
- die dritte Verbindungsstrebe (V3) mit einem ersten Strebenende mit dem Verformungskörper und mit einem zweiten Strebenende mit dem dritten Meßrohr verbunden ist, und
- die vierte Verbindungsstrebe (V4) mit einem ersten Strebenende mit dem Verformungskörper und mit einem zweiten Strebenende mit dem vierten Meßrohr verbunden ist.

**5.** Meßaufnehmer nach einem der vorherigen Ansprüche, wobei die Rohranordnung eine sowohl zur ersten gedachten Längsschnittebene (XZ) als auch zur zweiten gedachten Längsschnittebene (YZ) jeweils senkrechte gedachte Querschnittsebene (XY) aufweist.

**6.** Meßaufnehmer nach Anspruch 5,

- wobei die Rohranordnung bezüglich der gedachten Querschnittsebene (XY) spiegelsymmetrisch ist; und/oder
- wobei jedes der vier Meßrohre jeweils einen Meßrohr-Scheitelpunkt, definiert als größter senkrechter Abstand des jeweiligen Meßrohres von der ersten gedachten Längsschnittebene (XZ), aufweist und die gedachte Querschnittsebene (XY) jedes der vier Meßrohre in dessen jeweiligen Meßrohr-Scheitelpunkt schneidet.

**7.** Meßaufnehmer nach einem der Ansprüche 5 bis 6, wobei der Verformungskörper wenigstens zwei, insb. baugleiche und/oder plattenförmige, Längsstreben aufweist, von denen

- eine, insb. zumindest abschnittsweise gerade, sich von der ersten Verbindungstrebe zur dritten Verbindungsstrebe erstreckende erste Längsstrebe (L1), die, von der zweiten gedachten Längsschnittebene (YZ) beabstandet, ausschließlich auf einer sowohl vom ersten als auch vom dritten Meßrohr eingenommene Seite nämlicher Längsschnittebene (YZ) angeordnet ist, und
- eine, insb. zumindest abschnittsweise gerade, sich von der zweiten Verbindungstrebe zur vierten Verbindungsstrebe erstreckende zweite Längsstrebe (L2), die, von der zweiten gedachten Längsschnittebene (YZ), insb. gleichweit wie die erste Längsstrebe, beabstandet, ausschließlich auf einer sowohl vom zweiten als auch vom vierten Meßrohr eingenommene Seite nämlicher Längsschnittebene (YZ) angeordnet ist.

**8.** Meßaufnehmer nach Anspruch 7,

- wobei die erste Längsstrebe eine von einem von einem Material nämlicher Längsstrebe abhängigen Elastizitätsmodul, $E_{L1}$, wie auch von einem minimalen Flächenträgheitsmoment, $J_{L1,min}$, um eine nämlicher Längsstrebe immanente gedachte Biegehauptachse bestimmte minimale Biegesteifigkeit, $E_{L1} \cdot J_{L1,min}$, und die zweite Längsstrebe eine von einem von einem Material nämlicher Längsstrebe abhängigen Elastizitätsmodul, $E_{L2}$, wie auch von einem minimalen Flächenträgheitsmoment, $J_{L2,mn}$, um eine nämlicher Längsstrebe immanente gedachte Biegehauptachse bestimmte minimale Biegesteifigkeit, $E_{L2} \cdot J_{L2,min}$, aufweisen, und
- wobei die erste Längsstrebe und die zweite Längstrebe so angeordnet sind, daß sowohl die gedachte Biegehauptachse des minimalem Flächenträgheitsmoments, $J_{L1,min}$, der ersten Längsstrebe als auch die gedachte Biegehauptachse des minimalem Flächenträgheitsmoments, $J_{L2,min}$, der zweiten Längsstrebe jeweils sowohl zur ersten Längsschnittebene (XZ) als auch zur zweiten gedachten Längsschnittebene (YZ) parallel verlaufen, insb. derart, daß die minimale Biegesteifigkeit, $E_{L1} \cdot J_{L1,min}$, der ersten Längsstrebe gleich der minimalen Biegesteifigkeit, $E_{L2} \cdot J_{L2,min}$, der zweiten Längsstrebe ist.

**9.** Meßaufnehmer nach Anspruch 8,

- wobei die erste Längsstrebe eine vom vom Material nämlicher Längsstrebe abhängigen Elastizitätsmodul, $E_{L1}$, wie auch von einem maximalen Flächenträgheitsmoment, $J_{L1,max}$, um eine nämlicher Längsstrebe immanente gedachte Biegehauptachse bestimmte maximale Biegesteifigkeit, $E_{L1} \cdot J_{L1,max}$, und die zweite Längsstrebe eine vom vom Material nämlicher Längsstrebe abhängigen Elastizitätsmodul, $E_{L2}$, wie auch von einem maximalen Flächenträgheitsmoment, $J_{L2,max}$, um eine nämlicher Längsstrebe immanente gedachte Biegehauptachse bestimmte maximale Biegesteifigkeit, $E_{L2} \cdot J_{L2,max}$, aufweisen, und
- wobei die erste Längsstrebe und die zweite Längsstrebe so angeordnet sind, daß sowohl die gedachte Biegehauptachse des maximalen Flächenträgheitsmoments, $J_{L1,max}$, der ersten Längsstrebe als auch die gedachte Biegehauptachse des maximalen Flächenträgheitsmoments, $J_{L2,max}$, der zweiten Längsstrebe jeweils zur ersten gedachten Längsschnittebene (XZ) parallel und zur zweiten gedachten Längsschnittebene (YZ) senkrecht verlaufen, insb. derart daß die maximale Biegesteifigkeit, $E_{L2} \cdot J_{L1,max}$, der ersten Längsstrebe gleich der maximalen Biegesteifigkeit, $E_{L2} \cdot J_{L2,max}$, der zweiten Längsstrebe ist, und/oder daß die erste Längsstrebe die erste gedachte Längsschnittebene (XZ), insb. mit dem geraden Teilabschnitt, imaginär schneidet, insb. unter einem Winkel von 90°, und die zweite Längsstrebe die erste gedachte Längsschnittebene (XZ), insb. mit dem geraden Teilabschnitt, imaginär schneidet, insb. unter einem Winkel von 90°.

**10.** Meßaufnehmer nach Anspruch 8 oder 9,

- wobei die erste Verbindungsstrebe eine von einem von einem Material nämlicher Verbindungsstrebe abhängigen Elastizitätsmodul, $E_{V1}$, wie auch von einem maximalen Flächenträgheitsmoment, $J_{V1,max}$, um eine nämlicher Verbindungsstrebe immanente gedachte Biegehauptachse bestimmte maximale Biegesteifigkeit, $E_{V1} \cdot J_{V1,max}$, die zweite Verbindungsstrebe eine von einem von einem Material nämlicher Verbindungsstrebe abhängigen Elastizitätsmodul, $E_{V2}$, wie auch von einem maximalen Flächenträgheitsmoment, $J_{V2,max}$, um eine nämlicher Verbindungsstrebe immanente gedachte Biegehauptachse bestimmte maximale Biegesteifigkeit, $E_{V2} \cdot J_{V2,max}$, die dritte Verbindungsstrebe eine von einem von einem Material nämlicher Verbindungsstrebe abhängigen Elastizitätsmodul, $E_{V3}$, wie auch von einem maximalen Flächenträgheitsmoment, $J_{V3,max}$, um eine nämlicher Verbindungsstrebe immanente gedachte Biegehauptachse bestimmte maximale Biegesteifigkeit, $E_{V3} \cdot J_{V3,max}$, und die vierte Verbindungsstrebe eine von einem von einem Material nämlicher Verbindungsstrebe abhängigen Elastizitätsmodul, $E_{V4}$, wie auch von einem maximalen Flächenträgheitsmoment, $J_{V4,max}$, um eine nämlicher Verbindungsstrebe immanente gedachte Biegehauptachse bestimmte maximale Biegesteifigkeit, $E_{V4} \cdot J_{V4,max}$, aufweisen, und jede der vier Verbindungsstreben jeweils so angeordnet ist, daß die gedachte Biegehauptachse von deren jeweiligen maximalen Flächenträgheitsmoment jeweils sowohl zur ersten Längsschnittebene (XZ) als auch zur zweiten gedachten Längsschnittebene (YZ) parallel verläuft, und
- wobei die maximale Biegesteifigkeit, $E_{V1} \cdot J_{V1,max}$, der ersten Verbindungsstrebe größer als die minimale Biegesteifigkeit, $E_{L1} \cdot J_{L1,min}$, der ersten Längsstrebe ist, insb. derart, daß das erste Kopplerelement eine Vorschrift

$$\frac{E_{V1} \cdot J_{V1,max}}{E_{L1} \cdot J_{L1,min}} > 5 \ \text{erfüllt.}$$

**11.** Meßaufnehmer nach einem der Ansprüche 8 bis 10, wobei die erste Längsstrebe eine vom vom Material nämlicher Längsstrebe abhängigen Elastizitätsmodul, $E_{L1,}$ wie auch von deren Strebenlänge, $I_{L1}$, sowie einem Flächeninhalt, $A_{L1}$, einer mit der ersten gedachten Längsschnittebene (XZ) koinzidenten Querschnittsfläche bestimmte Federsteifigkeit, $c_{L1}$, für eine auf nämliche Längsstrebe einwirkende, senkrecht zur ersten gedachten Längsschnittebene (XZ) gerichteten Zug- bzw. Druckkraft, und die zweite Längsstrebe eine vom vom Material nämlicher Längsstrebe abhängigen Elastizitätsmodul, $E_{L2}$, wie auch von deren Strebenlänge, $I_{L2}$, sowie einem Flächeninhalt, $A_{L2}$, einer mit der ersten gedachten Längsschnittebene (XZ) koinzidenten Querschnittsfläche bestimmte Federsteifigkeit, $c_{L2}$, für eine auf nämliche Längsstrebe einwirkende, senkrecht zur ersten gedachten Längsschnittebene (XZ) gerichteten Zug- bzw. Druckkraft aufweisen.

**12.** Meßaufnehmer nach Anspruch 11, wobei die erste Längsstrebe (L1) einen zumindest in Projektion auf die gedachte Querschnittsebene (XY) geraden Teilabschnitt aufweist, der, sich in Projektion auf nämliche Querschnittsebene (XY) mit einer Länge, $IL_1$, zwischen der ersten und dritten Verbindungsstrebe erstreckend, zumindest in Projektion auf die gedachte Querschnittsebene (XY) senkrecht zur ersten gedachten Längsschnittebene (XZ) sowie in einem Abstand, $a_{L1}$ parallel zur zweiten gedachten Längsschnittebene (YZ) verläuft, und die zweite Längsstrebe (L2) einen in Projektion auf die gedachte Querschnittsebene (XY) geraden Teilabschnitt aufweist, der, sich in Projektion auf nämliche Querschnittsebene (XY) mit einer Länge, $I_{L2}$, zwischen der zweiten und vierten Verbindungsstrebe erstreckend, zumindest in Projektion auf die gedachte Querschnittsebene (XY) senkrecht zur ersten gedachten Längsschnittebene (XZ) und in einem Abstand, $a_{L2}$ parallel zur zweiten gedachten Längsschnittebene (YZ) verläuft; insb. derart, daß der gerade Teilabschnitt der ersten Längsstrebe gleichweit von der ersten gedachten Längsschnittebene (XZ) entfernt ist wie der gerade Teilabschnitt der zweiten Längsstrebe, nämlich daß der Abstand, $a_{L1}$, in dem die erste Längsstrebe parallel zur zweiten gedachten Längsschnittebene (YZ) verläuft gleich dem Abstand, $a_{L2}$, in dem die zweite Längsstrebe parallel zur zweiten gedachten Längsschnittebene (YZ) verläuft, ist, und der gerade Teilabschnitt der ersten Längsstrebe gleichlang ist wie der gerade Teilabschnitt der zweiten Längsstrebe, nämlich daß

die Länge, $IL_1$, mit der sich gerade Teilabschnitt der ersten Längsstrebe zwischen der ersten und dritten Verbindungsstrebe erstreckt, gleich der Länge, $I_{L2}$, mit der sich gerade Teilabschnitt der zweiten Längsstrebe zwischen der ersten und dritten Verbindungsstrebe erstreckt, ist und/oder daß die erste Längsstrebe und die zweite Längsstrebe jeweils so ausgebildet und angeordnet sind, daß sich die Federsteifigkeit, $c_{L1}$, proportional zur Beziehung $E_{L1} \cdot A_{L1} / I_{L1}$ und die Federsteifigkeit, $c_{L2}$, proportional zur Beziehung $E_{L2} \cdot A_{L2} / I_{L2}$ verhält.

**13.** Meßaufnehmer nach dem vorherigen Anspruch,

- wobei jede der vier Verbindungsstreben (V1, V2, V3, V4) jeweils eine durch einen minimalen Abstand zwischen deren jeweiligen ersten Strebenende und deren jeweiligen zweiten Strebenende definierte Strebenlänge aufweist, und wobei sowohl die zweite Verbindungsstrebe als auch die dritte sowie die vierte Verbindungsstrebe jeweils eine Strebenlänge aufweisen, die jeweils gleich der Strebenlänge, $I_{V1}$, der ersten Verbindungsstrebe ist, und die Rohranordnung

-- sowohl die Vorschrift $\dfrac{I_{V1}}{I_{V1} + 0{,}5 \cdot I_{L1}} > 0{,}3$

-- als auch die Vorschrift $\dfrac{I_{V1}}{I_{V1} + 0{,}5 \cdot I_{L1}} < 0{,}7$ erfüllt.

**14.** Meßaufnehmer nach einem der Ansprüche 7 bis 13, wobei der Verformungskörper eine, insb. sich von der ersten Längsstrebe (L1) zur zweiten Längsstrebe (L2) erstreckende, insb. zumindest abschnittsweise gerade und/oder abschnittsweise zur zweiten gedachten Längsschnittebene (YZ) nicht-parallele, erste Querstrebe (Q1) aufweist.

**15.** Meßaufnehmer nach Anspruch 14, wobei der Verformungskörper eine sich von der ersten Längsstrebe zur zweiten Längsstrebe erstreckende, insb. zumindest abschnittsweise gerade und/oder abschnittsweise zur zweiten gedachten Längsschnittebene (YZ) nicht-parallele und/oder zur ersten Querstrebe baugleiche, zweite Querstrebe (Q2) umfaßt,

- welche zweite Querstrebe (Q2) eine vom vom Material nämlicher Querstrebe abhängigen Elastizitätsmodul, $E_{Q2}$, wie auch von einem maximalen Flächenträgheitsmoment, $J_{Q2,max}$, um eine nämlicher Längsstrebe immanente gedachte Biegehauptachse bestimmte maximale Biegesteifigkeit, $E_{Q2} \cdot J_{Q2,max}$, aufweist, und so angeordnet ist, daß nämliche gedachte Biegehauptachse zur ersten gedachten Längsschnittebene (XZ) senkrecht und zur zweiten gedachten Längsschnittebene (YZ) parallel verläuft, und
- welche zweite Querstrebe (Q2) eine von einem von einem Material nämlicher Querstrebe abhängigen Elastizitätsmodul, $E_{Q2}$, wie auch von einem minimalen Flächenträgheitsmoment, $J_{Q2,min}$, um eine nämlicher Längsstrebe immanente gedachte Biegehauptachse bestimmte minimale Biegesteifigkeit, $E_{Q2} \cdot J_{Q2,min}$, und so angeordnet ist, daß nämliche gedachte Biegehauptachse sowohl zur ersten Längsschnittebene (XZ) als auch zur zweiten gedachten Längsschnittebene (YZ) parallel verläuft, insb. derart, daß die gedachte Biegehauptachse des minimalem Flächenträgheitsmoments, $J_{Q2,min}$, der zweiten Querstrebe in der zweiten gedachten Längsschnittebene (YZ) liegt.

**16.** Meßaufnehmer nach dem vorherigen Anspruch,

- wobei sich die zweite Querstrebe (Q2) von der dritten Verbindungsstrebe (V3) zur vierten Verbindungsstrebe (V4) erstreckt; und/oder
- wobei die zweite Querstrebe in einem Bereich, in dem diese die zweite gedachte Längsschnittebene (YZ) imaginär schneidet, einen kleineren Querschnitt aufweist, als in einem angrenzenden, sich zur dritten Verbindungstrebe hin erstreckenden Nachbarbereich und als in einem angrenzenden, sich zur vierten Verbindungstrebe hin erstreckenden Nachbarbereich; und/oder
- wobei die erste Querstrebe mittels eines, insb. aus Metall bestehenden, Flachstabs, und die zweite Querstrebe mittels eines, insb. aus Metall bestehenden, Flachstabs gebildet sind; und/oder
- wobei die erste Querstrebe und die zweite Querstrebe jeweils aus gleichem Material und/oder jeweils aus Stahl bestehen.

**17.** Meßaufnehmer nach einem der Ansprüche 15 bis 16, wobei der Verformungskörper eine sich von der ersten Querstrebe zur zweite Querstrebe mit einer Länge, $I_{L3}$, erstreckende, in Projektion auf die gedachte Querschnittsebene (XY) gerade, insb. plattenförmige und/oder zur zweiten gedachten Längsschnittebene (YZ) parallele und/oder jeweils gleichweit von der ersten Längsstrebe wie von zweiten Längsstrebe beabstandete, dritte Längsstrebe (L3) aufweist.

18. Meßaufnehmer nach einem der vorherigen Ansprüche, wobei die Rohranordnung weiters ein, sowohl vom ersten Strömungsteiler als auch vom zweiten Strömungsteiler beabstandet, auslaßseitig an jedem der vier Meßrohre fixiertes, insb. zum ersten Kopplerelement ($24_1$) erster Art im wesentlichen baugleiches, zweites Kopplerelement ($24_2$) erster Art zum Einstellen von Eigenfrequenzen natürlicher Schwingungsmoden der Rohranordnung, insb. von Biegeschwingungsmoden, umfaßt.

19. Meßaufnehmer nach einem der vorherigen Ansprüche, wobei die Rohranordnung weiters umfaßt:

- ein, insb. plattenförmiges, erstes Kopplerelement ($25_1$) zweiter Art, das zum Bilden von einlaßseitigen Schwingungsknoten sowohl für Vibrationen, insb. Biegeschwingungen, des ersten Meßrohrs als auch für dazu gegengleiche Vibrationen, insb. Biegeschwingungen, des zweiten Meßrohrs einlaßseitig am ersten Meßrohr und am zweiten Meßrohr fixiert ist;
- ein, insb. plattenförmiges und/oder zum ersten Kopplerelement ($25_1$) zweiter Art baugleiches und/oder zum ersten Kopplerelement ($25_1$) zweiter Art paralleles, zweites Kopplerelement ($25_2$) zweiter Art, das zum Bilden von auslaßseitigen Schwingungsknoten sowohl für Vibrationen, insb. Biegeschwingungen, des ersten Meßrohrs als auch für dazu gegengleiche Vibrationen, insb. Biegeschwingungen, des zweiten Meßrohrs auslaßseitig am ersten Meßrohr und am zweiten Meßrohr fixiert ist;
- ein, insb. plattenförmiges und/oder zum ersten Kopplerelement ($25_1$) zweiter Art baugleiches und/oder zum zweiten Kopplerelement ($25_2$) zweiter Art paralleles, drittes Kopplerelement ($25_3$) zweiter Art, das zum Bilden von einlaßseitigen Schwingungsknoten sowohl für Vibrationen, insb. Biegeschwingungen, des dritten Meßrohrs als auch für dazu gegengleiche Vibrationen, insb. Biegeschwingungen, des vierten Meßrohrs sowohl vom ersten Strömungsteiler als auch vom zweiten Strömungsteiler beabstandet einlaßseitig am dritten Meßrohr und am vierten Meßrohr fixiert ist; sowie
- ein, insb. plattenförmiges und/oder zum ersten Kopplerelement ($25_1$) zweiter Art baugleiches und/oder zum ersten Kopplerelement ($25_1$) zweiter Art paralleles, viertes Kopplerelement ($25_4$) zweiter Art, das zum Bilden von auslaßseitigen Schwingungsknoten sowohl für Vibrationen, insb. Biegeschwingungen, des dritten Meßrohrs als auch für dazu gegengleiche Vibrationen, insb. Biegeschwingungen, des vierten Meßrohrs sowohl vom ersten Strömungsteiler als auch vom zweiten Strömungsteiler wie auch vom ersten Kopplerelement beabstandet auslaßseitig am dritten Meßrohr und am vierten Meßrohr fixiert ist.

20. Meßsystem zum Messen einer Dichte und/oder einer Massendurchflußrate, insb. auch eines über ein Zeitintervall totalisierten Gesamt-Massendurchflusses, eines in einer Rohrleitung zumindest zeitweise, insb. mit einer Massendurchflußrate von mehr als 1000 t/h, strömenden Mediums, insb. eines Gases, einer Flüssigkeit, eines Pulvers oder eines anderen strömungsfähigen Stoffes, welches, insb. als In-Line-Meßgerät und/oder Meßgerät in Kompaktbauweise ausgebildetes, Meßsystem einen Meßaufnehmer gemäß einem der Ansprüche 1 bis 19 sowie eine mit dem Meßaufnehmer elektrisch gekoppelte, insb. in einem mechanisch mit dem Aufnehmer-Gehäuse verbundenen Elektronik-Gehäuse angeordneten, Umformer-Elektronik zum Ansteuern des Meßaufnehmers, insb. von dessen Erregeranordnung, und zum Auswerten von vom Meßaufnehmer gelieferten Schwingungssignalen umfaßt.

21. Meßsystem nach Anspruch 20,

- wobei die Umformer-Elektronik anhand von in der Erregeranordnung umgesetzter elektrischer Erregerleistung einen die Viskosität des strömenden Mediums repräsentierenden Viskosität-Meßwert generiert; und/oder
- wobei die Umformer-Elektronik anhand von vom Meßaufnehmer gelieferten Schwingungssignalen einen die Massendurchflußrate des strömenden Mediums repräsentierenden Massendurchfluß-Meßwert und/oder einen die Dichte des strömenden Mediums repräsentierenden Dichte-Meßwert generiert; und/oder
- wobei die vier Meßrohre im Betrieb, angeregt von der Erregeranordnung, simultan Biegeschwingungen ausführen.

22. Verwenden eines Meßaufnehmers gemäß einem der Ansprüche 1 bis 19 oder eines Meßsystems gemäß einem der Ansprüche 20 bis 21 zum Messen einer Dichte und/oder einer Massendurchflußrate, insb. auch eines über ein Zeitintervall totalisierten Gesamt-Massendurchflusses, und/oder einer Viskosität und/oder einer Reynoldszahl eines in einer Prozeßleitung, insb. einer Rohrleitung, zumindest zeitweise mit einer Massendurchflußrate von mehr als 1000 t/h, insb. mehr als 1500 t/h, strömenden Mediums, insb. eines Gases, einer Flüssigkeit, eines Pulvers oder eines anderen strömungsfähigen Stoffes.

**Claims**

1. Vibronic sensor designed to measure at least a physical measured variable of a medium which is capable of flowing and conducted in a pipe, particularly a gas, a liquid, a powder or another substance which is capable of flowing, and/or to generate Coriolis forces serving to measure a mass flow rate of a medium which is capable of flowing and conducted in a pipe, particularly a gas, a liquid, a powder or another substance which is capable of flowing, said sensor comprising:

- a sensor housing ($7_1$), of which a first housing end, on the inlet side, is formed by a first flow divider ($20_1$), on the inlet side, featuring precisely four flow openings ($20_{1A}$, $20_{1B}$, $20_{1C}$, $20_{1D}$) spaced apart from one another, and a second housing end, on the outlet side, is formed by a second flow divider ($20_2$), on the outlet side, featuring precisely four flow openings ($20_{2A}$, $20_{2B}$, $20_{2C}$, $20_{2D}$) spaced apart from one another;
- a tube arrangement with four curved measuring tubes ($18_1$, $18_2$, $18_3$, $18_4$), which are connected to the flow dividers ($20_1$, $20_2$) forming flow paths which, in terms of flow, are switched in parallel, said measuring tubes being identical in design and/or parallel to one another in pairs, and being designed to conduct flowing medium, wherein of said tubes

-- a first measuring tube ($18_1$) enters with a first measuring tube end, on the inlet side, into a first flow opening ($20_{1A}$) of the first flow divider ($20_1$), and enters with a second measuring tube end, on the outlet side, into a first flow opening ($20_{2A}$) of the second flow divider ($20_2$),
-- a second measuring tube ($18_2$), particularly at least partially parallel to the first measuring tube, enters with a first measuring tube end, on the inlet side, into a second flow opening ($20_{1B}$) of the first flow divider ($20_1$), and enters with a second measuring tube end, on the outlet side, into a second flow opening ($20_{2B}$) of the second flow divider ($20_2$),
-- a third measuring tube ($18_3$) enters with a first measuring tube end, on the inlet side, into a third flow opening ($20_{1C}$) of first flow divider ($20_1$) and enters with a second measuring tube end, on the outlet side, into a third flow opening ($20_{2C}$) of the second flow divider ($20_2$),
-- a fourth measuring tube ($18_4$), particularly at least partially parallel to the third measuring tube, enters with a first measuring tube end, on the inlet side, into a fourth flow opening ($20_{1D}$) of the first flow divider ($20_1$), and enters with a second measuring tube end, on the outlet side, into a fourth flow opening ($20_{2D}$) of the second flow divider ($20_2$), and
-- a first coupling element ($24_1$) of the first type fixed on each of the four measuring tubes and spaced at a distance from both the first flow divider and the second flow divider, said coupling element being designed to set natural frequencies of natural vibration modes of the tube arrangement; as well as

- an electromechanical exciter arrangement (5) designed to generate or maintain flexural vibrations of each of the four measuring tubes ($18_1$, $18_2$, $18_3$, $18_4$);
- wherein the two flow dividers ($20_1$, $20_2$) are designed and arranged in the sensor in such a way

-- that a first imaginary connecting axis ($Z_1$) of the sensor that connects in an imaginary manner the first flow opening ($20_{1A}$) of the first flow divider ($20_1$) with the first flow opening ($20_{2A}$) of the second flow divider ($20_2$) is parallel to a second imaginary connecting axis ($Z_2$) of the sensor that connects in an imaginary manner the second flow opening ($20_{1B}$) of the first flow divider ($20_1$) with the second flow opening ($20_{2B}$) of the second flow divider ($20_2$), and
-- that a third imaginary connecting axis ($Z_3$) of the sensor that connects in an imaginary manner the third flow opening ($20_{1C}$) of the first flow divider ($20_1$) with the third flow opening ($20_{2C}$) of the second flow divider ($20_2$) is parallel to a fourth imaginary connecting axis ($Z_4$) of the sensor that connects in an imaginary manner the fourth flow opening ($20_{1D}$) of the first flow divider ($20_1$) with the fourth flow opening ($20_{2B}$) of the second flow divider ($20_2$);

- wherein the measuring tubes are designed and arranged in such a way that

-- the tube arrangement has a first imaginary longitudinal section plane (XZ) extending both between the first measuring tube and the third measuring tube, and between the second measuring tube and the fourth measuring tube, and

-- the tube arrangement has a second imaginary longitudinal section plane (YZ) extending both between the first measuring tube and the second measuring tube, and between the third measuring tube and the fourth measuring tube, said second longitudinal section plane being perpendicular to the first imaginary longitudinal section plane (XZ); and

- wherein the first coupling element ($24_1$) of the first type comprises

-- a deformation body (VK) that is box-shaped and/or formed by a frame construction featuring a large number of profile rods and/or plates, as well as
-- four connecting struts, particularly of the same length and/or at least whereby pairs have an identical, wherein of said connecting struts

--- a first connecting strut (V1), particularly in the form of a rod or plate, is connected to both the deformation body and the first measuring tube,
--- a second connecting strut (V2), particularly in the form of a rod or plate, is connected to both the deformation body and the second measuring tube,
--- a third connecting strut (V3), particularly in the form of a rod or plate, is connected to both the deformation body and the third measuring tube,
--- a fourth connecting strut (V4), particularly in the form of a rod or plate, is connected to both the deformation body and the fourth measuring tube.

2. Sensor as claimed in the previous claim,

- wherein the four connecting struts (V1, V2, V3, V4), which are particularly identical in design, are each made from a metal, particularly a stainless steel; and/or
- wherein the four connecting struts (V1, V2, V3, V4), which are particularly identical in design, are each made at least partially from a steel, particularly a stainless steel; and/or
- wherein each of the four connecting struts (V1, V2, V3, V4), which are particularly identical in design, are each connected to the corresponding measuring tube via a substance-to-substance connection, particularly hard-soldered to the corresponding measuring tube and/or welded to the corresponding measuring tube; and/or
- wherein each of the four connecting struts (V1, V2, V3, V4), which are particularly identical in design, are fixed to the deformation body (VK) via a substance-to-substance connection.

3. Sensor as claimed in one of the previous claims,

- wherein the exciter arrangement is designed in such a way that that each of the four measuring tubes ($18_1$, $18_2$, $18_3$, $18_4$) can be excited, particularly simultaneously, to produce flexural vibrations; and/or
- wherein the exciter arrangement is designed in such a way that the first measuring tube ($18_1$) and the second measuring tube ($18_2$) can be excited to produce flexural vibrations that are mirror-inverted in relation to the second imaginary longitudinal section plane (YZ), and in particular are symmetrical in relation to the second imaginary longitudinal section plane (YZ), and the third measuring tube ($18_3$) and the fourth measuring tube ($18_4$) can be excited to produce flexural vibrations that are mirror-inverted in relation to the second imaginary longitudinal section plane (YZ), and in particular are symmetrical in relation to the second imaginary longitudinal section plane (YZ); and/or
- wherein the exciter arrangement is designed in such a way that the first measuring tube ($18_1$) and the third measuring tube ($18_3$) can be excited to produce flexural vibrations that are mirror-inverted in relation to the second imaginary longitudinal section plane (YZ), and the second measuring tube ($18_2$) and the fourth measuring tube ($18_4$) can be excited to produce flexural vibrations that are mirror-inverted in relation to second imaginary longitudinal section plane (YZ); and/or wherein the tube arrangement is in mirror symmetry in relation to the first imaginary longitudinal section plane (XZ); and/or
- wherein the tube arrangement is in mirror symmetry in relation to the second imaginary longitudinal section plane (YZ); and/or
- wherein the tube arrangement is in mirror symmetry in relation to both the first imaginary longitudinal section plane (XZ) and the second imaginary longitudinal section plane (YZ); and/or
- wherein the first coupling element ($24_1$) of the first type is designed and arranged in such a way that is in mirror symmetry in relation to both the first imaginary longitudinal section plane (XZ) and the second imaginary longitudinal section plane (YZ) of the tube arrangement; and/or
- wherein each of the four measuring tubes has a bending rigidity that is determined by an elasticity module that is dependent on the material of the measuring tube concerned, and by the second moment of area that is dependent on a caliber and a wall thickness, and wherein the second measuring tube and the third measuring tube and the fourth measuring tube each has a bending rigidity, which is equal to the bending rigidity, $E_{18} \cdot J_{18}$, of the first measuring tube; and/or
- wherein each of the four measuring tubes ($18_1$, $18_2$, $18_3$, $18_4$), particularly measuring tubes that are identical in design, is at least partially V-shaped or at least partially arc-shaped.

**4.** Sensor as claimed in one of the previous claims, wherein

- the first connecting strut (V1) is connected to the deformation body via a first strut end, and is connected to the first measuring tube via a second strut end,
- the second connecting strut (V2) is connected to the deformation body via a first strut end, and is connected to the second measuring tube via a second strut end,
- the third connecting strut (V3) is connected to the deformation body via a first strut end, and is connected to the third measuring tube via a second strut end, and
- the fourth connecting strut (V4) is connected to the deformation body via a first strut end, and is connected to the fourth measuring tube via a second strut end.

**5.** Sensor as claimed in one of the previous claims, wherein the tube arrangement has an imaginary cross-sectional plane (XY) that is perpendicular in relation to both the first imaginary longitudinal section plane (XZ) and the second imaginary longitudinal section plane (YZ).

**6.** Sensor as claimed in Claim 5,

- wherein the tube arrangement is in mirror symmetry in relation to the imaginary cross-sectional plane (XY); and/or
- wherein each of the four measuring tubes each has a measuring tube vertex, defined as the largest perpendicular distance between the measuring tube and the first imaginary longitudinal section plane (XZ), and intersects the imaginary cross-sectional plane (XY) of each of the four measuring tubes at their respective measuring tube vertex.

**7.** Sensor as claimed in one of the Claims 5 to 6, wherein the deformation body has at least two longitudinal struts, particularly with an identical design and/or plate-shaped, wherein of said longitudinal struts

- a first longitudinal strut (L1), particularly at least partially straight, extends from the first connecting strut to the third connecting strut, said longitudinal strut - spaced at a distance from the second imaginary longitudinal section plane (YZ) - being arranged exclusively on a side of said longitudinal section plane (YZ) that is occupied by both the first measuring tube and the third measuring tube, and
- a second longitudinal strut (L2), particularly at least partially straight, extends from the second connecting strut to the fourth connecting strut, said longitudinal strut - spaced at a distance from the second imaginary longitudinal section plane (YZ), particularly at the same distance as the first longitudinal strut - being arranged exclusively on a side of said longitudinal section plane (YZ) that is occupied by both the second measuring tube and the fourth measuring tube.

**8.** Sensor as claimed in Claim 7,

- wherein the first longitudinal strut has a minimum bending rigidity, $E_{L1} \cdot J_{L1,min}$, which is determined by the elasticity module, $E_{L1}$, that is dependent on the material of said longitudinal strut, and on a minimum second moment of area, $J_{L1,min}$, around an imaginary main bending axis inherent to said longitudinal strut, and the second longitudinal strut has a minimal bending rigidity, $E_{L2} \cdot J_{L2,min}$, which is determined by the elasticity module, $E_{L2}$, that is dependent on the material of said longitudinal strut, and on a minimum second moment of area, $J_{L2,min}$, around an imaginary main bending axis inherent to said longitudinal strut, and
- wherein the first longitudinal strut and the second longitudinal strut are arranged in such a way that both the imaginary main bending axis of the minimum second moment of area, $J_{L1,min}$, of the first longitudinal strut and the imaginary main bending axis of the minimum second moment of area, $J_{L2,min}$, of the second longitudinal strut are each parallel to both the first longitudinal section plane (XZ) and to the second imaginary longitudinal section plane (YZ), particularly in such a way that the minimum bending rigidity, $E_{L1} \cdot J_{L1,min}$, of the first longitudinal strut is equal to the minimum bending rigidity, $E_{L2} \cdot J_{L2,min}$, of the second longitudinal strut.

9. Sensor as claimed in Claim 8,

- wherein the first longitudinal strut has a maximum bending rigidity, $E_{L1} \cdot J_{L1,max}$, which is determined by the elasticity module, $E_{L1}$, that is dependent on the material of said longitudinal strut, and on a maximum second moment of area, $J_{L1,max}$, around an imaginary main bending axis inherent to said longitudinal strut, and the second longitudinal strut has a maximum bending rigidity, $E_{L2} \cdot J_{L2,max}$, which is determined by the elasticity module, $E_{L2}$, that is dependent on the material of said longitudinal strut, and on a maximum second moment of area, $J_{L2,max}$, around an imaginary main bending axis inherent to said longitudinal strut, and
- wherein the first longitudinal strut and the second longitudinal strut are arranged in such a way that both the imaginary main bending axis of the maximum second moment of area, $J_{L1,max}$, of the first longitudinal strut and the imaginary main bending axis of the maximum second moment of area, $J_{L2,max}$, of the second longitudinal strut are each parallel to the first imaginary longitudinal section plane (XZ) and perpendicular to the second imaginary longitudinal section plane (YZ), particularly in such a way that the maximum bending rigidity, $E_{L1} \cdot J_{L1,max}$, of the first longitudinal strut is equal to the maximum bending rigidity, $E_{L2} \cdot J_{L2,max}$, of the second longitudinal strut, and/or in such a way that the first longitudinal strut intersects the first imaginary longitudinal section plane (XZ) in an imaginary manner, particularly with a straight section, particularly at an angle of 90°, and the second longitudinal strut intersects the first imaginary longitudinal section plane (XZ) in an imaginary manner, particularly with a straight section, particularly at an angle of 90°.

10. Sensor as claimed in Claim 8 or 9,

- wherein the first connecting strut has a maximum bending rigidity, $E_{V1} \cdot J_{V1,max}$, which is determined by the elasticity module, Evi, dependent on the material of said connecting strut, and on a maximum second moment of area, $J_{V1,max}$, around an imaginary main bending axis inherent to said connecting strut, the second connecting strut has a maximum bending rigidity, $E_{V2} \cdot J_{V2,max}$, which is determined by the elasticity module, $E_{V2}$, dependent on the material of said connecting strut, and on a maximum second moment of area, $J_{V2,max}$, around an imaginary main bending axis inherent to said connecting strut, the third connecting strut has a maximum bending rigidity, $E_{V3} \cdot J_{V3,max}$, which is determined by the elasticity module, $E_{V3}$, dependent on the material of said connecting strut, and on a maximum second moment of area, $J_{V3,max}$, around an imaginary main bending axis inherent to said connecting strut, the fourth connecting strut has a maximum bending rigidity, $E_{V4} \cdot J_{V4,max}$, which is determined by the elasticity module, $E_{V4}$, dependent on the material of said connecting strut, and on a maximum second moment of area, $J_{V4,max}$, around an imaginary main bending axis inherent to said connecting strut, and each of the four connecting struts are each arranged in such a way that the imaginary main bending axis of their particular maximum second moment of area runs parallel in each case to the first longitudinal section plane (XZ) and to the second imaginary longitudinal section plane (YZ), and
- wherein the maximum bending rigidity, $E_{V1} \cdot J_{V1,max}$, of the first connecting strut is greater than the minimum bending rigidity, $E_{L1} \cdot J_{L1,min}$, of the first longitudinal strut, particularly in such a way that the first coupling element satisfies the formula $(E_{V1} \, J_{V1,max}) / (E_{L1} \cdot J_{L1,min}) > 5$.

11. Sensor as claimed in one of the Claims 8 to 10, wherein the first longitudinal strut has a spring rigidity, $c_{L1}$, determined by the elasticity module, $E_{L1}$, dependent on the material of the longitudinal strut, and on its strut length, $IL_1$, as well as an area, $A_{L1}$, of a cross-sectional area coinciding with the first imaginary longitudinal section plane (XZ) for a traction or pressure force acting on said longitudinal strut and directed in a manner perpendicular to the first imaginary longitudinal section plane (XZ), and the second longitudinal strut has a spring rigidity, $c_{L2}$, determined by the elasticity module, $E_{L2}$, dependent on the material of the longitudinal strut, and on its strut length, $l_{L2}$, as well as an area, $A_{L2}$, of a cross-sectional area coinciding with the first imaginary longitudinal section plane (XZ) for a traction or pressure force acting on said longitudinal strut and directed in a manner perpendicular to the first imaginary longitudinal section plane (XZ).

12. Sensor as claimed in Claim 11, wherein the first longitudinal strut (L1) has a straight section at least in the projection onto the imaginary cross-sectional plane (XY), wherein said straight section extends, in the projection onto the cross-sectional plane (XY), with a length, $IL_1$, between the first and the third connecting strut, in a manner perpendicular to the first imaginary longitudinal section plane (XZ) - at least in the projection onto the imaginary cross-sectional plane (XY) - and is parallel, at a distance, $a_{L1}$, to the second imaginary longitudinal section plane (YZ), and the second longitudinal strut (L2) has a straight section in the projection onto the imaginary cross-sectional plane (XY), wherein said straight section extends, in the projection onto the cross-sectional plane (XY), with a length, $l_{L2}$, between the second and the fourth connecting strut, in a manner perpendicular to the first imaginary longitudinal section plane (XZ) - at least in the projection onto the imaginary cross-sectional plane (XY), and is parallel, at a distance,

$a_{L2}$, to the second imaginary longitudinal section plane (YZ), particularly in such a way that the straight section of the first longitudinal strut is at the same distance from the first imaginary longitudinal section plane (XZ) as the straight section of the second longitudinal strut, i.e. the distance, $a_{L1}$, in which the first longitudinal strut is parallel to the second imaginary longitudinal section plane (YZ) is equal to the distance, $a_{L2}$, in which the second longitudinal strut is parallel to the second imaginary longitudinal section plane (YZ), and that the straight section of the first longitudinal strut is the same length as the straight section of the second longitudinal strut, i.e. the length, $IL_1$, with which the straight section of the first longitudinal strut extends between the first and the third connecting strut is equal to the length, $I_{L2}$, with which the straight section of the second longitudinal strut extends between the first and the third connecting strut, and/or in such a way that the first longitudinal strut and the second longitudinal strut are each designed and arranged in such a way that the spring rigidity, $c_{L1}$, is proportional to the relationship $E_{L1} \cdot A_{L1} / I_{L1}$ and the spring rigidity, $c_{L2}$, is proportional to the relationship $E_{L2} \cdot A_{L2} / I_{L2}$.

13. Sensor as claimed in the previous claim,

   - wherein each of the four connecting struts (V1, V2, V3, V4) has a strut length that is defined by a minimum distance between the first respective strut end and the second respective strut end, and wherein the second connecting strut and the third and the fourth connecting strut each has a strut length that is equal, in each case, to the strut length, $I_{V1}$, of the first connecting strut, and the tube arrangement simultaneously satisfies

      -- the requirement $I_{V1} / (I_{V1} + 0.5 \cdot I_{L1}) > 0.3$
      -- and the requirement $I_{V1} / (I_{V1} + 0.5 \cdot I_{L1}) < 0.7$

14. Sensor as claimed in one of the Claims 7 to 13, wherein the deformation body comprises a first cross strut (Q1), particularly extending from the first longitudinal strut (L1) to the second longitudinal strut (L2), said cross strut particularly being at least partially straight and/or partially non-parallel to the second imaginary longitudinal section plane (YZ).

15. Sensor as claimed in Claim 14, where the deformation body comprises a second cross strut (Q2) extending from the first longitudinal strut to the second longitudinal strut, said cross strut particularly being at least partially straight and/or partially non-parallel to the second imaginary longitudinal section plane (YZ) and/or identical in design to the first cross strut,

   - wherein the second cross strut (Q2) has a maximum bending rigidity, $E_{Q2} \cdot J_{Q2,max}$, which is determined by the elasticity module, $E_{Q2}$, dependent on the material of said cross strut, and on a maximum second moment of area, $J_{Q2,max}$, around an imaginary main bending axis inherent to the longitudinal strut, and wherein said second cross strut is arranged in such a way that said imaginary main bending axis is perpendicular to the first imaginary longitudinal section plane (XZ) and is parallel to the second imaginary longitudinal section plane (YZ), and
   - wherein said second cross strut (Q2) has a minimum bending rigidity, $E_{Q2} \cdot J_{Q2,min}$, which is determined by the elasticity module, $E_{Q2}$, dependent on the material of said cross strut, and on a minimum second moment of area, $J_{Q2,min}$, around an imaginary main bending axis inherent to the longitudinal strut, and wherein said second cross strut is arranged in such a way that said imaginary main bending axis is parallel to both the first longitudinal section plane (XZ) and to the second imaginary longitudinal section plane (YZ), particularly in such a way that the imaginary main bending axis of the minimum second moment of area, $J_{Q2,min}$, of the second cross strut is situated on the second imaginary longitudinal section plane (YZ).

16. Sensor as claimed in the previous claim,

   - wherein the second cross strut (Q2) extends from the third connecting strut (V3) to the fourth connecting strut (V4); and/or
   - wherein the second cross strut has a smaller cross-section in an area in which the strut intersects in an imaginary manner the second imaginary longitudinal section plane (YZ) than in an adjacent neighboring area extending to third connecting strut, and than in an adjacent neighboring area extending to the fourth connecting strut; and/or
   - wherein the first cross strut is formed by a flat rod, particularly one made of metal, and the second cross strut is formed by a flat rod, particularly one made of metal; and/or
   - wherein the first cross strut and the second cross strut are each made from the same material and/or are each made from steel.

**17.** Sensor as claimed in one of the Claims 15 to 16, wherein the deformation body has a third longitudinal strut (L3) extending from the first cross strut to the second cross strut with a length, $l_{L3}$, straight in projection onto the imaginary cross-section plane (XY), particularly plate-shaped and/or parallel to the second imaginary longitudinal section plane (YZ) and/or at an equal distance from both the first longitudinal strut and the second longitudinal strut.

**18.** Sensor as claimed in one of the previous claims, wherein the tube arrangement further comprises a second coupling element ($24_2$) of the first type, spaced at a distance from both the first flow divider and the second flow divider, fixed on the outlet side on each of the four measuring tubes, particularly having an essentially identical design to the first coupling element ($24_1$) of the first type, said second coupling element being designed to set natural frequencies of natural modes of vibration of the tube arrangement, particularly flexural vibration modes.

**19.** Sensor as claimed in one of the previous claims, wherein the tube arrangement further comprises:

- a first coupling element ($25_1$) of the second type, particularly plate-shaped, said first coupling element being fixed on the inlet side on the first measuring tube and on the second measuring tube, for the formation of nodes on the inlet side both for vibrations, particularly flexural vibrations, of the first measuring tube, and for mirror-inverted vibrations, particularly flexural vibrations, of the second measuring tube;
- a second coupling element ($25_2$) of the second type, particularly plate-shaped and/or identical in design to the first coupling element ($25_1$) of the second type and/or parallel to the first coupling element ($25_1$) of the second type, said second coupling element being fixed on the outlet side on the first measuring tube and on the second measuring tube, for the formation of nodes on the outlet side both for vibrations, particularly flexural vibrations, of the first measuring tube, and for mirror-inverted vibrations, particularly flexural vibrations, of the second measuring tube;
- a third coupling element ($25_3$) of the second type, particularly plate-shaped and/or identical in design to the first coupling element ($25_1$) of the second type and/or parallel to the second coupling element ($25_2$) of the second type, said third coupling element being fixed on the inlet side on the third measuring tube and on the fourth measuring tube, for the formation of nodes on the inlet side both for vibrations, particularly flexural vibrations, of the third measuring tube, and for mirror-inverted vibrations, particularly flexural vibrations, of the fourth measuring tube, spaced at a distance from both the first flow divider and the second flow divider; as well as
- a fourth coupling element ($25_4$) of the second type, particularly plate-shaped and/or identical in design to the first coupling element ($25_1$) of the second type and/or parallel to the first coupling element ($25_1$) of the second type, said fourth coupling element being fixed on the outlet side on the third measuring tube and on the fourth measuring tube, for the formation of nodes on the outlet side both for vibrations, particularly flexural vibrations, of the third measuring tube, and for mirror-inverted vibrations, particularly flexural vibrations, of the fourth measuring tube, spaced at a distance from both the first flow divider and the second flow divider and also from the first coupling element.

**20.** Measuring system for measuring a density and/or a mass flow rate, particularly also a total mass flow rate totalized over a period of time, of a medium flowing at least temporarily in a pipe, particularly with a mass flow rate of more than 1000 t/h, particularly a gas, a liquid, a powder or another substance which is capable of flow, wherein said measuring system, designed particularly as an in-line measuring device and/or a compact measuring device, comprises a sensor as claimed in one of the Claims 1 to 19 and a transmitter electronics module which is electrically coupled with the sensor, particularly arranged in an electronics housing that is mechanically connected to the sensor housing, said transmitter electronics module being designed to activate the sensor, particularly the sensor's exciter arrangement, and to evaluate vibration signals delivered by the sensor.

**21.** Measuring system as claimed in Claim 20,

- wherein the transmitter electronics module generates a viscosity measured value, which represents the viscosity of the flowing medium, using electrical excitation power converted in the exciter arrangement; and/or
- wherein the transmitter electronics module generates a mass flow measured value, which represents the mass flow rate of the flowing medium, and/or a density measured value representing the density of the flowing medium using vibration signals supplied by the sensor; and/or
- wherein, during operation, the four measuring tubes, excited by the exciter arrangement, produce flexural vibrations simultaneously.

**22.** Use of a sensor as claimed in one of the Claims 1 to 19 or a measuring system as claimed in one of the Claims 20 to 21, for the measurement of a density and/or a mass flow rate, particularly also a total mass flow rate totalized over a period of time, and/or a viscosity and/or a Reynolds number of a medium flowing in a process pipe, particularly a pipe, at least temporarily at a mass flow rate of more than 1000 t/h, particularly more than 1500 t/h, particularly a gas, a liquid, a powder or another substance which is capable of flowing.

## Revendications

1. Capteur du type à vibrations destiné à la mesure d'au moins une grandeur physique d'un produit apte à s'écouler, guidé dans une conduite, notamment un gaz, un liquide, une poudre ou une autre substance apte à s'écouler, et/ou destiné à la génération de forces de Coriolis servant à la mesure d'un débit massique d'un produit apte à s'écouler, guidé dans une conduite, notamment d'un gaz, d'un liquide, d'une poudre ou d'une autre substance apte à s'écouler, lequel capteur comprend :

- un boîtier de capteur ($7_1$), à partir duquel une première extrémité de boîtier, côté entrée, est constituée d'un premier diviseur d'écoulement ($20_1$), côté entrée, comportant exactement quatre ouvertures d'écoulement ($20_{1A}$, $20_{1B}$, $20_{1C}$, $20_{1D}$) espacées les unes des autres, et une deuxième extrémité de boîtier, côté sortie, constituée d'un deuxième diviseur d'écoulement ($20_2$), côté sortie, comportant exactement quatre ouvertures d'écoulement ($20_{2A}$, $20_{2B}$, 202C, $20_{2D}$) espacées les unes des autres ;
- un agencement de tubes avec quatre tubes de mesure ($18_1$, $18_2$, $18_3$, $18_4$) coudés, formant en terme d'écoulement des chemins d'écoulement commandés en parallèle, raccordés aux diviseurs d'écoulement ($20_1$, $20_2$), notamment de conception identique et/ou parallèles par paires, lesquels tubes sont destinés à guider le produit en écoulement, parmi lesquels tubes

-- un premier tube de mesure ($18_1$) débouche avec une première extrémité de tube, côté entrée, dans une première ouverture d'écoulement ($20_{1A}$) du premier diviseur d'écoulement ($20_1$) et avec une deuxième extrémité de tube, côté sortie, dans une première ouverture d'écoulement ($20_{2A}$) du deuxième diviseur d'écoulement ($20_2$),
-- un deuxième tube de mesure ($18_2$), notamment au moins partiellement parallèle au premier tube de mesure, débouche avec une première extrémité de tube, côté entrée, dans une deuxième ouverture d'écoulement ($20_{1B}$) du premier diviseur d'écoulement ($20_1$) et avec une deuxième extrémité de tube, côté sortie, dans une deuxième ouverture d'écoulement ($20_{2B}$) du deuxième diviseur d'écoulement ($20_2$),
-- un troisième tube de mesure ($18_3$) débouche avec une première extrémité de tube, côté entrée, dans une troisième ouverture d'écoulement ($20_{1C}$) du premier diviseur d'écoulement ($20_1$) et avec une deuxième extrémité de tube, côté sortie, dans une troisième ouverture d'écoulement ($20_{2C}$) du deuxième diviseur d'écoulement ($20_2$),
-- un quatrième tube de mesure ($18_4$), notamment au moins partiellement parallèle au troisième tube de mesure, débouche avec une première extrémité de tube, côté entrée, dans une quatrième ouverture d'écoulement ($20_{1D}$) du premier diviseur d'écoulement ($20_1$) et avec une deuxième extrémité de tube, côté sortie, dans une quatrième ouverture d'écoulement ($20_{2D}$) du deuxième diviseur d'écoulement ($20_2$), et
-- un premier élément de couplage ($24_1$) de premier type, fixé sur chacun des quatre tubes de mesure et espacé à la fois du premier diviseur d'écoulement et du deuxième diviseur d'écoulement, lequel élément de couplage est destiné au réglage des fréquences propres de modes de vibration naturels de l'agencement de tubes ; ainsi que

- un circuit d'excitation électromécanique (5) destiné à la génération et/ou au maintien de vibrations de flexion de chacun des quatre tubes de mesure ($18_1$, $18_2$, $18_3$, $18_4$) ;
- capteur pour lequel les deux diviseurs de débit ($20_1$, $20_2$) sont conçus et disposés dans le capteur de telle sorte

-- qu'un premier axe de liaison imaginaire ($Z_1$) du capteur, reliant de façon imaginaire la première ouverture d'écoulement ($20_{1A}$) du premier diviseur de débit ($20_1$) avec la première ouverture d'écoulement ($20_{2A}$) du deuxième diviseur de débit ($20_2$), est parallèle à un deuxième axe de liaison imaginaire ($Z_2$) du capteur, reliant de façon imaginaire la deuxième ouverture d'écoulement ($20_{1B}$) du premier diviseur de débit ($20_1$) avec la deuxième ouverture d'écoulement ($20_{2B}$) du deuxième diviseur de débit ($20_2$), et
-- qu'un troisième axe de liaison imaginaire ($Z_3$) du capteur, reliant de façon imaginaire la troisième ouverture d'écoulement ($20_{1C}$) du premier diviseur de débit ($20_1$) avec la troisième ouverture d'écoulement ($20_{2C}$) du deuxième diviseur de débit ($20_2$), est parallèle à un quatrième axe de liaison imaginaire ($Z_4$) du capteur, reliant de façon imaginaire la quatrième ouverture d'écoulement ($20_{1D}$) du premier diviseur de débit ($20_1$) avec la quatrième ouverture d'écoulement ($20_{2B}$) du deuxième diviseur de débit ($20_2$) ;

- les tubes de mesure étant conçus et disposés de telle sorte que

-- l'agencement de tubes présente un premier plan en coupe longitudinale imaginaire (XZ) à la fois entre le premier tube de mesure et le troisième tube de mesure, et entre le deuxième tube de mesure et le quatrième tube de mesure, et

-- l'agencement de tubes présente un deuxième plan en coupe longitudinale imaginaire (YZ) à la fois entre le premier tube de mesure et le deuxième tube de mesure, et entre le troisième tube de mesure et le quatrième tube de mesure, lequel deuxième plan en coupe est perpendiculaire au premier plan en coupe longitudinale imaginaire (XZ) ; et

- pour lequel le premier élément de couplage (24$_1$) de premier type comprend

-- un corps de déformation (VK) formé au moyen d'une construction de cadre comportant un grand nombre de tiges profilées et/ou de plaques, et/ou en forme de caisson, ainsi que

-- quatre entretoises de liaison, notamment de longueur égale et au moins de conception identique par paires, entretoises parmi lesquelles

--- une première entretoise de liaison (V1), notamment en forme de tige ou de plaque, est reliée à la fois avec le corps de déformation et le premier tube de mesure,

--- une deuxième entretoise de liaison (V2), notamment en forme de tige ou de plaque, est reliée à la fois avec le corps de déformation et le deuxième tube de mesure,

--- une troisième entretoise de liaison (V3), notamment en forme de tige ou de plaque, est reliée à la fois avec le corps de déformation et le troisième tube de mesure,

--- une quatrième entretoise de liaison (V4), notamment en forme de tige ou de plaque, est reliée à la fois avec le corps de déformation et le quatrième tube de mesure.

2. Capteur selon la revendication précédente,

- pour lequel les quatre entretoises de liaison (V1, V2, V3, V4), notamment de conception identique, sont chacune en métal, notamment en acier inoxydable ; et/ou

- pour lequel les quatre entretoises de liaison (V1, V2, V3, V4), notamment de conception identique, sont chacune constituées au moins partiellement d'un acier, notamment inoxydable ; et/ou

- pour lequel chacune des quatre entretoises de liaison (V1, V2, V3, V4), notamment de conception identique, est reliée par une liaison de matière avec le tube de mesure correspondant, notamment est brasée avec le tube de mesure correspondant et/ou est soudée avec le tube de mesure correspondant ; et/ou

- pour lequel chacune des quatre entretoises de liaison (V1, V2, V3, V4), notamment de conception identique, est fixée par une liaison de matière au corps de déformation (VK).

3. Capteur selon l'une des revendications précédentes,

- pour lequel le circuit d'excitation est conçu de telle sorte que chacun des quatre tubes de mesure (18$_1$, 18$_2$, 18$_3$, 18$_4$) puisse être excité, notamment simultanément, en vibrations de flexion ; et/ou

- pour lequel le circuit d'excitation est conçu de telle sorte que le premier tube de mesure (18$_1$) et le deuxième tube de mesure (18$_2$) puissent être excités en vibrations de flexion diamétralement opposées par rapport au deuxième plan en coupe longitudinale imaginaire (YZ), notamment symétriques par rapport au deuxième plan en coupe longitudinale imaginaire (YZ), et le troisième tube de mesure (18$_3$) et le quatrième tube de mesure (18$_4$) de façon diamétralement opposée par rapport au deuxième plan en coupe longitudinale imaginaire (YZ), notamment symétriques par rapport au deuxième plan en coupe longitudinale imaginaire (YZ) ; et/ou

- pour lequel le circuit d'excitation est conçu de telle sorte que le premier tube de mesure (18$_1$) et le troisième tube de mesure (18$_3$) puissent être excités en vibrations de flexion diamétralement opposées par rapport au deuxième plan en coupe longitudinale imaginaire (YZ), et le deuxième tube de mesure (18$_2$) et le quatrième tube de mesure (18$_4$) de façon diamétralement opposée par rapport au deuxième plan en coupe longitudinale imaginaire (YZ) ; et/ou

- pour lequel l'agencement de tubes est en symétrie miroir par rapport au premier plan en coupe longitudinale imaginaire (XZ) ; et/ou

- pour lequel l'agencement de tubes est en symétrie miroir par rapport au deuxième plan en coupe longitudinale imaginaire (YZ) ; et/ou

- pour lequel l'agencement de tubes est en symétrie miroir à la fois par rapport au premier plan en coupe longitudinale imaginaire (XZ) et au deuxième plan en coupe longitudinale imaginaire (YZ) ; et/ou

- pour lequel le premier élément de couplage ($24_1$) de premier type est conçu et disposé de telle sorte à être en symétrie miroir à la fois par rapport au premier plan en coupe longitudinale imaginaire (XZ) et au deuxième plan en coupe longitudinale imaginaire (YZ) de l'agencement de tubes ; et/ou

- pour lequel chacun des quatre tubes de mesure présente une rigidité à la flexion déterminée par le module d'élasticité dépendant d'un matériau du tube de mesure concerné, ainsi que par le moment d'inertie dépendant d'un calibre et d'une épaisseur de paroi, et pour lequel à la fois le deuxième tube de mesure et le troisième tube de mesure et le quatrième tube de mesure présentent chacun une rigidité à la flexion, qui est respectivement égale à la rigidité à la flexion, $E_{18} \cdot J_{18}$, du premier tube de mesure ; et/ou

- pour lequel chacun des quatre tubes de mesure ($18_1$, $18_2$, $18_3$, $18_4$), notamment de conception identique, est au moins partiellement en forme de V ou au moins partiellement en force d'arc de cercle.

4.  Capteur selon l'une des revendications précédentes, pour lequel

    - la première entretoise de liaison (V1) est reliée via une première extrémité d'entretoise avec le corps de déformation et via une deuxième extrémité d'entretoise avec le premier tube de mesure,
    - la deuxième entretoise de liaison (V2) est reliée via une première extrémité d'entretoise avec le corps de déformation et via une deuxième extrémité d'entretoise avec le deuxième tube de mesure,
    - la troisième entretoise de liaison (V3) est reliée via une première extrémité d'entretoise avec le corps de déformation et via une deuxième extrémité d'entretoise avec le troisième tube de mesure,
    - la quatrième entretoise de liaison (V4) est reliée via une première extrémité d'entretoise avec le corps de déformation et via une deuxième extrémité d'entretoise avec le quatrième tube de mesure,

5.  Capteur selon l'une des revendications précédentes, pour lequel l'agencement de tubes présente un plan en coupe transversal imaginaire (XY) perpendiculaire à la fois par rapport au premier plan en coupe longitudinale imaginaire (XZ) et au deuxième plan en coupe longitudinale imaginaire (YZ).

6.  Capteur selon la revendication 5,

    - pour lequel l'agencement de tubes est en symétrie miroir par rapport au plan en coupe transversale imaginaire (XY) ; et/ou
    - pour lequel chacun des quatre tubes de mesure présente un sommet de tube de mesure, défini comme distance perpendiculaire la plus grande du tube de mesure respectif par rapport au premier plan en coupe longitudinale imaginaire (XZ), et coupe le plan en coupe transversale imaginaire (XY) de chacun des quatre tubes de mesure en son sommet de tube de mesure respectif.

7.  Capteur selon l'une des revendications 5 à 6, pour lequel le corps de déformation comprend au moins deux entretoises longitudinales, notamment de conception identique et/ou en forme de plaques, entretoises parmi lesquelles

    - une première entretoise longitudinale (L1), notamment au moins partiellement droite, s'étend de la première entretoise de liaison à la troisième entretoise de liaison, laquelle entretoise longitudinale - espacée du deuxième plan en coupe longitudinale imaginaire (YZ) - exclusivement sur un côté du même plan en coupe longitudinale imaginaire (YZ) occupé à la fois par le premier tube de mesure et le troisième tube de mesure, et
    - une deuxième entretoise longitudinale (L2), notamment au moins partiellement droite, s'étend de la deuxième entretoise de liaison à la quatrième entretoise de liaison, laquelle entretoise longitudinale est disposée - espacée du deuxième plan en coupe longitudinale imaginaire (YZ) - exclusivement sur un côté du même plan en coupe longitudinale imaginaire (YZ) occupé à la fois par le deuxième tube de mesure et le quatrième tube de mesure.

8.  Capteur selon la revendication 7,

    - pour lequel la première entretoise longitudinale présente une rigidité à la flexion minimale, $E_{L1} \cdot J_{L1,min}$, déterminée par le module d'élasticité, $E_{L1}$, dépendant du matériau de l'entretoise longitudinale, tout comme d'un moment d'inertie minimal, $J_{L1,min}$, autour d'un axe principal de flexion imaginaire immanent à l'entretoise longitudinale, et la deuxième entretoise longitudinale présente une rigidité à la flexion minimale, $E_{L2} \cdot J_{L2,min}$, déterminée par le module d'élasticité, $E_{L2}$, dépendant du matériau de l'entretoise de liaison, tout comme d'un moment d'inertie minimal, $J_{L2,min}$, autour d'un axe principal de flexion imaginaire immanent à l'entretoise longitudinale, et
    - pour lequel la première entretoise longitudinale et la deuxième entretoise longitudinale sont disposées de telle sorte qu'à la fois l'axe principal de flexion imaginaire du moment d'inertie minimal, $J_{L1,min}$, de la première entretoise longitudinale et l'axe principal de flexion imaginaire du moment d'inertie minimal, $J_{L2,min}$, de la deuxième entretoise longitudinale sont parallèles à la fois au premier plan en coupe longitudinale imaginaire (XZ) et au deuxième plan en coupe longitudinale imaginaire (YZ), notamment de telle sorte que la rigidité à la flexion minimale, $E_{L1} \cdot J_{L1,min}$, de la première entretoise longitudinale soit égale à la rigidité à la flexion minimale, $E_{L2} \cdot J_{L2,min}$, de la deuxième entretoise longitudinale.

**9.** Capteur selon la revendication précédente 8,

- pour lequel la première entretoise longitudinale présente une rigidité à la flexion maximale, $E_{L1} \cdot J_{L1,max}$, déterminée par le module d'élasticité, $E_{L1}$, dépendant du matériau de l'entretoise longitudinale, tout comme d'un moment d'inertie maximal, $J_{L1,max}$, autour d'un axe principal de flexion imaginaire immanent à l'entretoise longitudinale, et la deuxième entretoise longitudinale présente une rigidité à la flexion maximale, $E_{L2} \cdot J_{L2,max}$, déterminée par le module d'élasticité, $E_{L2}$, dépendant du matériau de l'entretoise de liaison, tout comme d'un moment d'inertie maximal, $J_{L2,max}$, autour d'un axe principal de flexion imaginaire immanent à l'entretoise longitudinale, et
- pour lequel la première entretoise longitudinale et la deuxième entretoise longitudinale sont disposées de telle sorte qu'à la fois l'axe principal de flexion imaginaire du moment d'inertie maximal, $J_{L1,max}$, de la première entretoise longitudinale et l'axe principal de flexion imaginaire du moment d'inertie maximal, $J_{L2,max}$, de la deuxième entretoise longitudinale sont respectivement parallèles au premier plan en coupe longitudinale imaginaire (XZ) et perpendiculaires au deuxième plan en coupe longitudinale imaginaire (YZ), notamment de telle sorte que la rigidité à la flexion maximale, $E_{L1} \cdot J_{L1,max}$, de la première entretoise longitudinale soit égale à la rigidité à la flexion maximale, $E_{L2} \cdot J_{L2,max}$, de la deuxième entretoise longitudinale, et/ou de telle sorte que la première entretoise longitudinale coupe de façon imaginaire le premier plan en coupe longitudinale imaginaire (XZ), notamment avec le tronçon droit, notamment selon un angle de 90°, et que la deuxième entretoise longitudinale coupe de façon imaginaire le premier plan en coupe longitudinale imaginaire (XZ), notamment avec le tronçon droit, notamment selon un angle de 90°.

**10.** Capteur selon la revendication 8 ou 9,

- pour lequel la première entretoise de liaison présente une rigidité à la flexion maximale, $E_{V1} \cdot J_{V1,max}$, déterminée par le module d'élasticité, $E_{V1}$, dépendant du matériau de l'entretoise de liaison, tout comme d'un moment d'inertie maximal, $J_{V1,max}$, autour d'un axe principal de flexion imaginaire immanent à l'entretoise de liaison, la deuxième entretoise de liaison présente une rigidité à la flexion maximale, $E_{V2} \cdot J_{V2,max}$, déterminée par le module d'élasticité, $E_{V2}$, dépendant du matériau de l'entretoise de liaison, tout comme d'un moment d'inertie maximal, $J_{V2,max}$, autour d'un axe principal de flexion imaginaire immanent à l'entretoise de liaison, la troisième entretoise de liaison présente une rigidité à la flexion maximale, $E_{V3} \cdot J_{V3,max}$, déterminée par le module d'élasticité, $E_{V3}$, dépendant du matériau de l'entretoise de liaison, tout comme d'un moment d'inertie maximal, $J_{V3,max}$, autour d'un axe principal de flexion imaginaire immanent à l'entretoise de liaison, la quatrième entretoise de liaison présente une rigidité à la flexion maximale, $E_{V4} \cdot J_{V4,max}$, déterminée par le module d'élasticité, $E_{V4}$, dépendant du matériau de l'entretoise de liaison, tout comme d'un moment d'inertie maximal, $J_{V4,max}$, autour d'un axe principal de flexion imaginaire immanent à l'entretoise de liaison, et chacune des quatre entretoises de liaison est disposée de telle sorte que l'axe principal de flexion imaginaire s'étend de son couple d'inertie maximal respectif parallèlement à la fois au premier plan en coupe longitudinal (XZ) et au deuxième plan en coupe longitudinal imaginaire (YZ), et
- pour lequel la rigidité à la flexion maximale, $E_{V1} \cdot J_{V1,max}$, de la première entretoise de liaison est supérieure à la rigidité à la flexion minimale, $E_{L1} \cdot J_{L1,min}$, de la première entretoise longitudinale, notamment de telle sorte que le premier élément de couplage satisfasse à la prescription $(E_{V1} \cdot J_{V1,max}) / (E_{L1} \cdot J_{L1,min}) > 5$.

**11.** Capteur selon l'une des revendications 8 à 10, pour lequel la première entretoise longitudinale présente une rigidité élastique, $C_{L1}$, déterminée par le module d'élasticité, $E_{L1}$, dépendant d'un matériau de l'entretoise longitudinale, tout comme de sa longueur d'entretoise, $l_{L1}$, ainsi que d'une aire, $A_{L1}$, d'une surface en coupe transversale coïncidant avec le premier plan en coupe longitudinale imaginaire (XZ), pour une force de traction ou de pression agissant sur l'entretoise longitudinale et dirigée perpendiculairement au premier plan en coupe longitudinale imaginaire (XZ), et la deuxième entretoise longitudinale présente une rigidité élastique, $C_{L2}$, déterminée par le module d'élasticité, $E_{L2}$, dépendant d'un matériau de l'entretoise longitudinale, tout comme de sa longueur d'entretoise, $l_{L2}$, ainsi que d'une aire, $A_{L2}$, d'une surface en coupe transversale coïncidant avec le premier plan en coupe longitudinale imaginaire (XZ), pour une force de traction ou de pression agissant sur l'entretoise longitudinale et dirigée perpendiculairement au premier plan en coupe longitudinale imaginaire (XZ).

**12.** Capteur selon la revendication 11, pour lequel la première entretoise longitudinale (L1) présente un tronçon droit au moins en projection sur le plan en coupe transversale imaginaire (XY), lequel tronçon s'étend, en projection sur le plan en coupe transversale imaginaire (XY), avec une longueur, $l_{L1}$, entre la première et la troisième entretoise de liaison, de façon perpendiculaire - au moins en projection sur le plan en coupe transversale imaginaire (XY) - par rapport au premier plan en coupe longitudinale imaginaire (XZ), et est parallèle, à une distance, $a_{L1}$, au deuxième plan en coupe longitudinale imaginaire (YZ), et la deuxième entretoise longitudinale (L2) présente un tronçon droit au moins en projection sur le plan en coupe transversale imaginaire (XY), lequel tronçon s'étend, en projection sur le plan en coupe transversale imaginaire (XY), avec une longueur, $l_{L2}$, entre la deuxième et la quatrième entretoise de liaison, de façon perpendiculaire - au moins en projection sur le plan en coupe transversale imaginaire (XY) - par rapport au premier plan en coupe longitudinale imaginaire (XZ), et est parallèle, à une distance, $a_{L2}$, au deuxième plan en coupe longitudinale imaginaire (YZ), notamment de telle sorte que le tronçon droit de la première entretoise longitudinale se trouve à la même distance du premier plan en coupe longitudinale imaginaire (XZ) que le tronçon droit de la deuxième entretoise longitudinale, c'est-à-dire que la distance, $a_{L1}$, selon laquelle la première entretoise longitudinale est parallèle au deuxième plan en coupe longitudinale imaginaire (YZ) est égale à la distance, $a_{L2}$, selon laquelle la deuxième entretoise longitudinale est parallèle au deuxième plan en coupe longitudinale imaginaire (YZ), et que le tronçon droit de la première entretoise longitudinale est de même longueur que le tronçon droit de la deuxième entretoise longitudinale, c'est-à-dire que la longueur, $l_{L1}$, avec laquelle le tronçon de la première entretoise longitudinale s'étend entre la première et la troisième entretoise de liaison, est égale à la longueur, $l_{L2}$, avec laquelle le tronçon de la deuxième entretoise longitudinale s'étend entre la première et la troisième entretoise de liaison, et/ou de telle sorte que la première entretoise longitudinale et la deuxième entretoise longitudinale sont chacune conçue et disposée de telle manière que la rigidité élastique, $c_{L1}$, se comporte proportionnellement à la relation $E_{L1} \cdot A_{L1} / l_{L1}$ et la rigidité élastique, $c_{L2}$, se comporte proportionnellement à la relation $E_{L2} \cdot A_{L2} / l_{L2}$.

**13.** Capteur selon la revendication précédente,

- pour lequel chacune des quatre entretoises de liaison (V1, V2, V3, V4) présente une longueur d'entretoise définie par une distance minimale entre sa première extrémité d'entretoise respective et sa deuxième extrémité d'entretoise respective, et pour lequel à la fois la deuxième entretoise de liaison et la troisième ainsi que la quatrième entretoise de liaison présentent chacune une longueur d'entretoise, qui est respectivement égale à la longueur d'entretoise, $l_{V1}$, de la première entretoise de liaison, et l'agencement de tubes satisfait à la fois

-- à la prescription $l_{V1} / (l_{V1} + 0{,}5 \cdot l_{L1}) > 0{,}3$
-- et à la prescription $l_{V1} / (l_{V1} + 0{,}5 \cdot l_{L1}) < 0{,}7$

**14.** Capteur selon l'une des revendications 7 à 13, pour lequel le corps de déformation comprend une première entretoise transversale (Q1) s'étendant de la première entretoise longitudinale (L1) en direction de la deuxième entretoise longitudinale (L2), laquelle entretoise transversale est notamment au moins partiellement droite et/ou partiellement non parallèle au deuxième plan en coupe longitudinal (YZ).

**15.** Capteur selon la revendication 14, pour lequel le corps de déformation comprend une deuxième entretoise transversale (Q2) s'étendant de la première entretoise longitudinale en direction de la deuxième entretoise longitudinale, laquelle entretoise transversale est notamment au moins partiellement droite et/ou partiellement non parallèle au deuxième plan en coupe longitudinal (YZ) et/ou de conception identique à la première entretoise transversale,

- laquelle deuxième entretoise transversale (Q2) présente une rigidité à la flexion maximale, $E_{Q2} \cdot J_{Q2,max}$, déterminée par le module d'élasticité, $E_{Q2}$, dépendant du matériau de l'entretoise transversale, tout comme d'un moment d'inertie maximal, $J_{Q2,max}$, autour d'un axe principal de flexion imaginaire immanent à l'entretoise longitudinale, et laquelle deuxième entretoise transversale est disposée de telle sorte que l'axe principal de flexion imaginaire est perpendiculaire au premier plan en coupe longitudinale imaginaire (XZ) et parallèle au deuxième plan en coupe longitudinal imaginaire (YZ), et
- laquelle deuxième entretoise transversale (Q2) présente une rigidité à la flexion minimale, $E_{Q2} \cdot J_{Q2,min}$, déterminée par le module d'élasticité, $E_{Q2}$, dépendant du matériau de l'entretoise transversale, tout comme d'un moment d'inertie minimal, $J_{Q2,min}$, autour d'un axe principal de flexion imaginaire immanent à l'entretoise longitudinale, et laquelle deuxième entretoise transversale est disposée de telle sorte que l'axe principal de flexion imaginaire est parallèle à la fois au premier plan en coupe longitudinale imaginaire (XZ) et au deuxième plan en coupe longitudinal imaginaire (YZ), notamment de telle sorte que l'axe principal de flexion imaginaire du moment d'inertie minimal, $J_{Q2,min}$, de la deuxième entretoise transversale se situe dans le deuxième plan en coupe longitudinal imaginaire (YZ).

**16.** Capteur selon la revendication précédente,

- pour lequel la deuxième entretoise transversale (Q2) s'étend de la troisième entretoise de liaison (V3) vers la quatrième entretoise de liaison (V4) ; et/ou
- pour lequel la deuxième entretoise transversale présente dans une zone, dans laquelle celle-ci coupe de façon imaginaire le deuxième plan en coupe longitudinal imaginaire (YZ), une section inférieure à la section d'une zone voisine adjacente, s'étendant en direction de la troisième entretoise de liaison, et à la section d'une zone voisine adjacente, s'étendant en direction de la quatrième entretoise de liaison ; et/ou
- pour lequel la première entretoise transversale est formée au moyen d'une tige plate, notamment en métal, et la deuxième entretoise transversale est formée d'une tige plate, notamment en métal ; et/ou
- pour lequel la première entretoise transversale et la deuxième entretoise transversale sont chacune constituées du même matériau et/ou chacune en acier.

**17.** Capteur selon l'une des revendications 15 à 16, pour lequel le corps de déformation comporte une troisième entretoise longitudinale (L3) s'étendant de la première entretoise transversale vers la deuxième entretoise transversale avec une longueur, $l_{L3}$, droite en projection sur le plan en coupe imaginaire (XY), notamment en forme de plaque et/ou parallèle au deuxième plan en coupe longitudinale imaginaire (YZ) et/ou à distance égale à la fois de la première entretoise longitudinale et de la deuxième entretoise longitudinale.

**18.** Capteur selon l'une des revendications précédentes, pour lequel l'agencement de tubes comprend en outre un deuxième élément de couplage ($24_2$) de premier type, espacé à la fois du premier diviseur d'écoulement et du deuxième diviseur d'écoulement, fixé côté sortie sur chacun des quatre tubes de mesure, notamment pour l'essentiel de conception identique au premier élément de couplage ($24_1$) de premier type, lequel deuxième élément de couplage est destiné au réglage de fréquences propres de modes de vibration naturels de l'agencement de tubes, notamment de modes de vibration de flexion.

**19.** Capteur selon l'une des revendications précédentes, pour lequel l'agencement de tubes comprend en outre :

- un premier élément de couplage ($25_1$) de second type, notamment en forme de plaque, lequel premier élément de couplage est fixé côté entrée sur le premier tube de mesure et sur le deuxième tube de mesure, pour la formation de noeuds de vibration côté entrée à la fois pour des vibrations, notamment des vibrations de flexion, du premier tube de mesure, et pour des vibrations diamétralement opposées, notamment des vibrations de flexion, du deuxième tube de mesure ;
- un deuxième élément de couplage ($25_2$) de second type, notamment en forme de plaque et/ou de conception identique au premier élément de couplage ($25_1$) de second type et/ou parallèle au premier élément de couplage ($25_1$) de second type, lequel deuxième élément de couplage est fixé côté sortie sur le premier tube de mesure et sur le deuxième tube de mesure, pour la formation de noeuds de vibration côté sortie à la fois pour des vibrations, notamment des vibrations de flexion, du premier tube de mesure, et pour des vibrations diamétralement opposées, notamment des vibrations de flexion, du deuxième tube de mesure ;
- un troisième élément de couplage ($25_3$) de second type, notamment en forme de plaque et/ou de conception identique au premier élément de couplage ($25_1$) de second type et/ou parallèle au deuxième élément de couplage ($25_2$) de second type, lequel troisième élément de couplage est fixé côté entrée sur le troisième tube de mesure et sur le quatrième tube de mesure, pour la formation de noeuds de vibration côté entrée à la fois pour des vibrations, notamment des vibrations de flexion, du troisième tube de mesure, et pour des vibrations diamétralement opposées, notamment des vibrations de flexion, du quatrième tube de mesure, espacé à la fois du premier diviseur d'écoulement et du deuxième diviseur d'écoulement ; ainsi que
- un quatrième élément de couplage ($25_4$) de second type, notamment en forme de plaque et/ou de conception identique au premier élément de couplage ($25_1$) de second type et/ou parallèle au premier élément de couplage ($25_1$) de second type, lequel quatrième élément de couplage est fixé côté sortie sur le troisième tube de mesure et sur le quatrième tube de mesure, pour la formation de noeuds de vibration côté sortie à la fois pour des vibrations, notamment des vibrations de flexion, du troisième tube de mesure, et pour des vibrations diamétralement opposées, notamment des vibrations de flexion, du quatrième tube de mesure, espacé à la fois du premier diviseur d'écoulement et du deuxième diviseur d'écoulement et également du premier élément de couplage.

**20.** Système de mesure destiné à mesurer une densité et/ou un débit massique, notamment également un débit massique total, totalisé pendant un intervalle de temps, d'un produit s'écoulant au moins temporairement dans une conduite, notamment avec un débit massique supérieur à 1 000 t/h, notamment un gaz, un liquide, une poudre ou une autre substance apte à s'écouler, lequel système de mesure est, en tant qu'appareil de mesure en ligne et/ou en tant qu'appareil de mesure compact, constitué d'un capteur selon l'une des revendications 1 à 19, ainsi que d'une électronique de transmetteur couplée électriquement avec le capteur, notamment disposée dans un boîtier d'électronique relié mécaniquement avec le boîtier de capteur, laquelle électronique est destinée à piloter le capteur, notamment de son circuit d'excitation, et à exploiter les signaux de vibration fournis par le capteur.

**21.** Système de mesure selon la revendication 20,

- pour lequel l'électronique de transmetteur génère, au moyen d'une puissance d'excitation électrique convertie dans le circuit d'excitation, une valeur mesurée de viscosité représentant la viscosité du produit en écoulement ; et/ou
- pour lequel l'électronique de transmetteur génère, au moyen des signaux de vibration fournis par le capteur, une valeur mesurée de débit massique représentant le débit massique du produit en écoulement ; et/ou
- pour lequel les quatre tubes de mesure, excités par le circuit d'excitation, exécutent simultanément, en fonctionnement, des vibrations de flexion.

**22.** Utilisation d'un capteur selon l'une des revendications 1 à 19 ou d'un système de mesure selon l'une des revendications 20 à 21, destiné à mesurer une densité et/ou un débit massique, notamment également un débit massique total, totalisé pendant un intervalle de temps, et/ou une viscosité et/ou un nombre de Reynolds d'un produit s'écoulant dans une conduite de process, notamment une conduite, au moins temporairement avec un débit massique supérieur à 1 000 t/h, notamment supérieur à 1 500 t/h, notamment un gaz, un liquide, une poudre ou une autre substance apte à s'écouler.

Fig. 1

Fig. 2

Fig. 3a

Fig. 3b

Fig. 4a

Fig. 4b

Fig. 4c

Fig. 5a

Fig. 5b

Fig. 6a

Fig. 6b

Fig. 7b

Fig. 7a

Fig. 8b

Fig. 8a

72

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1001254 A
- EP 553939 A
- US 20020157479 A
- US 20060150750 A
- US 20070151368 A
- US 4793191 A
- US 5370002 A
- US 5796011 A
- US 6308580 B
- US 6415668 B
- US 6711958 B
- US 6920798 B
- US 7134347 B
- US 7392709 B
- WO 03027616 A
- US 7350421 B
- EP 2010068251 W
- EP 2010068250 W
- EP 1248084 A
- US 4801897 A
- US 6311136 B
- US 4823614 A
- US 4831885 A
- US 20030070495 A
- US 6047457 A
- EP 2010058797 W
- EP 2010058799 W